# EUROPEAN PATENT APPLICATION

(11) **EP 4 759 715 A1**
(43) Date of publication of application: **17.06.2026**
(21) Application number: 24851744.3
(22) Date of filing: 01.08.2024
(51) Int. Cl.: B64D 27/24, B64D 45/00

(54) **PROPULSION SYSTEM, PROPULSION CONTROL DEVICE, AND PROPULSION CONTROL PROGRAM**

(30) Priority: 10.08.2023 JP 2023131629
(71) Applicant: DENSO CORPORATION, Kariya-city, Aichi 448-8661 (JP)
(72) Inventor: FUJII, Keita, Kariya- city Aichi 4488661 (JP); KAWAZU, Shinsuke, Kariya- city Aichi 4488661 (JP); TAKI, Hiroshi, Kariya- city Aichi 4488661 (JP)
(74) Representative: TBK
(86) International application number: PCT/JP2024/027563
(87) International publication number: WO 2025/033319

(57) **Abstract**

A propulsion system (30) includes a supply path (130) for supplying power from the battery (31) to the motor (61). On a power-supply path (131) of the supply path (130), a power-supply switch (86) is provided between the battery (31) and an inverter circuit (85). The inverter circuit (85) includes an arm switch (116, 117). When an abnormality related to the motor (61) occurs, the flight control device (40) performs a multi-cut-off process. In the multi-cut-off process, the supply path (130) is cut off by a plurality of switches, which are a power-supply switch (86) and an arm switch (116, 117). In the multi-cut-off process, after an abnormal-time current is reduced by the arm switch (116, 117), the supply path (130) is cut off by the power-supply switch (86).

## Description

### CROSS REFERENCE TO RELATED APPLICATION

The present application is based on Japanese Patent Application No. 2023-131629 filed on August 10, 2023. The entire disclosures of all of the above applications are incorporated herein by reference.

### TECHNICAL FIELD

The disclosure in the present specification relates to a propulsion system, a propulsion control device, and a propulsion control program.

### BACKGROUND ART

Patent Literature 1 describes a rotary electric machine apparatus mounted on a vehicle. The rotary electric machine apparatus includes a motor, an inverter, and a control device. The motor is provided with a circuit breaker capable of cutting off the neutral point of the motor. When an abnormality occurs in the rotary electric machine apparatus, the control device cuts off a current flowing during an abnormal time (hereinafter referred to as an abnormal-time current) to the neutral point of the motor by a circuit breaker.

### PRIOR ART LITERATURE

### PATENT LITERATURE

Patent Literature 1: JP2021-114874A

### SUMMARY OF THE INVENTION

However, in Patent Literature 1 described above, there is a concern that the circuit breaker cannot cut off the abnormal-time current due to, for example, generation of arc discharge in the circuit breaker, when the abnormal-time current becomes excessively large.

One object of the present disclosure is to provide a propulsion system, a propulsion control device, and a propulsion control program capable of improving safety of a flight vehicle.

A plurality of aspects disclosed in the present specification employ different technical means to achieve the respective objectives. The reference numerals within parentheses in the claims and in this section are examples indicating correspondence with specific means in an embodiment to be described later as one aspect, and do not limit the technical scope.

In order to achieve the above object, a first propulsion system as disclosed comprises: a motor configured to be driven to propel the flight vehicle by power supplied from a power supply unit; a power conversion unit including a conversion switch provided on a supply path, which is to supply electric power from the power supply unit to the motor, the power conversion unit configured to drive the conversion switch to convert electric power supplied from the power supply unit to the motor; a power-supply switch provided on the supply path between the power supply unit and the power conversion unit and configured to cut off the supply path; and an abnormality cut-off unit configured to, when an abnormality related to the motor occurs, cause at least one of the conversion switch and the power-supply switch to cut off the supply path in a mode corresponding to a state of the abnormality.

According to the first propulsion system, when an abnormality related to the motor occurs, the supply path is cut off by at least one of the conversion switch and the power-supply switch in a mode corresponding to the state of the abnormality. In this configuration, by driving the conversion switch so as to reduce the abnormal-time current flowing through the supply path, the abnormal-time current in the reduced state can be cut off by the power-supply switch. This makes it possible to suppress deterioration in the safety of the flight vehicle that would otherwise occur when the power-supply switch cannot cut off the abnormal-time current due to the abnormal-time current being excessively large or the like. Therefore, the safety of the flight vehicle can be improved.

A second propulsion system as disclosed is configured to propel a flight vehicle. The propulsion system comprises: a motor configured to be driven to propel the flight vehicle by power supplied from a power supply unit; a power conversion unit including a conversion switch provided on a supply path, which is to supply electric power from the power supply unit to the motor, the power conversion unit configured to drive the conversion switch to convert electric power supplied from the power supply unit to the motor; and a power-supply switch provided on the supply path between the power supply unit and the power conversion unit and configured to cut off the supply path.

According to the second propulsion system, the conversion switch and the power-supply switch are provided on the supply path. In this configuration, when an abnormality related to the motor occurs, the supply path can be cut off by at least one of the conversion switch and the power-supply switch in a mode corresponding to the state of the abnormality. Therefore, similarly to the first propulsion system, the safety of the flight vehicle can be improved.

A propulsion control device as disclosed is configured to control a propulsion system. The propulsion system includes a motor configured to be driven to propel a flight vehicle by power supplied from a power supply unit, a power conversion unit including a conversion switch provided on a supply path, which is to supply electric power from the power supply unit to the motor, the power conversion unit configured to drive the conversion switch to convert electric power supplied from the power supply unit to the motor, and a power-supply switch provided on the supply path between the power supply unit and the power conversion unit and configured to cut off the supply path. The propulsion control device comprises: an abnormality determination unit configured to determine whether an abnormality related to the motor occurs; and an abnormality cut-off unit configured to, when an abnormality related to the motor occurs, cause at least one of the conversion switch and the power-supply switch to cut off the supply path in a mode corresponding to a state of the abnormality.

According to the propulsion control device, the safety of the flight vehicle can be improved similarly to the first propulsion system.

A propulsion control program as disclosed is for causing at least one processor to execute control of a propulsion system. The propulsion system includes a motor configured to be driven to propel a flight vehicle by power supplied from a power supply unit, a power conversion unit including a conversion switch provided on a supply path, which is to supply electric power from the power supply unit to the motor, the power conversion unit configured to drive the conversion switch to convert electric power supplied from the power supply unit to the motor, and a power-supply switch provided on the supply path between the power supply unit and the power conversion unit and configured to cut off the supply path. The propulsion control program is configured to cause the at least one processor to execute: a process to determine whether an abnormality related to the motor occurs; and a process to, when an abnormality related to the motor occurs, cause at least one of the conversion switch and the power-supply switch to cut off the supply path in a mode corresponding to a state of the abnormality.

According to the propulsion control program, the safety of the flight vehicle can be improved similarly to the first propulsion system.

### BRIEF DESCRIPTION OF DRAWINGS

FIG. 1 is a diagram illustrating a configuration of an electric vertical take-off and landing aircraft (eVTOL) in a first embodiment.
FIG. 2 is a block diagram illustrating an electrical configuration of a propulsion system.
FIG. 3 is a diagram illustrating a circuit configuration of an inverter device.
FIG. 4 is a diagram illustrating an electrical connection circuit between a plurality of electric propulsion units (EPUs) and a battery.
FIG. 5 is a flowchart illustrating a procedure for a flight control process.
FIG. 6 is a flowchart illustrating a procedure for a power-supply cut-off process.
FIG. 7 is a flowchart illustrating a procedure for a multiple-abnormality process.
FIG. 8 is a flowchart illustrating a procedure for a ground inspection process.
FIG. 9 is a flowchart illustrating a procedure for a discharge inspection process.
FIG. 10 is a flowchart illustrating a procedure for a power-supply cut-off process in a second embodiment.
FIG. 11 is a flowchart illustrating a procedure for a power-supply cut-off process in a third embodiment.
FIG. 12 is a flowchart illustrating a procedure for a power-supply cut-off process in a fourth embodiment.
FIG. 13 is a flowchart illustrating a procedure for a multiple-abnormality process in a fifth embodiment.
FIG. 14 is a flowchart illustrating a procedure for a multiple-abnormality process in a sixth embodiment.
FIG. 15 is a diagram illustrating a circuit configuration of an inverter device in a seventh embodiment.
FIG. 16 is a flowchart illustrating a procedure for a flight control process.
FIG. 17 is a flowchart illustrating a procedure for a multi-cut-off process.
FIG. 18 is a flowchart illustrating a procedure for an alternating-current (AC) cut-off process.
FIG. 19 is a flowchart illustrating a procedure for a ground inspection process.
FIG. 20 is a flowchart illustrating a procedure for a discharge inspection process.
FIG. 21 is a flowchart illustrating a procedure for an AC cut-off process in an eighth embodiment.
FIG. 22 is a flowchart illustrating a procedure for an AC cut-off process in a ninth embodiment.
FIG. 23 is a block diagram illustrating an electrical configuration of a propulsion system in a tenth embodiment.
FIG. 24 is a flowchart illustrating a procedure for a flight control process.
FIG. 25 is a flowchart illustrating a procedure for a multi-inverter process.
FIG. 26 is a flowchart illustrating a procedure for a flight control process in an eleventh embodiment.
FIG. 27 is a flowchart illustrating a procedure for a cut-off setting process.
FIG. 28 is a flowchart illustrating a procedure for a cut-off setting process in a twelfth embodiment.
FIG. 29 is a flowchart illustrating a procedure for a flight control process in the thirteenth embodiment.
FIG. 30 is a flowchart illustrating a procedure for a short-circuit handling process.
FIG. 31 is a diagram for describing the flow of regenerative current.
FIG. 32 is a flowchart illustrating a procedure for a short-circuit handling process in a fourteenth embodiment.
FIG. 33 is a block diagram illustrating an electrical configuration of a propulsion system in a fifteenth embodiment.
FIG. 34 is a flowchart illustrating a procedure for a flight control process.
FIG. 35 is a flowchart illustrating a procedure for a propeller stop process.
FIG. 36 is a block diagram illustrating an electrical configuration of a propulsion system in a sixteenth embodiment.
FIG. 37 is a flowchart illustrating a procedure for a flight control process.
FIG. 38 is a flowchart illustrating a procedure for a propeller rotation continuation process.
FIG. 39 is a block diagram illustrating an electrical configuration of a propulsion system in a seventeenth embodiment.
FIG. 40 is a block diagram illustrating an electrical configuration of a propulsion system in Modification 17-1.

### DESCRIPTION OF EMBODIMENTS

Hereinafter, a plurality of embodiments for carrying out the present disclosure will be described with reference to the drawings. In each embodiment, parts corresponding to an item described in the prior embodiment are denoted by the same reference numerals, and redundant description may be omitted. When only a part of the configuration is described in each embodiment, another embodiment described previously may be applied to the other parts of the configuration. Not only combinations of parts that are specifically indicated as being combinable in each embodiment are possible, but also partial combinations of embodiments that are not explicitly indicated as being combinable are possible, provided that no particular obstacle to the combination arises.

### <First Embodiment>

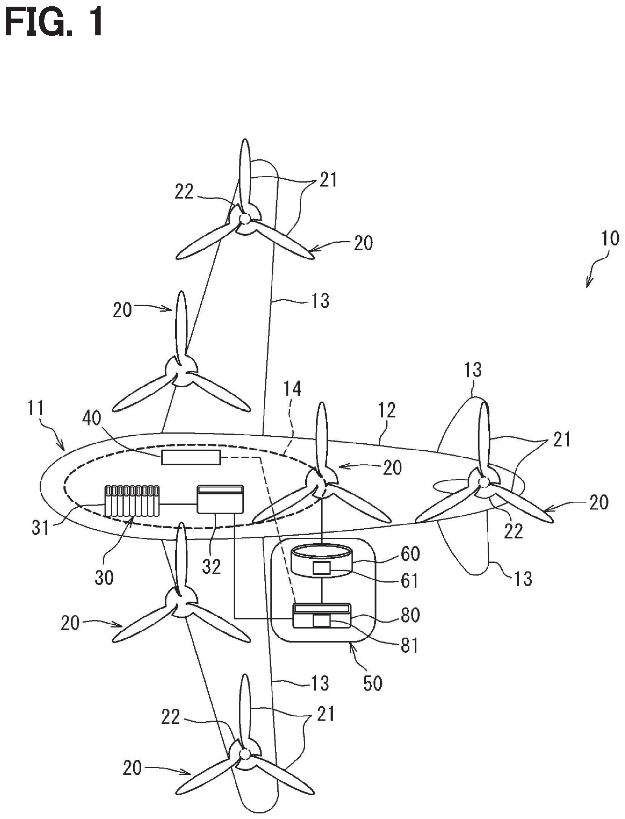

A propulsion system 30 illustrated in FIG. 1 is mounted on an eVTOL 10. The eVTOL 10 is an electric vertical take-off and landing aircraft. The electric vertical take-off and landing aircraft is an electrically powered vertical take-off and landing aircraft, and can perform vertical take-off and landing. The term eVTOL is an abbreviation for electric vertical take-off and landing aircraft. The eVTOL 10 is an electrically powered flight vehicle that flies in the atmosphere, and may be referred to as an electric flight vehicle. The eVTOL 10 is also an electrically powered aircraft and may be referred to as an electric aircraft. The eVTOL 10 is a manned flight vehicle on which an occupant is on board. The occupants of the eVTOL 10 include a pilot as an operator or a driver. The propulsion system 30 is a system that drives to propel the eVTOL 10. The propulsion system 30 may be referred to as a flight system.

The eVTOL 10 includes an airframe 11 and a propeller 20. The airframe 11 includes an airframe body 12 and wings 13. The airframe body 12 is the fuselage of the airframe 11, and has, for example, a shape extending back and forth. The airframe body 12 includes an occupant compartment 14 on which an occupant is on board. The plurality of wings 13 extend from the airframe body 12 and are provided on the airframe body 12. The wings 13 are fixed wings. The plurality of wings 13 include a main wing, a tail wing, and the like.

The eVTOL 10 includes an aircraft compartment. The aircraft compartment is provided inside the eVTOL 10. For example, the aircraft compartment is an internal space of the airframe body 12, and is formed by the airframe body 12. Examples of aircraft compartments include an occupant compartment 14 and a cargo compartment. Examples of the occupant compartment 14 include a passenger compartment and a pilot compartment. The occupant compartment 14 is provided with a seat on which an occupant sits. The occupant compartment 14 may have no occupant on board and may accommodate cargo.

A plurality of propellers 20 are provided on the airframe 11. The eVTOL 10 is a multi-copter including at least three propellers 20. For example, at least six propellers 20 are provided on the airframe 11. The propeller 20 is provided on each of the airframe body 12 and the wings 13. The propeller 20 rotates about a propeller axis. The propeller axis is, for example, the center line of the propeller 20. The propeller 20 can generate thrust or lift in the eVTOL 10. The propeller 20 may be referred to as a rotor or a rotary wing.

In the eVTOL 10, since a plurality of propellers 20 are provided, the airframe balance can be easily maintained. In the eVTOL 10, even when the propeller output is unintentionally lowered by one propeller 20, it is possible to continue the flight by the remaining propellers 20. Examples of the propeller output include the rotational speed and torque of the propeller 20.

The propeller 20 includes a blade, a boss, and a propeller shaft. A plurality of blades are arranged in the circumferential direction of the propeller axis. The boss couples the plurality of blades. The propeller shaft is a rotation axis of the propeller 20 and extends from the boss along the propeller axis.

Flight modes of the eVTOL 10 include vertical take-off, vertical landing, cruise, hovering, and the like. The flight mode may be referred to as a flight form. In the vertical take-off, the eVTOL 10 can take off without sliding. In the vertical take-off, the eVTOL 10 may ascend vertically or obliquely upward. In the vertical landing, the eVTOL 10 can land without sliding. In the vertical landing, the eVTOL 10 may descend vertically or may descend obliquely downward.

The cruise may be referred to as horizontal flight. In the cruise, the eVTOL 10 may fly horizontally without moving vertically, or may fly horizontally while moving vertically. Hovering may be referred to as stationary flight. In the hovering, the eVTOL 10 may fly as if the eVTOL 10 stopped at a predetermined position in the air, and may deviate vertically or horizontally from the predetermined position.

Further, the flight mode of the eVTOL 10 includes lifting. In the lifting, the eVTOL 10 moves vertically. The eVTOL 10 may ascend obliquely upward or may descend obliquely downward for the lifting. The eVTOL 10 takes off vertically by upward lifting. The eVTOL 10 lands vertically by downward lifting.

The eVTOL 10 is a tilt-rotor aircraft. In the eVTOL 10, the tilt angle of the propeller 20 can be adjusted. In the eVTOL 10, one propeller 20 can function as both a lifting propeller and a cruise propeller. For example, when the eVTOL 10 is to be lifted, the tilt angle is adjusted so that the propeller 20 functions as a lifting rotor. When the eVTOL 10 cruises, the tilt angle is adjusted so that the propeller 20 functions as a cruise rotor. The eVTOL 10 may not be a tilt-rotor aircraft. For example, the eVTOL 10 may include a lifting propeller 20 and a cruise propeller 20 separately.

The eVTOL 10 includes a battery 31, a distributor 32, a communication unit 34, a flight control device 40, and an EPU 50. The battery 31, the distributor 32, the communication unit 34, the flight control device 40, and the EPU 50 are included in the propulsion system 30. The propulsion system 30 may include at least the flight control device 40 and the EPU 50. The flight control device 40 may be referred to as a flight controller.

The battery 31 is connected to the EPU 50 so as to allow energization. The battery 31 is a power supply unit that supplies power to the EPU 50 and corresponds to a power supply unit. The battery 31 is a direct-current (DC) voltage source that applies a DC voltage to the EPU 50. The battery 31 includes a chargeable and dischargeable secondary battery. Examples of the secondary battery include a lithium-ion battery and a nickel-hydrogen battery. The battery 31 can store power and corresponds to a power storage device. As the power supply unit, a fuel cell, a generator, or the like may be used in addition to or instead of the battery 31.

The distributor 32 is electrically connected to the battery 31 and the plurality of EPUs 50. The distributor 32 distributes the power from the battery 31 to the plurality of EPUs 50. The battery 31 is electrically connected to the plurality of EPUs 50 via the distributor 32. The battery 31 provides power to the EPU 50 via the distributor 32.

The communication unit 34 is a communication device capable of performing wireless communication with an external device. The external device is a device located away from the eVTOL 10. Examples of the external device include a communication device provided in an external facility on the ground and a communication device provided in another flight vehicle. Examples of the external facility include a control center and a management center. The communication unit 34 is capable of communicating with the flight control device 40. The communication unit 34 is connected to the flight control device 40 so as to allow wired communication. The communication unit 34 may be capable of wirelessly communicating with the flight control device 40.

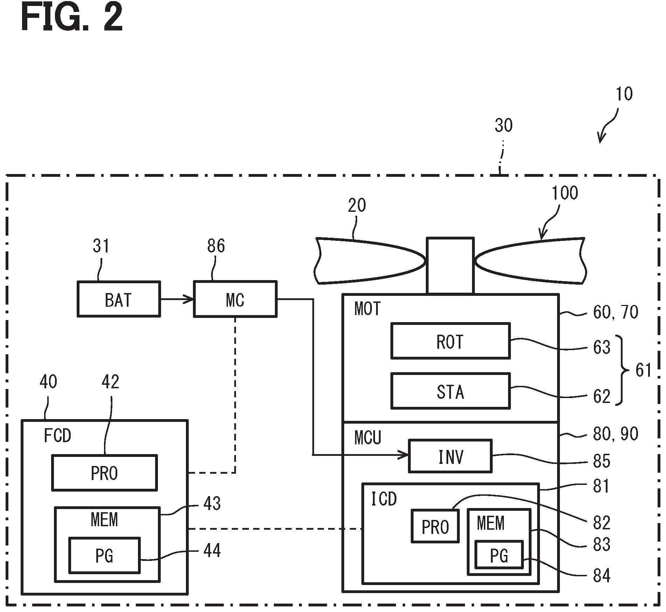

In FIGS. 1 and 2, the EPU 50 is a device that drives the propeller 20 to drive and rotate, and corresponds to a drive device. The term EPU is an abbreviation for electric propulsion unit. The EPU 50 may be referred to as an electric drive device and an electric drive system. The EPU 50 is individually provided for each of the plurality of propellers 20. The EPU 50 is aligned with the propeller 20 along the propeller axis. All of the plurality of EPUs 50 are fixed to the airframe 11. The EPU 50 rotatably supports the propeller 20. The EPU 50 is connected to the propeller 20. The propeller 20 is fixed to the airframe 11 via the EPU 50.

As illustrated in FIG. 2, the eVTOL 10 includes a propulsion device 100. The propulsion device 100 includes the propeller 20 and the EPU 50. The propulsion device 100 is a device for propelling the eVTOL 10. The propulsion device 100 rotates the propeller 20 to cause the eVTOL 10 to fly. The eVTOL 10 is also a movable body that moves by the propulsion device 100. A plurality of propulsion devices 100 are provided in the eVTOL 10. One propulsion device 100 includes one propeller 20 and one EPU 50 for driving the propeller 20. Of the propeller 20 and the EPU 50, only the EPU 50 may be referred to as the propulsion device 100.

The EPU 50 includes a motor device 60 and an inverter device 80. The motor device 60 includes a motor 61 and a motor housing 70. The motor housing 70 is a housing and houses the motor 61. The motor 61 is a multi-phase AC motor. The motor 61 is a multi-phase AC-type rotary electric machine. The motor 61 is a flight drive source of the eVTOL 10 and functions as an electric motor. The motor 61 is a motor generator. The motor 61 functions as a generator during regeneration. As the motor 61, for example, a brushless motor is used.

The motor 61 drives and rotates the propeller 20 to enable the eVTOL 10 to fly. The motor 61 is a flight motor for causing the eVTOL 10 to fly. The motor 61 drives and rotates the propeller 20 by performing motoring using battery power. The battery power is power supplied from the battery 31 to the motor 61. In the present embodiment, the operation in which the motor 61 performs motoring may be simply referred to as driving of the motor 61. The motor 61 generates regenerative power by, for example, rotating the propeller 20 by an external force such as flight wind. The regenerative power is power generated by regeneration of the motor 61.

The motor 61 includes a motor stator 62 and a motor rotor 63. The motor 61 includes the motor stator 62. The motor stator 62 is a stator and is fixed to the motor housing 70. The motor rotor 63 rotates relative to the motor stator 62. Rotation of the motor rotor 63 may be referred to as rotation of the motor 61. The motor 61 is, for example, an axial-gap type motor. In the motor 61, the motor stator 62 and the motor rotor 63 are arranged in the axial direction of the motor 61. The motor 61 includes a motor shaft that rotates together with the motor rotor 63. The motor shaft is rotatably supported by the motor housing 70 and the like.

The motor 61 is driven by power supplied to the motor stator 62. The motor stator 62 includes a stator coil 62a and a coil neutral point 62b. The stator coil 62a is a coil provided in each of a plurality of phases. The stator coil 62a forms an armature. The coil neutral point 62b is the neutral point of the stator coils 62a in the plurality of phases. The coil neutral point 62b connects the stator coil 62a in each of the plurality of phases. When power is supplied to the motor stator 62, a current flows through the stator coil 62a, whereby the motor rotor 63 rotates. The driving of the motor 61 so that the motor rotor 63 rotates may be referred to as rotational drive of the motor 61.

The inverter device 80 drives the motor device 60 by supplying power to the motor device 60. The inverter device 80 is a drive unit for driving the motor 61 and corresponds to a motor drive unit. The inverter device 80 includes an inverter circuit 85 and an inverter housing 90. The inverter circuit 85 converts supplied power supplied from the battery 31 to the motor 61. DC power is supplied from the battery 31 to the inverter circuit 85. The inverter circuit 85 converts DC power into AC power and supplies the AC power to the motor 61. The inverter circuit 85 may be referred to as an inverter or a power conversion unit. The inverter circuit 85 performs power conversion for each of the plurality of phases. The motor 61 is driven in accordance with a voltage or a current supplied from the inverter circuit 85. The inverter housing 90 is a housing, and houses the inverter circuit 85 and an inverter control unit 81 to be described later.

The inverter device 80 includes the inverter control unit 81. The inverter control unit 81 performs motor control via the inverter circuit 85. The motor control is control for driving the motor 61. The inverter control unit 81 also performs propulsion control. The propulsion control is control for driving the propulsion device 100. The propulsion control includes motor control. The propulsion control is also control for controlling the EPU 50 and may be referred to as EPU control.

The inverter control unit 81 includes, for example, an ECU. The term ECU is an abbreviation for electronic control unit. The inverter control unit 81 includes a processor 82, a memory 83, and a program 84. The inverter control unit 81 is mainly configured by a computer. The computer includes the processor 82, the memory 83, an input/output interface, a bus that connects these components, and the like. The memory 83 stores the program 84. The program 84 is a program for performing propulsion control. The program 84 corresponds to a propulsion control program.

The processor 82 is hardware for arithmetic processing coupled to the memory 83. The processor 82 executes various types of processing by accessing the memory 83. The memory 83 is a storage medium storing a control program and the like. For example, the memory 83 is a non-transitory tangible storage medium that non-transiently stores computer-readable programs and data. The non-transitory tangible storage medium is implemented as a semiconductor memory, a magnetic disk, or the like. The program 84 includes computer-readable instructions that cause the processor 82 to perform various functions. The processor 82 is a processing unit that executes predetermined processing by executing an instruction included in the program 84.

The inverter control unit 81 performs motor control in accordance with a required output. The required output is a motor output required for the inverter control unit 81. Examples of the required output include required torque required with respect to output torque. The required output is included in a command signal or the like output from the flight control device 40 to the inverter control unit 81. The inverter control unit 81 adjusts the motor output in accordance with the required output. The required output and the required torque may be referred to as a target output and target torque. Torque, current, voltage, motor rotational speed, or the like may be used as the motor output.

The inverter control unit 81 performs motor control using a command signal from the flight control device 40, detection signals from various sensors, and the like. The various sensors are communicably connected to the inverter control unit 81. Examples of the various sensors include a motor sensor, a battery sensor, and an inverter sensor. The motor sensor is a temperature sensor or the like provided in the motor device 60. The battery sensor is a temperature sensor or the like provided in the battery 31. The inverter sensor is a temperature sensor or the like provided in the inverter device 80.

The flight control device 40 is communicably connected to the inverter control unit 81. The flight control device 40 and the inverter control unit 81 may be capable of wireless communication. The flight control device 40 performs supervisory control for overseeing the driving of the plurality of propulsion devices 100. The supervisory control oversees the propulsion control performed by each of the plurality of inverter control units 81. The flight control device 40 performs flight control. The flight control is control for causing the eVTOL 10 to fly. The flight control device 40 controls the propulsion system 30 and the EPU 50 as flight control. The flight control is control for propelling the eVTOL 10 and may be referred to as propulsion control. The flight control device 40 corresponds to a propulsion control device.

The flight control device 40 includes, for example, an ECU. The flight control device 40 includes a processor 42, a memory 43, and a program 44. The flight control device 40 is mainly configured by a computer. The computer includes the processor 42, the memory 43, the input/output interface, a bus that connects these components, and the like. The memory 43 stores the program 44. The program 44 is a program for performing flight control.

The processor 42 is hardware for arithmetic processing coupled to the memory 43. The processor 42 executes various processes by accessing the memory 43. The memory 43 is a storage medium storing a control program and the like. For example, the memory 43 is a non-transitory tangible storage medium that non-transiently stores computer-readable programs and data. The program 44 includes computer-readable instructions that cause the processor 42 to perform various functions. The processor 42 is a processing unit that executes predetermined processing by executing an instruction included in the program 44.

The flight control device 40 outputs information necessary for propulsion control to the inverter control unit 81. The flight control device 40 is a higher-level ECU for the inverter control unit 81. The flight control device 40 individually controls the plurality of propulsion devices 100 in accordance with a flight mode of the eVTOL 10 and the like. The flight control device 40 is capable of individually adjusting the output of the propulsion device 100 for each propulsion device 100. For example, the flight control device 40 outputs a required output to each of the plurality of propulsion devices 100. The required output is an output required for the propulsion device 100. Examples of the required output include required torque required for the motor 61. Torque, current, voltage, motor rotational speed, and the like may be used as the required output.

The flight control device 40 performs flight control in accordance with a flight state of the eVTOL 10, detection signals from various sensors, and the like. Examples of the flight state of the eVTOL 10 include a flight mode and a flight attitude of the eVTOL 10. The various sensors are communicably connected to the flight control device 40.

In FIG. 2, the motor device 60 is illustrated as MOT, the motor stator 62 as STA, and the motor rotor 63 as ROT. The inverter device 80 is illustrated as MCU, the inverter circuit 85 as INV, a power-supply switch 86 as MC, and the inverter control unit 81 as ICD. The processor 82 is illustrated as PRO, the memory 83 as MEM, and the program 84 as PG. The flight control device 40 is illustrated as FCD, the processor 42 as PRO, the memory 43 as MEM, and the program 44 as PG.

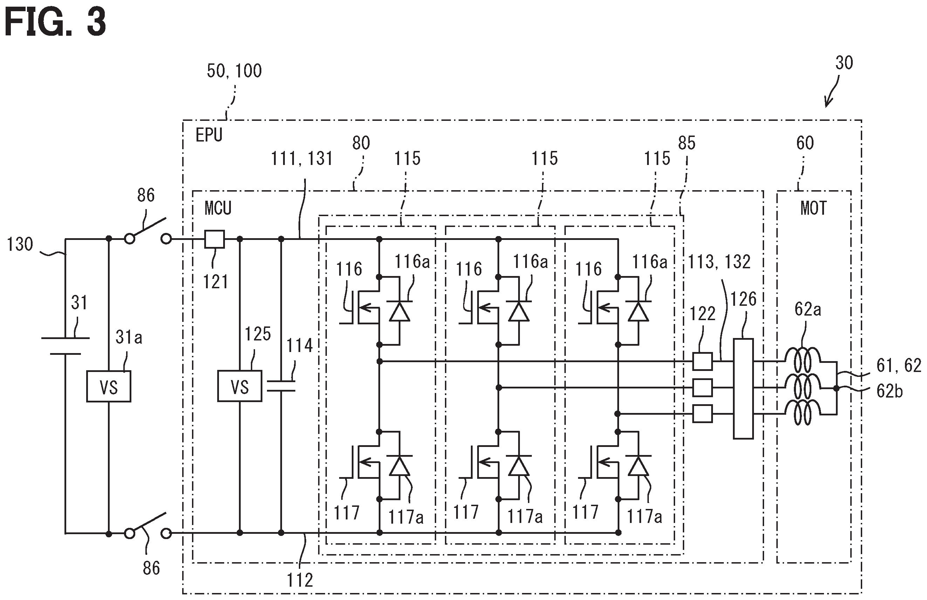

As illustrated in FIG. 3, the propulsion system 30 includes a P-line 111, an N-line 112, and an output line 113. The P-line 111 and the N-line 112 connect the battery 31 and the inverter circuit 85 so as to allow energization. The P-line 111 and the N-line 112 are formed of a bus bar, electric wiring, or the like. At least a part of the P-line 111 and at least a part of the N-line 112 are included in the propulsion device 100.

The P-line 111 is connected to the positive electrode of the battery 31 so as to allow energization. The N-line 112 is connected to the negative electrode of the battery 31 so as to allow energization. In the battery 31, the positive electrode is a high-potential-side electrode, and the negative electrode is a low-potential-side electrode. The P-line 111 and the N-line 112 are power lines for supplying power of the battery 31 to the inverter circuit 85. The P-line 111 is a high-potential-side power line and may be referred to as a high-potential line. The N-line 112 is a low-potential-side power line, and may be referred to as a low-potential line.

The output line 113 is a power line for supplying power from the inverter circuit 85 to the motor 61. The output line 113 connects the motor 61 and the inverter circuit 85 so as to allow energization. For example, the output line 113 is connected to the motor stator 62 so as to allow energization. The output line 113 is formed of a bus bar, electric wiring, or the like. At least a part of the output line 113 is included in the propulsion device 100.

The inverter device 80 includes a smoothing capacitor 114. The smoothing capacitor 114 is a capacitor that smooths the DC voltage supplied from the battery 31. The smoothing capacitor 114 is connected to the P-line 111 and the N-line 112 between the battery 31 and the inverter circuit 85. The smoothing capacitor 114 is connected in parallel with the inverter circuit 85.

The inverter device 80 includes a filter circuit such as an electromagnetic interference (EMI) filter. The filter circuit is provided between the smoothing capacitor 114 and the battery 31. The filter circuit reduces noise such as electromagnetic noise. The filter circuit is connected in parallel with the inverter circuit 85 with respect to the battery 31.

The inverter circuit 85 is a power conversion circuit, for example, a DC to AC conversion circuit. The inverter circuit 85 includes upper and lower arm circuits 115 for the plurality of phases. For example, the inverter circuit 85 includes the upper and lower arm circuits 115 for each of the U phase, the V phase, and the W phase. The upper and lower arm circuit 115 includes an upper arm switch 116 and a lower arm switch 117. The arm switches 116, 117 are connected in series with the battery 31. The upper arm switch 116 is connected to the P-line 111 so as to allow energization. The lower arm switch 117 is connected to the N-line 112 so as to allow energization.

Each of the arm switches 116, 117 is formed of a semiconductor switch or the like. The semiconductor switch is a switch having no mechanical contact. Each of the arm switches 116, 117 is, for example, a transistor such as a MOSFET or an IGBT. The term MOSFET is an abbreviation for metal-oxide-semiconductor field-effect transistor. The term IGBT is an abbreviation for insulated-gate bipolar transistor. Each of the arm switches 116, 117 is a switch element, and can convert power by switching. The switch element is a semiconductor element such as a power element. Each of the arm switches 116, 117 is a conversion switch for converting power. The arm switches 116, 117 can transition to an energized state in which energization is possible and a cut-off state in which energization is cut off.

The upper and lower arm circuit 115 includes an upper arm diode 116a and a lower arm diode 117a. The arm diodes 116a, 117a are reflux diodes, and are connected in reverse parallel with the arm switches 116, 117. The arm diodes 116a, 117a may be parasitic diodes of the arm switches 116, 117, or may be diodes provided separately from the parasitic diodes. The upper arm diode 116a is connected in reverse parallel with the upper arm switch 116. The lower arm diode 117a is connected in reverse parallel with the lower arm switch 117.

In each of the plurality of phases, the output line 113 is connected to the upper and lower arm circuit 115 so as to allow energization. The output line 113 is connected between the upper arm switch 116 and the lower arm switch 117. A plurality of output lines 113 are connected to the motor 61.

The inverter control unit 81 is formed of a control circuit or the like. The control circuit is provided on a control circuit board. The control circuit board may be referred to as a control board. The inverter device 80 includes a drive circuit (not illustrated). The drive circuit drives the arm switches 116, 117 in accordance with a command signal from the inverter control unit 81. For example, the drive circuit can apply a drive voltage to the gate terminal of each of the arm switches 116, 117. The drive circuit may be referred to as a gate drive circuit. The drive circuit is provided on a drive circuit board. The drive circuit board may be referred to as a drive board or a gate-drive board.

The propulsion system 30 includes a supply path 130. The supply path 130 is a path for supplying power from the battery 31 to the motor 61. The supply path 130 includes the battery 31, the lines 111 to 113, the inverter circuit 85, and the motor 61. In the supply path 130, power is supplied from the battery 31 to the motor 61. During motoring of the motor 61, a motoring current flows through the supply path 130. The motoring current is a current generated by battery power.

The supply path 130 includes a power-supply path 131 and a motor path 132. The power-supply path 131 is a path for supplying power from the battery 31 to the inverter circuit 85. A DC current flows through the power-supply path 131 as a motoring current. The power-supply path 131 includes the battery 31, the P-line 111, and the N-line 112. The motor path 132 is a path for supplying power from the inverter circuit 85 to the motor 61. An AC current flows through the motor path 132 as a motoring current. The motor path 132 includes the inverter circuit 85, the output line 113, and the motor 61.

During regeneration of the motor 61, regenerative power may be supplied from the motor 61 to the battery 31 and the smoothing capacitor 114. When regenerative power is generated in the motor 61, a regenerative current flows through the supply path 130. The regenerative current is a current generated from regenerative power. In the motor 61, a counter-electromotive force is generated in association with regeneration of the motor 61, and a regenerative current is generated by the counter-electromotive force. Similarly to the motoring current, the regenerative current flows through the power-supply path 131 and the motor path 132.

The propulsion system 30 includes the power-supply switch 86. The power-supply switch 86 is a switch such as an SMR. The term SMR is an abbreviation for system main relay. The power-supply switch 86 includes a mechanical switch or a mechanical relay having a mechanical contact. The power-supply switch 86 can transition between the energized state and the cut-off state. In the power-supply switch 86, the energized state may be referred to as a closed state, and the cut-off state may be referred to as an open state.

The power-supply switch 86 is provided on the supply path 130 between the battery 31 and the inverter circuit 85. The power-supply switch 86 can cut off the supply path 130. The power-supply switch 86 can cut off a current flowing through the supply path 130. Examples of the current that can be cut off by the power-supply switch 86 include a motoring current, a regenerative current, and an abnormal-time current to be described later. The power-supply switch 86 is provided on the power-supply path 131. The power-supply switch 86 can cut off the power-supply path 131. The power-supply switch 86 can cut off a current flowing through the power-supply path 131. The power-supply switch 86 can cut off a DC current, and may be referred to as a DC switch. The power-supply switch 86 is provided on at least one of the P-line 111 and the N-line 112 in the power-supply path 131. For example, the power-supply switch 86 is provided on each of the P-line 111 and the N-line 112.

Even when the power supply from the battery 31 to the motor 61 is cut off by the power-supply switch 86, the power supply from the battery 31 and the like to the flight control device 40 and the inverter control unit 81 is continued. In this case, the flight control device 40 and the inverter control unit 81 can drive the inverter circuit 85 so that the arm switches 116, 117 are turned on and off. That is, the flight control device 40 and the inverter control unit 81 can perform motor control even in a state where power supply from the battery 31 to the motor 61 is cut off. In FIG. 2, the battery 31 is illustrated as BAT, and the motor 61 as MOT.

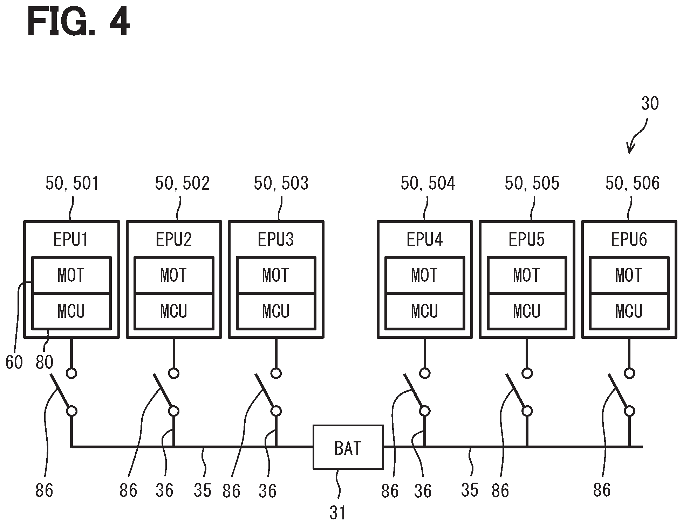

As illustrated in FIG. 4, the power-supply switch 86 is provided individually for each of the plurality of propulsion devices 100. The power-supply switch 86 is included in the propulsion device 100. For example, the power-supply switch 86 is provided in the inverter device 80. Since the eVTOL 10 is provided with the plurality of propulsion devices 100, a plurality of EPUs 50 are provided. The plurality of EPUs 50 include a first EPU 501 to a sixth EPU 506. The power-supply switch 86 is individually provided for each of the first EPU 501 to the sixth EPU 506. The power-supply switch 86 may be provided independently of the propulsion device 100. For example, the power-supply switch 86 may be provided in the battery 31 or the flight control device 40.

The propulsion system 30 includes a common path 35 and a branch path 36. Both the common path 35 and the branch path 36 are formed by at least a part of the supply path 130. The common path 35 is a path shared by the plurality of propulsion devices 100. The common path 35 is a path common to the plurality of EPUs 50. The common path 35 includes at least the battery 31. The branch path 36 is a path branched from the common path 35. The branch path 36 is connected to each of the plurality of EPUs 50. The branch path 36 branches from the supply path 130 between the battery 31 and the power-supply switch 86. In the propulsion system 30, the plurality of EPUs 50 are connected in parallel with the battery 31 through a common path 35 and a branch path 36.

The power-supply switch 86 is communicably connected to the flight control device 40. The flight control device 40 controls the power-supply switch 86. The power-supply switch 86 includes an actuator such as a solenoid. The flight control device 40 opens and closes the power-supply switch 86 by, for example, driving an actuator. The flight control device 40 can individually drive the power-supply switch 86 for each of the plurality of EPUs 50. The flight control device 40 controls the power-supply switch 86 by outputting a command signal. The command signal of the flight control device 40 is input to the power-supply switch 86 without passing through the inverter control unit 81. The command signal of the flight control device 40 may be input to the power-supply switch 86 via the inverter control unit 81.

As illustrated in FIG. 3, the propulsion device 100 includes a power-supply current sensor 121, a motor current sensor 122, a power-supply voltage sensor 125, and a motor voltage sensor 126 as various sensors. The current sensors 121, 122 and the voltage sensors 125, 126 are included in the propulsion system 30. For example, the current sensors 121, 122 and the voltage sensors 125, 126 are included in the inverter device 80. The motor current sensor 122 and the motor voltage sensor 126 may be included in the motor device 60.

The power-supply current sensor 121 is provided on the supply path 130 between the battery 31 and the inverter circuit 85. For example, the power-supply current sensor 121 is provided on the power-supply path 131 between the battery 31 and the smoothing capacitor 114. The power-supply current sensor 121 is provided in the P-line 111. The power-supply current sensor 121 detects a current flowing through the power-supply path 131. The power-supply current sensor 121 can detect a DC current. The power-supply current sensor 121 may be referred to as a high-voltage direct current (HVDC) current sensor. The power-supply current sensor 121 may be provided on at least one of the P-line 111 and the N-line 112.

The motor current sensor 122 is provided on the supply path 130 between the inverter circuit 85 and the motor 61. For example, the motor current sensor 122 is provided on the motor path 132 between the inverter circuit 85 and the motor 61. The motor current sensor 122 is provided in each of the output lines 113 of the plurality of phases. The motor current sensor 122 detects a current flowing through the motor path 132. The motor current sensor 122 can detect an AC current. The motor current sensor 122 may be provided in at least one of the multi-phase output lines 113.

The power-supply voltage sensor 125 detects a power-supply voltage. The power-supply voltage is a voltage applied to the inverter circuit 85. The power-supply voltage is a voltage input to the inverter circuit 85. The power-supply voltage sensor 125 outputs a detection signal corresponding to the power-supply voltage. The power-supply voltage sensor 125 is provided on the power-supply path 131 between the power-supply switch 86 and the inverter circuit 85. The power-supply voltage sensor 125 detects a potential difference between the P-line 111 and the N-line 112 as a power-supply voltage. The power-supply voltage sensor 125 can detect a DC voltage. The power-supply voltage sensor 125 may be referred to as an HVDC voltage sensor.

The motor voltage sensor 126 detects a motor voltage. The motor voltage is a voltage applied to the motor 61. The motor voltage is a voltage output from the inverter circuit 85, and may be referred to as an output voltage. The motor voltage sensor 126 outputs a detection signal corresponding to the motor voltage. The motor voltage sensor 126 is provided on the motor path 132 between the motor current sensor 122 and the motor 61. For example, the motor voltage is a voltage applied to the stator coil 62a. The motor voltage sensor 126 detects, as a motor voltage, inter-phase voltages of a plurality of phases. The motor voltage sensor 126 detects inter-phase voltages for all pairs of phases, with two phases forming one pair. The motor voltage sensor 126 can detect an AC voltage. The motor voltage sensor 126 may detect an inter-phase voltage for at least one pair.

The propulsion system 30 includes a battery voltage sensor 31a as various sensors. The battery voltage sensor 31a detects a battery voltage. The battery voltage is a voltage output by the battery 31. The battery voltage sensor 31a is provided in the battery 31. The battery voltage sensor 31a outputs a detection signal corresponding to the battery voltage. The battery voltage sensor 31a can detect a DC voltage. The battery voltage sensor 31a may be referred to as an HVDC voltage sensor.

The current sensors 121, 122 and the voltage sensors 31a, 125 output detection signals to the flight control device 40. Detection signals from the current sensors 121, 122 and the voltage sensors 31a, 125 may be input to the flight control device 40 via the inverter control unit 81, or may be input to the flight control device 40 without passing through the inverter control unit 81. For example, a detection signal from the battery voltage sensor 31a is input to the flight control device 40 without passing through the inverter control unit 81. Detection signals from the current sensors 121, 122 and the motor voltage sensor 126 are input to the flight control device 40 via the inverter control unit 81. In FIG. 3, the battery voltage sensor 31a and the motor voltage sensor 126 are illustrated as VS.

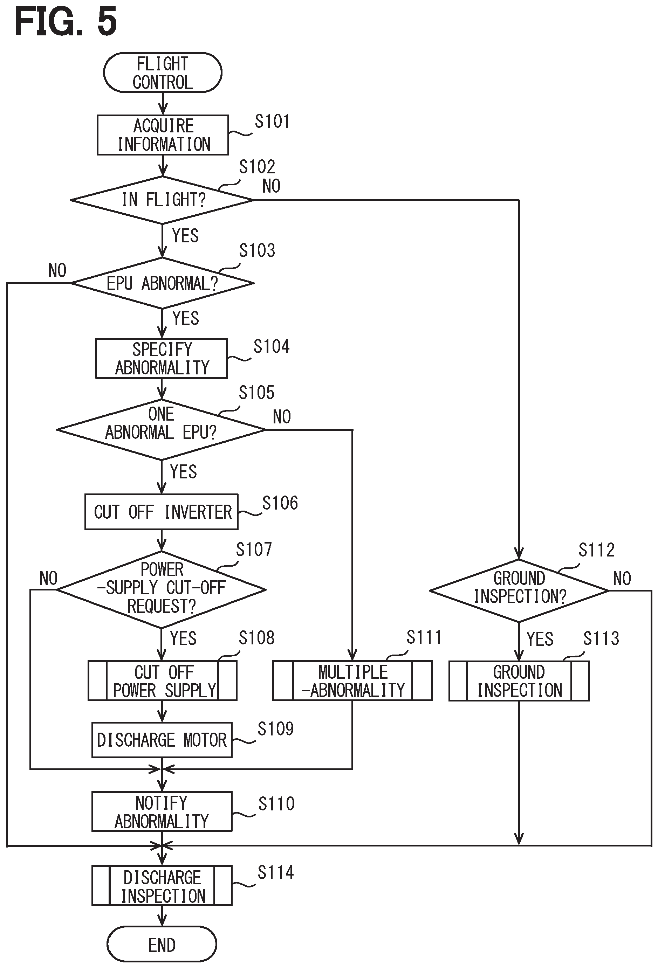

The flight control device 40 performs a flight control process. The flight control process will be described with reference to the flowchart of FIG. 5. The flight control device 40 repeatedly executes the flight control process at a predetermined control cycle.

The flight control device 40 acquires eVTOL information in step S101 illustrated in FIG. 5. The eVTOL information is information indicating a state of the eVTOL 10. Examples of the eVTOL information include information indicating a flight state of the eVTOL 10 and information indicating a state of the propulsion device 100. The information indicating the state of the propulsion device 100 includes an open/closed state of the power-supply switch 86, a driving state of the motor 61, a driving state of the inverter circuit 85, detection results of various sensors, and the like. Examples of the eVTOL information include information input from an external device to the flight control device 40 via the communication unit 34.

In step S102, the flight control device 40 determines whether the eVTOL 10 is in flight. This determination is made using eVTOL information. When the eVTOL 10 is in flight, the flight control device 40 proceeds to step S103. In step S103, the flight control device 40 determines whether an EPU abnormality has occurred. This determination is made using eVTOL information such as a sensor value. The EPU abnormality is an abnormality in the EPU 50. Examples of an EPU abnormality include an abnormality in the motor device 60 and an abnormality in the inverter device 80. The function of executing the process of step S103 in the flight control device 40 corresponds to an abnormality determination unit.

For example, the flight control device 40 determines the presence or absence of an EPU abnormality using the sensor value as the eVTOL information. The sensor value is a detection result of each of various sensors such as the current sensors 121, 122 and the voltage sensors 125, 126. The sensor value may be referred to as a sensor output. The flight control device 40 determines whether the sensor value is included in a normal range for each of the plurality of propulsion devices 100. The flight control device 40 determines that an EPU abnormality has occurred for the propulsion device 100 in which the sensor value is not included in the normal range. When the sensor value is not included in the normal range, the flight control device 40 determines that the sensor value is an abnormal value.

When an EPU abnormality has occurred, the flight control device 40 proceeds to step S104. In step S104, the flight control device 40 specifies the state of the EPU abnormality. The flight control device 40 estimates the state of the EPU abnormality using eVTOL information such as detection signals from the current sensors 121, 122 and the voltage sensors 31a, 125, 126. Examples of the state of the EPU abnormality include abnormality content and an abnormality level. The flight control device 40 estimates which of the plurality of EPUs 50 is an abnormal EPU. The abnormal EPU is the EPU 50 in which the EPU abnormality has occurred.

The flight control device 40 determines whether the EPU abnormality is an abnormality related to the motor 61. Examples of an abnormality related to the motor 61 include an abnormality related to a structure such as a shape of the motor device 60, an abnormality related to the supply path 130, an abnormality related to the inverter control unit 81, and an abnormality related to the propulsion system 30.

When an abnormality related to the motor 61 occurs, an abnormal-time current may flow through the supply path 130. For example, when a short circuit or a ground fault occurs in the supply path 130 as an abnormality related to the motor 61, an abnormal-time current flows through the supply path 130. Examples of the abnormal-time current include an overcurrent flowing through the supply path 130 caused by a short circuit or a ground fault in the supply path 130. Examples of a short circuit in the supply path 130 include a short circuit occurring in the power-supply path 131 and a short circuit occurring in the motor path 132. Examples of a short circuit in the power-supply path 131 include a short circuit occurring in the battery 31, a short circuit occurring in the smoothing capacitor 114, and a short circuit occurring between the P-line 111 and the N-line 112.

Examples of a short circuit in the motor path 132 include a short circuit that occurs in the arm switches 116, 117. When a short circuit occurs in the arm switches 116, 117, a short circuit may occur between the P-line 111 or the N-line 112 and the output line 113. For example, the P-line 111 and the N-line 112 may be short-circuited via the output line 113.

Examples of a short circuit in the motor path 132 include a short circuit that occurs between at least two output lines 113 and a short circuit that occurs in the motor 61. Examples of a short circuit in the motor 61 include a short circuit occurring in the stator coil 62a of one phase and a short circuit occurring between the stator coils 62a of the plurality of phases. Examples of a short circuit occurring in the stator coil 62a of one phase include a short circuit occurring between at least two winding portions. In the motor 61, a plurality of winding portions are stacked by winding coil wires.

Examples of a short circuit occurring in the supply path 130 include a dead short and a partial short. In the supply path 130, a dead short occurs due to, for example, contact between path-forming portions such as bus bars having different potentials. For example, a dead short may occur in the supply path 130 due to, for example, a short circuit between a high-potential path and a low-potential path. Examples of a dead short include a dead short occurring in the power-supply path 131 and a dead short occurring in the motor path 132.

Examples of a dead short on the power-supply path 131 include a dead short occurring in the battery 31, a dead short occurring due to a short circuit in the smoothing capacitor 114 or the filter circuit, and a dead short occurring between the P-line 111 and the N-line 112. Examples of a dead short on the motor path 132 include a dead short occurring due to a short circuit in the arm switches 116, 117, a dead short occurring between at least two output lines 113, and a dead short occurring in the motor 61. In the motor 61, a dead short may occur due to, for example, contact between the stator coils 62a between the plurality of phases.

A dead short due to the battery 31 is detected as a voltage drop of the battery 31 by the battery voltage sensor 31a, the power-supply voltage sensor 125, or the like. A dead short between the P-line 111 and the N-line 112 due to the smoothing capacitor 114 or the arm switches 116, 117 is detected as an overcurrent or the like in the P-line 111 or the N-line 112 by the power-supply current sensor 121 or the like.

A dead short due to at least two output lines 113 is detected as an overcurrent in the power-supply path 131 by the power-supply current sensor 121, the drive circuit, or the like. In particular, a dead short occurring between the motor current sensor 122 and the motor 61 in the output line 113 is detected as an overcurrent or the like in the output line 113 by the motor current sensor 122 or the like.

In the motor 61, a short circuit in a part of the stator coil 62a may cause a partial short. For example, in the stator coil 62a formed by winding a stranded wire, a partial short may occur due to a short circuit in a part of the stranded wire. A dead short or a partial short in the motor 61 is detected by the inverter control unit 81 or the like. For example, the inverter control unit 81 detects a short circuit in the motor 61 by detecting torque, rotational speed, and deviation of the motor 61. The inverter control unit 81 detects a short circuit in the motor 61 by detecting a phase deviation of a phase current of the motor 61.

Examples of a ground fault in the supply path 130 include a ground fault occurring in the power-supply path 131 via the inverter housing 90 and the like, a ground fault occurring in the motor path 132 via the motor housing 70 and the like. Examples of a ground fault in the motor path 132 include a ground fault occurring in the motor 61. Examples of a ground fault in the motor 61 include a ground fault occurring in the stator coil 62a via the motor housing 70 or the like.

Examples of an abnormality related to the inverter control unit 81 include an abnormality in the control circuit board and an abnormality in the drive circuit board. Examples of an abnormality in the control circuit board include a short circuit occurring in an output circuit that outputs a signal from the control circuit to the drive circuit. Examples of an abnormality in the drive circuit board include a short circuit occurring in an input circuit to which a signal from the control circuit to the drive circuit is input.

In step S105, the flight control device 40 determines whether the number of abnormal EPUs is one. That is, the flight control device 40 determines whether the number of abnormal EPUs is two or more.

When the number of abnormal EPUs is one, the flight control device 40 performs a multi-cut-off process in steps S106 to S109. In the multi-cut-off process, the supply path 130 is cut off at a plurality of places. For example, in the multi-cut-off process, the supply path 130 is cut off by a plurality of switches such as the power-supply switch 86 and the arm switches 116, 117. The flight control device 40 cuts off the supply path 130 by at least one of the power-supply switch 86 and the arm switches 116, 117. The function of executing the processes of steps S106 to S109 in the flight control device 40 corresponds to an abnormality cut-off unit.

The flight control device 40 executes an inverter cut-off process in step S106 of the multi-cut-off process. In the inverter cut-off process, a process for reducing an abnormal-time current flowing through the supply path 130 is performed. For example, in the inverter cut-off process, a process for cutting off the abnormal-time current by the inverter circuit 85 is performed. The flight control device 40 cuts off the abnormal-time current by switching the inverter circuit 85 to the cut-off state. The cut-off state of the inverter circuit 85 is a state in which the arm switches 116, 117 cut off the abnormal-time current for all of the plurality of phases. For example, in the cut-off state of the inverter circuit 85, both the upper arm switch 116 and the lower arm switch 117 are in the cut-off state for all of the plurality of phases. The inverter circuit 85 may be switched to the reduced state. The reduced state of the inverter circuit 85 is a state for reducing the abnormal-time current. In the inverter circuit 85, one of the reduced states is the cut-off state. The function of executing the process of step S106 in the flight control device 40 corresponds to a current reduction unit.

In step S107, the flight control device 40 determines whether there is a power-supply cut-off request. The power-supply cut-off is to cut off the power-supply path 131 by the power-supply switch 86. When it is necessary to perform power-supply cut-off, the flight control device 40 determines that there is a power-supply cut-off request. For example, when it is necessary to generate regenerative power in the motor 61, the flight control device 40 determines that there is no power-supply cut-off request. On the other hand, when it is not necessary to generate regenerative power in the motor 61, the flight control device 40 determines that there is a power-supply cut-off request. In the motor 61, regenerative braking that reduces the rotational force of the motor 61 and the propeller 20 is generated, due to, for example, storage of regenerative power in the smoothing capacitor 114 and the battery 31.

When there is a power-supply cut-off request, the flight control device 40 proceeds to step S108. The flight control device 40 performs a power-supply cut-off process in step S108. In the power-supply cut-off process, a process for executing power-supply cut-off is performed. By performing the power-supply cut-off process after the inverter cut-off process, the flight control device 40 cuts off the abnormal-time current by the power-supply switch 86 after the timing at which the inverter circuit 85 starts reducing the abnormal-time current. The function of executing the process of step S108 in the flight control device 40 corresponds to a power-supply cut-off unit.

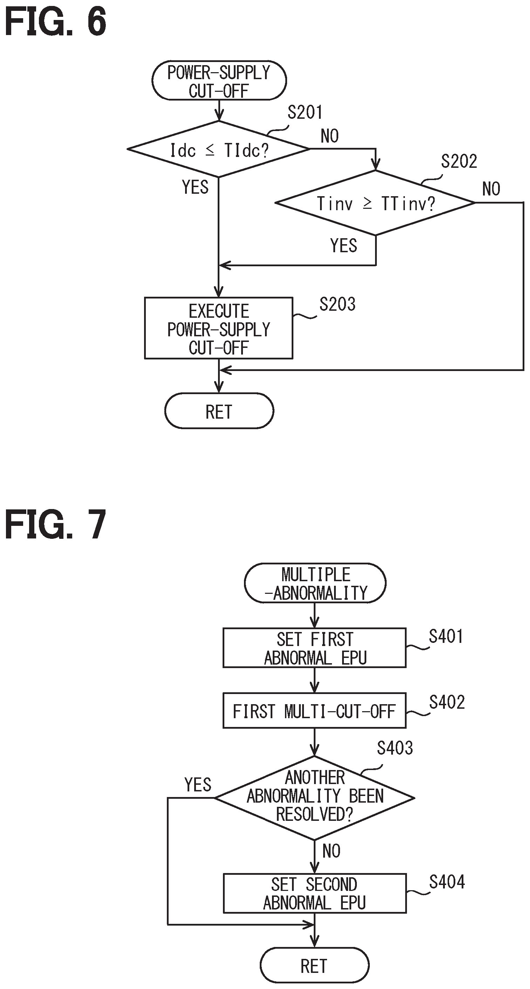

The power-supply cut-off process will be described with reference to the flowchart of FIG. 6. In step S201 illustrated in FIG. 6, the flight control device 40 determines whether a power-supply current Idc is equal to or less than a power-supply current threshold Tldc. The power-supply current Idc is an abnormal-time current flowing through the power-supply path 131. The flight control device 40 calculates the power-supply current Idc using the detection result of the power-supply current sensor 121. The power-supply current threshold Tldc is a value determined in advance by a test or the like, and is stored in the memory 43 or the like. The power-supply current threshold Tldc is set to a value of a current that can be cut off by the power-supply switch 86. For example, the power-supply current threshold Tldc is set to a value corresponding to the rated current of the power-supply switch 86.

When the power-supply current Idc is reduced to the power-supply current threshold Tldc by the inverter cut-off process, the flight control device 40 proceeds to step S203. In step S203, the flight control device 40 performs a power-supply cut-off execution process. In the power-supply cut-off execution process, the power-supply switch 86 is switched to the cut-off state. The flight control device 40 cuts off the power-supply current Idc by the power-supply switch 86 after the power-supply current Idc is reduced by the inverter cut-off process. The function of executing the process of step S203 in the flight control device 40 corresponds to a power-supply reduction cut-off unit.

For example, unlike the present embodiment, a comparative example is assumed in which the flight control device 40 performs the power-supply cut-off execution process without performing the inverter cut-off process. In this comparative example, a situation is likely to occur in which the power-supply switch 86 cuts off the power-supply current Idc in a state where the power-supply current Idc, which is an abnormal-time current, is larger than the power-supply current threshold Tldc. In this situation, even when the power-supply switch 86 is switched to the cut-off state, there is a concern that the power-supply current Idc is not cut off due to, for example, generation of arc discharge in the power-supply switch 86. Further, in this situation, there is also a concern that a failure or abnormality of the power-supply switch 86 may occur due to arc discharge or the like generated in the power-supply switch 86. In contrast, in the present embodiment, since the power-supply current Idc has been reduced to the power-supply current threshold Tldc, the power-supply current Idc tends to be cut off by the power-supply switch 86, and a failure or abnormality of the power-supply switch 86 is unlikely to occur.

When the power-supply current Idc is not equal to or less than the power-supply current threshold Tldc, the flight control device 40 proceeds to step S202. In step S202, the flight control device 40 determines whether an inverter time Tinv has reached an inverter time threshold TTinv. The inverter time Tinv is an elapsed time from the start of the reduction of the power-supply current Idc by the inverter cut-off process.

When the inverter cut-off process is performed, a surge voltage is likely to be generated in the power-supply path 131 in association with the inverter circuit 85 cutting off the abnormal-time current. Examples of the surge voltage include a load dump. The inverter time Tinv is a time for waiting until the surge voltage decreases. The inverter time threshold TTinv is a value determined in advance by a test or the like, and is stored in the memory 43 or the like. The inverter time threshold TTinv is set in accordance with the time required for reducing the surge voltage generated by the inverter cut-off process.

When the inverter time Tinv has reached the inverter time threshold TTinv, the flight control device 40 proceeds to step S203 and performs a power-supply cut-off execution process. When the inverter time Tinv has reached the inverter time threshold TTinv, the flight control device 40 cuts off the power-supply current Idc by the power-supply switch 86. The function of executing the process of step S203 in the flight control device 40 corresponds to a power-supply elapsed-time cut-off unit.

For example, unlike the present embodiment, a comparative example is assumed in which the flight control device 40 performs the power-supply cut-off execution process without waiting after the inverter cut-off process. In this comparative example, a situation is likely to occur in which the power-supply switch 86 cuts off the abnormal-time current in a state where the surge voltage generated in association with the inverter circuit 85 cutting off the abnormal-time current is large. In this situation, when the power-supply switch 86 is switched to the cut-off state, there is a concern that an abnormality occurs in the inverter circuit 85 or the power-supply switch 86. For example, in the inverter circuit 85, there is a concern that an abnormality occurs in the arm switches 116, 117 or the like due to damage caused by a surge voltage or the like. In the power-supply switch 86, there is a concern that damage caused by the surge voltage is applied to the power-supply switch 86. In contrast, in the present embodiment, since the power-supply switch 86 cuts off the abnormal-time current with the surge voltage in the reduced state, an abnormality is unlikely to occur in the inverter circuit 85 and the power-supply switch 86 due to the surge voltage.

Returning to FIG. 5, after the power-supply cut-off process, the flight control device 40 proceeds to step S109. In step S109, the flight control device 40 performs a motor discharge process. In the motor discharge process, a process for discharging residual power of the smoothing capacitor 114 to the motor 61 is performed. In the smoothing capacitor 114, residual electric charge flows to the motor 61 as a discharge current, whereby the residual power is discharged in the motor 61. The flight control device 40 drives the inverter circuit 85 so that a discharge current flows to the motor 61. In the motor discharge process, residual power remaining in the supply path 130 is discharged by the motor 61.

The flight control device 40 may not perform the motor discharge process. For example, the flight control device 40 determines whether to perform the motor discharge process. In this determination, whether to perform the motor discharge process is determined according to where in the supply path 130 the abnormality has occurred. For example, when an abnormality such as a short circuit occurs at a portion where a discharge current flows through the supply path 130, the flight control device 40 determines not to perform the motor discharge process. Examples of the portion through which the discharge current flows include the arm switches 116, 117 and the stator coil 62a. When a short circuit occurs in the arm switches 116, 117 or the stator coil 62a, and a discharge current flows through the arm switches 116, 117 or the stator coil 62a, there is a concern that an EPU abnormality spreads or progresses due to the discharge current. In contrast, when a short circuit occurs in the arm switches 116, 117 or the stator coil 62a, the flight control device 40 does not perform the motor discharge process, so that it is possible to suppress the spread and progression of the EPU abnormality due to the discharge current.

In step S110, the flight control device 40 performs an abnormality notification process. In the abnormality notification process, a process for notifying a pilot, an external facility, or the like that the EPU abnormality has occurred is performed. In the abnormality notification process performed after steps S106 to S109, notification is made that the number of abnormal EPUs is one, that the multi-cut-off process has been performed on the abnormal EPU, and the like. In the abnormality notification process, the content to be notified may be stored in the memory 43 or the like.

When the number of abnormal EPUs is not only one in step S105, the flight control device 40 determines that there are a plurality of abnormal EPUs and proceeds to step S111. In step S111, the flight control device 40 performs a multiple-abnormality process. The multiple-abnormality process is a process for handling occurrence of a plurality of abnormal EPUs.

In the propulsion system 30, when an EPU abnormality occurs in at least one EPU 50, the influence of the EPU abnormality may appear in a sensor value of a normal EPU through the common path 35 or the branch path 36. The normal EPU is an EPU 50 in which no EPU abnormality has actually occurred. For the EPU 50, since the presence or absence of an EPU abnormality is determined using a sensor value, there is a concern that the sensor value of the normal EPU becomes an abnormal value due to the influence of an EPU abnormality. That is, there is a concern that the normal EPU is erroneously estimated as an apparently abnormal EPU in step S104. In contrast, the flight control device 40 can confirm that the plurality of abnormal EPUs are not apparently abnormal EPUs in the multiple-abnormality process.

The multiple-abnormality process will be described with reference to the flowchart of FIG. 7. In step S401 illustrated in FIG. 7, the flight control device 40 sets a first abnormal EPU. The flight control device 40 sets, as the first abnormal EPU, the abnormal EPU having the highest degree of abnormality among the plurality of abnormal EPUs specified in step S104. For example, the flight control device 40 calculates a deviation amount of a sensor value from a normal range for each of the plurality of abnormal EPUs. The flight control device 40 sets, as the first abnormal EPU, the abnormal EPU having the largest deviation amount of the sensor value among the plurality of abnormal EPUs.

The flight control device 40 may set, as the first abnormal EPU, the abnormal EPU having the largest number of sensor values that have become abnormal values among the plurality of abnormal EPUs. For example, the flight control device 40 acquires the detection results of the current sensors 121, 122 and the voltage sensors 125, 126 as four sensor values for each of the plurality of abnormal EPUs. When there is only one abnormal EPU in which all the four sensor values are abnormal values, the flight control device 40 sets this abnormal EPU as the first abnormal EPU.

In addition, it is assumed that there are two abnormal EPUs. In this case, it is assumed that, in one abnormal EPU, both the sensor value for the power-supply path 131 and the sensor value for the motor path 132 are abnormal values, and in the other abnormal EPU, only the sensor value for the power-supply path 131 is an abnormal value. The flight control device 40 may set, as the first abnormal EPU, the abnormal EPU in which both the sensor value for the power-supply path 131 and the sensor value for the motor path 132 are abnormal values among the two abnormal EPUs.

Moreover, the flight control device 40 may set, as the first abnormal EPU, the abnormal EPU in which an abnormal value as a sensor value was detected earliest among the plurality of abnormal EPUs. For example, the flight control device 40 monitors sensor values in real time by high-speed sampling, and accurately acquires the timing at which an abnormal value is detected. Examples of the high-speed sampling include sampling at several msec to several µsec.

In step S402, the flight control device 40 performs the multi-cut-off process on the first abnormal EPU. In this multi-cut-off process, the same process as in the multi-cut-off process in steps S106 to S109 is performed on the first abnormal EPU. That is, in this multi-cut-off process, the driving of the first abnormal EPU is stopped. The function of executing the process of step S402 in the flight control device 40 corresponds to the abnormality cut-off unit.

In step S403, the flight control device 40 determines whether the abnormality has been resolved for another abnormal EPU different from the first abnormal EPU. This determination is made using eVTOL information such as a sensor value for another abnormal EPU as in step S103 described above. When the abnormality has been resolved for another abnormal EPU, the flight control device 40 determines that the influence of the EPU abnormality in the first abnormal EPU has appeared in another abnormal EPU, and terminates the present multiple-abnormality process as is.

When the abnormality is not resolved for another abnormal EPU, the flight control device 40 determines that an EPU abnormality in a mode independent of the EPU abnormality in the first abnormal EPU has occurred in another abnormal EPU. When the abnormality has not been resolved for another abnormal EPU, the flight control device 40 proceeds to step S404. In step S404, the flight control device 40 sets another abnormal EPU as a second abnormal EPU. The flight control device 40 sets all the other abnormal EPUs as the second abnormal EPUs. For example, when there are a plurality of other abnormal EPUs, the flight control device 40 sets a plurality of second abnormal EPUs. By setting the other abnormal EPUs as the second abnormal EPUs, the flight control device 40 suspends determination on the presence or absence of an abnormality.

Returning to FIG. 5, after step S111, the flight control device 40 proceeds to step S110 and performs the abnormality notification process. When the abnormality notification process is to be performed after step S111, the abnormality notification process notifies that the number of abnormal EPUs is two or more, that the multi-cut-off process has been performed on the first abnormal EPU, that there is a second abnormal EPU, and the like.

In step S102, when the eVTOL 10 is not in flight, the flight control device 40 proceeds to step S112. In step S112, the flight control device 40 determines whether to perform a ground inspection. The ground inspection is to inspect the eVTOL 10 in a situation where the eVTOL 10 is on the ground without flying. For example, when preparation for take-off of the eVTOL 10 is to be started, the flight control device 40 determines to perform a ground inspection. The flight control device 40 determines whether to perform a ground inspection in accordance with an input operation of a pilot or an operator.

When a ground inspection is to be performed, the flight control device 40 proceeds to step S113 and performs a ground inspection process. In the ground inspection process, an inspection related to the motor 61 or the like is performed as an inspection of the eVTOL 10. Examples of the inspection related to the motor 61 include an inspection related to the motor device 60, an inspection related to the supply path 130, an inspection related to the inverter control unit 81, and an inspection related to the propulsion system 30. Examples of the inspection related to the supply path 130 include an inspection related to the power-supply path 131 and an inspection related to the motor path 132. Examples of the inspection related to the supply path 130 also include inspections of various switches and the like. For example, as inspections of various switches, confirmation is made that the power-supply switch 86 and the arm switches 116, 117 normally operate. The function of executing the process of step S113 in the flight control device 40 corresponds to a switch inspection unit.

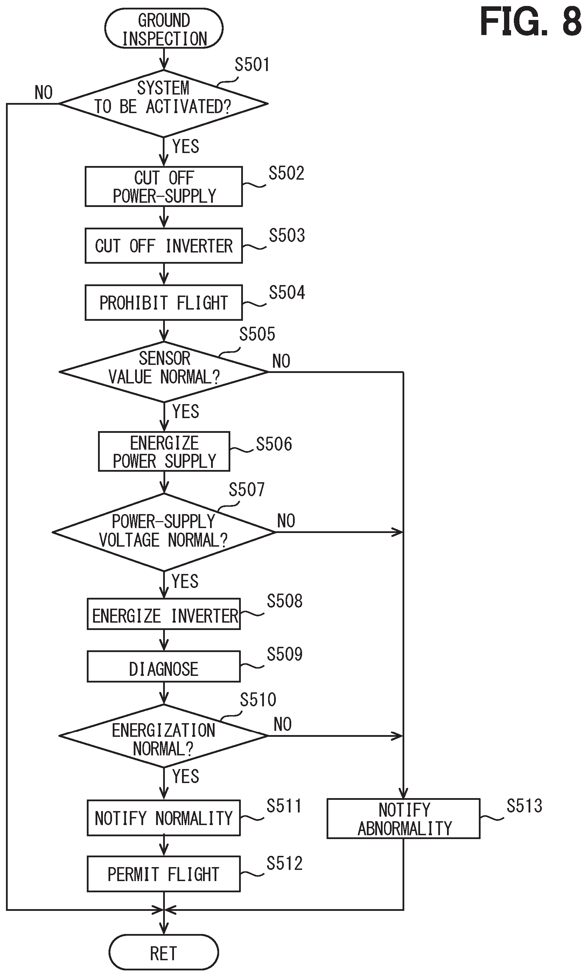

The ground inspection process will be described with reference to the flowchart of FIG. 8. The flight control device 40 determines whether the propulsion system 30 is to be activated in step S501 illustrated in FIG. 8. For example, the flight control device 40 determines that the propulsion system 30 is to be activated when the power supply of the propulsion system 30 is turned on. The activation of the propulsion system 30 includes activation of the flight control device 40, activation of the inverter control unit 81, and the like. The flight control device 40 performs an inspection related to the propulsion system 30, such as inspections of the power-supply switch 86 and the arm switches 116, 117, in accordance with activation of the propulsion system 30.

When the propulsion system 30 is to be activated, the flight control device 40 sets the supply path 130 to an initial state in steps S502 and S503. In this initial state, no current flows through the supply path 130. Further, in this initial state, no residual power remains in the smoothing capacitor 114. In step S502, the flight control device 40 sets the power-supply switch 86 to the cut-off state. In step S503, the flight control device 40 sets the inverter circuit 85 to the cut-off state. For example, the flight control device 40 sets all of the arm switches 116, 117 to the cut-off state in the inverter circuit 85.

In step S504, the flight control device 40 performs a flight prohibition process. In the flight prohibition process, a process for prohibiting the flight of the eVTOL 10 is performed. For example, the flight control device 40 sets a flight prohibition flag in the memory 43 or the like. The flight prohibition flag is a flag indicating flight prohibition of the eVTOL 10. The flight control device 40 may clear a flight permission flag. The flight permission flag is a flag indicating flight permission of the eVTOL 10. Since the flight permission flag is not set in the memory 43 or the like, the flight of the eVTOL 10 is prohibited.

In step S505, the flight control device 40 determines whether a sensor value is normal. The sensor value is an initial value when the supply path 130 is in the initial state. The flight control device 40 determines whether the sensor value is the initial value. When the sensor value is the initial value, the flight control device 40 determines that the sensor value is normal. For example, the initial value of each of the sensor values of the current sensors 121, 122 and the voltage sensors 125, 126 is 0. When the sensor values of the current sensors 121, 122 and the voltage sensors 125, 126 are substantially 0, the flight control device 40 determines that the sensor values are normal.

When the sensor value is normal, the flight control device 40 proceeds to step S506. In step S506, the flight control device 40 switches the power-supply switch 86 to the energized state. When the power-supply switch 86 is switched to the energized state, a power-supply voltage corresponding to the battery voltage is applied to the inverter circuit 85 and the smoothing capacitor 114.

In step S507, the flight control device 40 determines whether the power-supply voltage is normal. The flight control device 40 calculates the battery voltage and the power-supply voltage using detection signals from the battery voltage sensor 31a and the power-supply voltage sensor 125. The flight control device 40 determines whether the power-supply voltage is a value corresponding to the battery voltage. When the power-supply voltage is a value corresponding to the battery voltage, the flight control device 40 determines that the power-supply voltage is normal. When the power-supply voltage is excessively high or excessively low relative to the battery voltage, the flight control device 40 determines that the power-supply voltage is not normal.

The flight control device 40 may determine a plurality of times whether the power-supply voltage is normal. For example, after determining that the power-supply voltage is normal in step S507, the flight control device 40 may perform the processes of steps S502 and S505 to S507 again. After the power-supply energization process in step S506, the power-supply cut-off process in step S502 and the normality determination of the sensor value in step S505 are made again, whereby confirmation is made as to whether the power-supply switch 86 can normally cut off a current flowing through the power-supply path 131. After determining that the power-supply voltage is normal, the flight control device 40 switches the power-supply switch 86 to the cut-off state again to determine whether the sensor value is normal, and further switches the power-supply switch 86 to the energized state to determine whether the power-supply voltage is normal.

When the power-supply voltage is normal, the flight control device 40 proceeds to step S508. In step S508, the flight control device 40 switches the inverter circuit 85 to the energized state. In the energized state of the inverter circuit 85, the arm switches 116, 117 are in the energized state so that a current flows through at least one phase. For example, the flight control device 40 drives the arm switches 116, 117 so that a current sequentially flows through all the phases. As a result, the flight control device 40 can confirm that all the arm switches 116, 117 normally shift from the cut-off state to the energized state.

In step S509, the flight control device 40 performs a diagnosis process. In the diagnosis process, a process for confirming that the current as set by the flight control device 40 flows through the motor 61 is performed. For example, the flight control device 40 drives the inverter circuit 85 so that a motoring current sufficiently smaller than that in normal motor control flows.

In step S510, the flight control device 40 determines whether the energization to the motor 61 is normal. In this determination, a sensor value or the like is used. For example, the flight control device 40 determines whether the arm switches 116, 117 normally operate using the energization result in step S508 and the diagnosis result in step S509. When the arm switches 116, 117 normally operate, the flight control device 40 determines that the energization to the motor 61 is normal.

The flight control device 40 may determine a plurality of times whether the energization to the motor 61 is normal. For example, after determining that the energization to the motor 61 is normal in step S510, the flight control device 40 may perform the processes of steps S503 and S508 to S510 again. In this case, after the inverter energization process in step S508, the inverter cut-off process in step S503 and the normality determination of the sensor value in step S505 are made again in a state where the power-supply switch 86 does not cut off the power-supply path 131. As a result, confirmation is made as to whether the arm switches 116, 117 can normally cut off the current flowing through the inverter circuit 85. After determining that the energization to the motor 61 is normal, the flight control device 40 switches the inverter circuit 85 to the cut-off state again, drives the inverter circuit 85 so that the motor 61 is energized again, and determines whether the energization to the motor 61 is normal.

When the energization to the motor 61 is normal, the flight control device 40 proceeds to step S511. The flight control device 40 performs a normal notification process in step S511. In the normal notification process, notification is made that the power-supply switch 86 and the inverter circuit 85 normally operate, and the like.

In step S512, the flight control device 40 performs a flight permission process. In the flight permission process, a process for permitting the flight of the eVTOL 10 is performed. For example, the flight control device 40 clears a flight prohibition flag. The flight control device 40 may set the flight permission flag in the memory 43 or the like.

The flight control device 40 proceeds to step S513 in any of the following cases in steps S505, S507, and S510: that the sensor value is not normal, that the power-supply voltage is not normal, or that the energization to the motor 61 is not normal. In step S513, the flight control device 40 performs the abnormality notification process. In the abnormality notification process, notification is made that the power-supply switch 86 or the inverter circuit 85 does not normally operate, and the like.

Returning to FIG. 5, the flight control device 40 proceeds to step S114 after steps S101 to S113. In step S114, the flight control device 40 performs a discharge inspection process. In the discharge inspection process, an inspection related to the motor 61 or the like is performed as an inspection of the eVTOL 10. In the discharge inspection process, an inspection related to the motor 61 is performed using the discharge of the smoothing capacitor 114. For example, in the discharge inspection procedure, by using the discharge of the smoothing capacitor 114, confirmation is made that the power-supply switch 86 and the arm switches 116, 117 normally operate. The function of executing the process of step S114 in the flight control device 40 corresponds to the switch inspection unit.

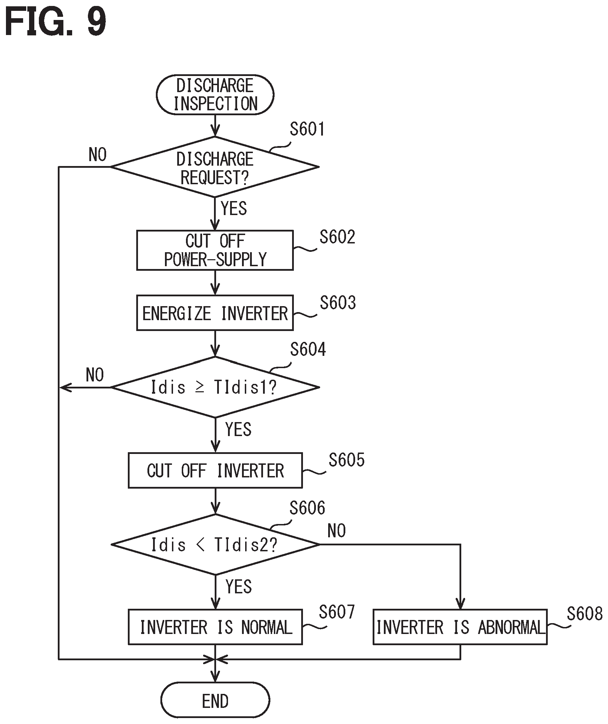

The discharge inspection process will be described with reference to the flowchart of FIG. 9. In step S601 illustrated in FIG. 9, the flight control device 40 determines whether there is a discharge request. Examples of the case where there is a discharge request include a case where the driving of the motor 61 is stopped during the flight of the eVTOL 10 or after landing. That is, the examples include a case where a stop request is made to the EPU 50. For example, the flight control device 40 determines whether the inverter circuit 85 has been switched to the cut-off state in order to stop the driving of the motor 61. When the inverter circuit 85 has been switched to the cut-off state, the flight control device 40 determines that there is a discharge request.

When there is a discharge request, the flight control device 40 proceeds to step S602. In step S602, the flight control device 40 performs the power-supply cut-off process. In the power-supply cut-off process, a process for cutting off the power-supply path 131 by the power-supply switch 86 is performed in order to discharge the smoothing capacitor 114. For example, the flight control device 40 performs the power-supply cut-off process as in step S108 described above.

In step S603, the flight control device 40 performs the inverter energization process. In the inverter energization process, a process for switching the inverter circuit 85 to the energized state is performed. In the inverter energization process, the inverter circuit 85 is driven so that the residual power of the smoothing capacitor 114 is discharged to the motor 61 via the inverter circuit 85. By performing the inverter energization process, a discharge current flows through the inverter circuit 85.

In step S604, the flight control device 40 determines whether a discharge current Idis is equal to or larger than a first discharge threshold Tldis1. The discharge current Idis is a discharge current flowing through the motor path 132. The flight control device 40 calculates the discharge current Idis using a detection signal from the motor current sensor 122. The discharge current Idis flows from the smoothing capacitor 114 to the motor 61 via the inverter circuit 85 and the output line 113. The first discharge threshold Tldis1 is a value determined in advance by a test or the like, and is stored in the memory 43 or the like. The first discharge threshold Tldis1 is set to a value indicating that the smoothing capacitor 114 is discharged normally. When the discharge current Idis is large enough to reach the first discharge threshold Tldis1, the flight control device 40 determines that the smoothing capacitor 114 is being discharged normally. In this case, the smoothing capacitor 114 is in the middle of discharging.

Examples of the case where the discharge current Idis is so small as not to reach the first discharge threshold Tldis1 include a case where the smoothing capacitor 114 is not normally discharged and a case where the residual power of the smoothing capacitor 114 is excessively small. When the discharge current Idis is smaller than the first discharge threshold Tldis1, determination is made that it is difficult to perform an inspection related to the motor 61, and the flight control device 40 terminates the discharge inspection process as is.

When the discharge current Idis reaches the first discharge threshold Tldis1, the flight control device 40 proceeds to step S605. In step S605, the flight control device 40 performs the inverter cut-off process. In the inverter cut-off process, a process for switching the inverter circuit 85 to the cut-off state is performed. In the inverter cut-off process, the inverter circuit 85 is driven so that the discharge current is cut off by the inverter circuit 85.

In step S606, the flight control device 40 determines whether the discharge current Idis is smaller than a second discharge threshold Tldis2. The second discharge threshold Tldis2 is a value determined in advance by a test or the like, and is stored in the memory 43 or the like. The second discharge threshold Tldis2 is set to a value indicating that the motor discharge has been stopped by the inverter circuit 85. When the discharge current Idis becomes smaller than the second discharge threshold Tldis2 as a result of the inverter cut-off process, the flight control device 40 determines that the inverter circuit 85 has normally cut off the discharge current Idis. On the other hand, when the discharge current Idis does not become smaller than the second discharge threshold Tldis2 even though the inverter cut-off process has been performed, the flight control device 40 determines that the inverter circuit 85 has not been able to cut off the discharge current Idis.

When the discharge current Idis is smaller than the second discharge threshold Tldis2, the flight control device 40 proceeds to step S607. In step S607, the flight control device 40 performs an inverter normality process. In the inverter normality process, notification is made that the inverter circuit 85 is normally driven, and the like. In the normal inverter circuit 85, both energization and cut-off of the discharge current Idis are normally performed by the arm switches 116, 117.

When the discharge current Idis is not smaller than the second discharge threshold Tldis2, the flight control device 40 proceeds to step S608. In step S608, the flight control device 40 performs an inverter abnormality process. In the inverter abnormality process, notification is made that the inverter circuit 85 is not normally driven, and the like. In the inverter circuit 85, when at least one of energization and cut-off of the discharge current Idis is not normally performed by the arm switches 116, 117, the inverter circuit 85 is not normal.

When the inverter cut-off process is performed in step S605, the smoothing capacitor 114 may be brought into a state where its discharge is stopped halfway. Therefore, the flight control device 40 may perform the inverter energization process again after determining whether the discharge current Idis is smaller than the second discharge threshold Tldis2. For example, after steps S607 and S608, the flight control device 40 may perform the inverter energization process until the discharge of the smoothing capacitor 114 is completed.

According to the present embodiment described so far, in the flight control device 40, when an abnormality occurs in the motor 61, the supply path 130 is cut off by at least one of the power-supply switch 86 and the arm switches 116, 117 in a mode corresponding to the state of the abnormality. In this configuration, by driving the arm switches 116, 117 so that the power-supply current Idc, which is an abnormal-time current, becomes small, it is possible to cause the power-supply switch 86 to cut off the power-supply current Idc in the reduced state. This makes it possible to suppress deterioration in the safety of the eVTOL 10 that would otherwise occur when the power-supply switch 86 cannot cut off the power-supply current Idc due to the power-supply current Idc being excessively large or the like. Therefore, the safety of the eVTOL 10 can be improved.

According to the present embodiment, the flight control device 40 cuts off the power-supply current Idc by the power-supply switch 86 after the timing at which the arm switches 116, 117 start reducing the power-supply current Idc. In this configuration, the power-supply current Idc in a state reduced by the arm switches 116, 117 can be cut off by the power-supply switch 86. Thus, for example, unlike the present embodiment, compared with a configuration in which the arm switches 116, 117 do not reduce the power-supply current Idc, the power-supply current Idc can be cut off by the power-supply switch 86 even when the weight of the power-supply switch 86 is reduced and the cut-off performance deteriorates. Therefore, the weight of the power-supply switch 86 can be reduced.

For example, unlike the present embodiment, a configuration is assumed in which the power-supply current Idc is cut off by the power-supply switch 86 in a state where the power-supply current Idc is not reduced by the arm switches 116, 117. In this configuration, since the power-supply switch 86 cuts off the power-supply current Idc while the current remains large, a burden on the power-supply switch 86 and the supply path 130 tends to be large at the time of cutting off the current.

In contrast, according to the present embodiment, the flight control device 40 cuts off the power-supply current Idc by the power-supply switch 86 after the power-supply current Idc is reduced by the arm switches 116, 117. In this configuration, it is not necessary for the power-supply switch 86 to cut off the power-supply current Idc while the current remains large. Thus, it is possible to reduce a burden on the power-supply switch 86 and the supply path 130 when the power-supply switch 86 cuts off the power-supply current Idc. That is, it is possible to avoid a risk that the power-supply switch 86 cuts off a large current. Moreover, since the power-supply current Idc is reduced by the arm switches 116, 117, arc discharge is less likely to occur when the power-supply switch 86 physically cuts off the supply path 130. This enables the power-supply switch 86 to reliably cut off the power-supply current Idc.

According to the present embodiment, the flight control device 40 cuts off the power-supply current Idc by the power-supply switch 86 after the inverter time Tinv reaches the inverter time threshold TTinv. In this configuration, even when a surge voltage is generated in association with a reduction in the power-supply current Idc by the arm switches 116, 117, the power-supply switch 86 can cut off the power-supply current Idc after waiting for the reduction of the surge voltage. Thus, when the power-supply switch 86 cuts off the power-supply current Idc, it is possible to suppress a burden on the power-supply switch 86 and the supply path 130 caused by a surge voltage. That is, it is possible to reduce a burden on the power-supply switch 86 and the supply path 130 when the power-supply switch 86 cuts off the power-supply current Idc.

For the propulsion device 100 mounted on the eVTOL 10, higher output and reduced weight are required because the eVTOL 10 is a manned flight vehicle. For example, in terms of higher output, an output of several tens of kilowatts to several hundreds of kilowatts is required for one propulsion device 100. Thus, in the propulsion device 100 mounted on the eVTOL 10, the voltage applied to the supply path 130 is increased, and the current flowing through the supply path 130 is increased to a higher current. In a manned flight vehicle such as the eVTOL 10, for example, compared with a small flight vehicle such as a drone, a high voltage tends to be applied to the supply path 130 and a large current tends to flow. Therefore, in the eVTOL 10, when the abnormal-time current is not reduced in the supply path 130 and is cut off by the power-supply switch 86, the surge current and the like tend to increase, and the influence on the control circuit and the like tend to increase.

In contrast, in the present embodiment, since the abnormal-time current in a state reduced by the inverter circuit 85 is cut off by the power-supply switch 86, the surge current and the like when the power-supply switch 86 cuts off the current tend to be reduced. Thus, the influence of the current cut-off by the power-supply switch 86 is less likely to affect the control circuit or the like.

According to the present embodiment, the flight control device 40 performs an inspection process for confirming that the power-supply switch 86 and the arm switches 116, 117 normally operate. In this configuration, when an abnormality related to the motor 61 occurs, the inverter cut-off process, the power-supply cut-off process, and the like can be performed on the assumption that the power-supply switch 86 and the arm switches 116, 117 normally operate. This makes it possible to suppress deterioration in the eVTOL 10 that would otherwise occur when the power-supply current Idc cannot be cut off.

According to the present embodiment, when the propulsion system 30 is to be activated in the ground inspection process, the flight control device 40 inspects the power-supply switch 86 and the arm switches 116, 117. In addition, the flight control device 40 inspects the power-supply switch 86 and the arm switches 116, 117 when a stop request is made to the EPU 50 as a discharge request in the discharge inspection process. For this reason, the power-supply switch 86 and the arm switches 116, 117 are repeatedly inspected each time the EPU 50 is started or stopped in driving. In this manner, the frequency of inspections of the power-supply switch 86 and the arm switches 116, 117 increases, thereby facilitating early detection of abnormalities in the power-supply switch 86 and the arm switches 116, 117. Therefore, the safety of the eVTOL 10 can be improved by inspecting various switches.

In the present embodiment, the plurality of propulsion devices 100 are electrically connected in parallel with the battery 31. In this configuration, when an abnormality related to the motor 61 occurs in at least one propulsion device 100, the sensor value may become an abnormal value even in the propulsion device 100 in which no abnormality related to the motor 61 has occurred, in addition to the propulsion device 100 in which an abnormality related to the motor 61 has occurred. In contrast, according to the present embodiment, when there are a plurality of propulsion devices 100 in which the sensor values indicate abnormal values, only the propulsion device 100 that is truly suspected of having failed is stopped. In this configuration, it is possible to avoid unnecessary impairment of the flight capability of the eVTOL 10 due to stopping of driving of the plurality of propulsion devices 100.

According to the present embodiment, both the arm switches 116, 117 and the power-supply switch 86 are provided on the supply path 130. In this configuration, when an abnormality related to the motor 61 occurs, the supply path 130 can be cut off by at least one of the arm switches 116, 117 and the power-supply switch 86 in a mode corresponding to the state of the abnormality. Therefore, as described above, the safety of the eVTOL 10 can be improved.

In the present embodiment, both the arm switches 116, 117 and the power-supply switch 86 can cut off the supply path 130. In this configuration, even when an abnormality occurs in one of the arm switches 116, 117 and the power-supply switch 86, the supply path 130 can be cut off by the other. Thus, when the arm switches 116, 117 and the power-supply switch 86 are safety devices for cutting off the supply path 130, redundancy of the safety devices can be ensured.

Further, in this configuration, when an abnormality related to the motor 61 occurs, the supply path 130 can be cut off by the arm switches 116, 117 and the power-supply switch 86 in a manner that prevents the abnormality from spreading to other components and equipment in the motor 61 and the propulsion system 30. Moreover, the supply path 130 can be cut off by the arm switches 116, 117 and the power-supply switch 86 in a manner that suppresses progression of the abnormality. Therefore, the arm switches 116, 117 and the power-supply switch 86 can suppress the spread and progression of the abnormality related to the motor 61.

In the present embodiment, the power-supply switch 86 has a mechanical contact. In this configuration, the supply path 130 is physically cut off by the power-supply switch 86. This makes it possible to realize a configuration in which an abnormal-time current flowing through the supply path 130 is reliably cut off by the power-supply switch 86. For example, when an abnormality such as welding occurs in the power-supply switch 86, there is a concern that the power-supply switch 86 cannot cut off the supply path 130. However, even in this case, in the present embodiment, the supply path 130 can be cut off by the arm switches 116, 117.

In the present embodiment, when an abnormality related to the motor 61 occurs, the arm switches 116, 117, each of which is a semiconductor switch, are cut off, and then the power-supply switch 86, which is a mechanical switch, is cut off. Thus, a burden on the power-supply switch 86 at the time of cutting off the power-supply current Idc can be reduced by the semiconductor switch. In the inverter circuit 85, the abnormal-time current can be cut off by the arm switches 116, 117 at a timing when the abnormal-time current decreases in each of the plurality of phases. Therefore, it is possible to reduce a burden on the arm switches 116, 117 when the abnormal-time current is cut off.

### <Second Embodiment>

In the second embodiment, in the power-supply cut-off process, after the abnormal-time current is reduced by the arm switches 116, 117, the abnormal-time current is cut off by the power-supply switch 86. Configurations, operations, and effects not specifically described in the second embodiment are the same as in the first embodiment. In the second embodiment, differences from the first embodiment will be mainly described.

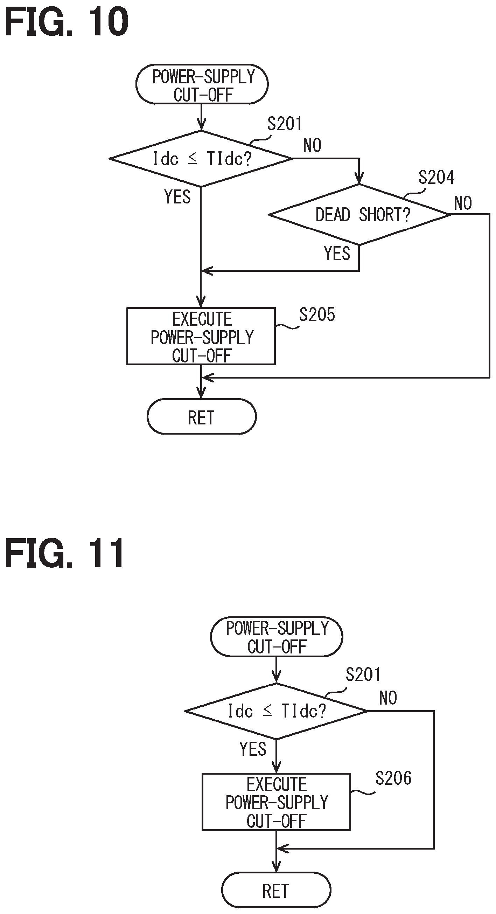

In the present embodiment, the power-supply cut-off process will be described with reference to the flowchart of FIG. 10. In step S201 illustrated in FIG. 10, the flight control device 40 determines whether the power-supply current Idc is equal to or less than the power-supply current threshold Tldc, as in the first embodiment. When the power-supply current Idc is equal to or less than the power-supply current threshold Tldc, the flight control device 40 proceeds to step S205 and performs the power-supply cut-off execution process as in step S203 of the first embodiment. The function of executing the process of step S205 in the flight control device 40 corresponds to the power-supply reduction cut-off unit.

When the power-supply current Idc is not equal to or less than the power-supply current threshold Tldc, the flight control device 40 proceeds to step S204. In step S204, the flight control device 40 determines whether a dead short has occurred in the supply path 130 as an EPU abnormality. For example, the flight control device 40 makes at least one of determination as to whether a motor current lac is equal to or less than a motor dead threshold, and determination as to whether the power-supply current Idc is equal to or more than a power-supply dead threshold. The motor current lac is an abnormal-time current flowing through the motor path 132. The flight control device 40 calculates the motor current lac using the detection result of the motor current sensor 122. The motor dead threshold and the power-supply dead threshold are values determined in advance by a test or the like, and are stored in the memory 43 or the like. The motor dead threshold and the power-supply dead threshold are set to values indicating that a dead short has occurred in the supply path 130.

When at least one of the motor current lac being equal to or smaller than the motor dead threshold and the power-supply current Idc being equal to or larger than the power-supply dead threshold is satisfied, the flight control device 40 determines that a dead short has occurred in the supply path 130. In this case, the flight control device 40 proceeds to step S205 and performs a power-supply cut-off execution process. In this case, even when the power-supply current Idc is not reduced despite the execution of the inverter cut-off process due to the occurrence of the dead short in the supply path 130, the power-supply path 131 is cut off by the power-supply switch 86. For this reason, in the propulsion system 30, the spread and progression of an abnormality due to the dead short are suppressed by the power-supply switch 86.

### <Third Embodiment>

In the first embodiment, when the power-supply switch 86 cuts off the abnormal-time current, determination is made as to whether the inverter time Tinv has reached the inverter time threshold TTinv. In contrast, in the third embodiment, when the power-supply path 131 is cut off by the power-supply switch 86, determination is not made as to whether the inverter time Tinv has reached the inverter time threshold TTinv. Configurations, operations, and effects not specifically described in the third embodiment are the same as in the first embodiment. In the third embodiment, differences from the first embodiment will be mainly described.

In the present embodiment, the power-supply cut-off process will be described with reference to the flowchart of FIG. 11. In step S201 illustrated in FIG. 11, the flight control device 40 determines whether the power-supply current Idc is equal to or less than the power-supply current threshold Tldc, as in the first embodiment. When the power-supply current Idc is equal to or less than the power-supply current threshold Tldc, the flight control device 40 proceeds to step S206 and performs the power-supply cut-off execution process as in step S203 of the first embodiment. The function of executing the process of step S206 in the flight control device 40 corresponds to the power-supply reduction cut-off unit. On the other hand, when the power-supply current Idc is not equal to or less than the power-supply current threshold Tldc, the flight control device 40 terminates the present power-supply cut-off process as is, regardless of the inverter time Tinv.

### <Fourth Embodiment>

In the first embodiment, when the abnormal-time current is cut off by the power-supply switch 86, determination is made as to whether the power-supply current Idc is equal to or less than the power-supply current threshold Tldc. In contrast, in the fourth embodiment, when the power-supply path 131 is cut off by the power-supply switch 86, determination is not made as to whether the power-supply current Idc is equal to or less than the power-supply current threshold Tldc. Configurations, operations, and effects not specifically described in the fourth embodiment are the same as in the first embodiment. In the fourth embodiment, differences from the first embodiment will be mainly described.

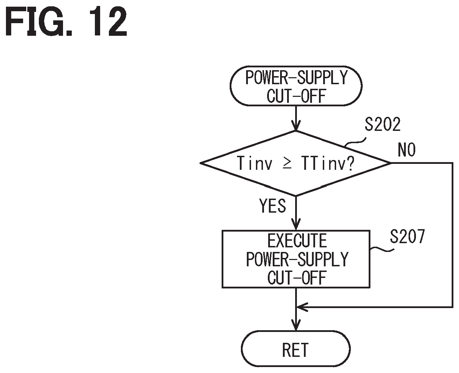

In the present embodiment, the power-supply cut-off process will be described with reference to the flowchart of FIG. 12. In step S202 illustrated in FIG. 12, the flight control device 40 determines whether the inverter time Tinv has reached the inverter time threshold TTinv, as in the first embodiment. When the inverter time Tinv has reached the inverter time threshold TTinv, the flight control device 40 proceeds to step S207 and performs the power-supply cut-off execution process as in step S203 of the first embodiment. The function of executing the process of step S207 in the flight control device 40 corresponds to the power-supply elapsed-time cut-off unit. On the other hand, when the inverter time Tinv has not reached the inverter time threshold TTinv, the flight control device 40 terminates the present power-supply cut-off process as is, regardless of an increase or a decrease in the power-supply current Idc.

### <Fifth Embodiment>

In the first embodiment, in the multiple-abnormality process, the multi-cut-off process is performed only for the first abnormal EPU among the first abnormal EPU and the second abnormal EPU. In the fifth embodiment, in the multiple-abnormality process, the multi-cut-off process is performed for both the first abnormal EPU and the second abnormal EPU. Configurations, operations, and effects not specifically described in the fifth embodiment are the same as in the first embodiment. In the fifth embodiment, differences from the first embodiment will be mainly described.

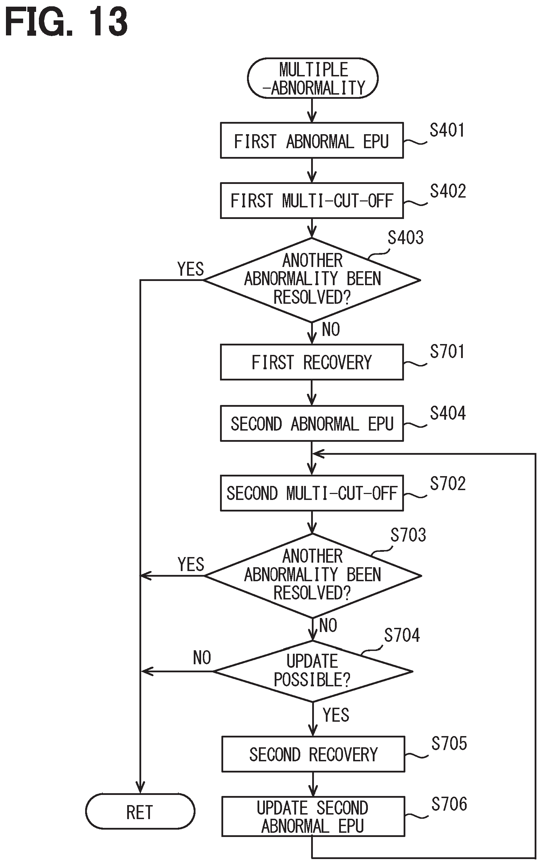

In the present embodiment, the multiple-abnormality process will be described with reference to the flowchart of FIG. 13. In steps S401 to S403 illustrated in FIG. 13, the flight control device 40 performs the same processes as in the first embodiment. In step S403, when the abnormality has not been resolved for another abnormal EPU, the flight control device 40 proceeds to step S701. The flight control device 40 assumes that the first abnormal EPU is an apparent abnormal EPU, and performs a first recovery process in step S701. In the first recovery process, a process for recovering the power-supply switch 86 to the energized state is performed for the first abnormal EPU. The flight control device 40 re-drives the motor 61 of the first abnormal EPU by, for example, performing the first recovery process.

In step S404, the flight control device 40 sets another abnormal EPU as a second abnormal EPU, as in the first embodiment. In the present embodiment, the flight control device 40 sets one abnormal EPU as the second abnormal EPU. For example, when there are a plurality of other abnormal EPUs different from the first abnormal EPU, the flight control device 40 sets the abnormal EPU having the highest degree of abnormality among the abnormal EPUs as the second abnormal EPU.

In step S702, the flight control device 40 performs a second multi-cut-off process. In the second multi-cut-off process, the multi-cut-off process is performed on the second abnormal EPU. In the second multi-cut-off process, the same process as the multi-cut-off process of the first embodiment is performed on the second abnormal EPU. The function of executing the process of step S702 in the flight control device 40 corresponds to the abnormality cut-off unit.

In step S703, the flight control device 40 determines whether the abnormality has been resolved for another abnormal EPU different from the second abnormal EPU. This determination is made using eVTOL information such as a sensor value for another abnormal EPU. When the abnormality has been resolved for another abnormal EPU, the flight control device 40 assumes that the second abnormal EPU is an apparently abnormal EPU, and terminates the present multiple-abnormality process as is.

When the abnormality is not resolved for another abnormal EPU different from the second abnormal EPU, the flight control device 40 determines that an EPU abnormality in a mode independent of the EPU abnormality in the second abnormal EPU has occurred in another abnormal EPU, and proceeds to step S704. In step S704, the flight control device 40 determines whether the second abnormal EPU can be updated. For example, when an abnormal EPU other than the second abnormal EPU exists, the flight control device 40 determines that the second abnormal EPU can be updated to another abnormal EPU, and proceeds to step S705. When no abnormal EPU other than the second abnormal EPU exists, determination is made that the second abnormal EPU cannot be updated, and the present multiple-abnormality process is terminated as is.

When the second abnormal EPU can be updated, the flight control device 40 proceeds to step S705 and performs a second recovery process. In the second recovery process, a process for recovering the power-supply switch 86 to the energized state is performed for the second abnormal EPU. The flight control device 40 re-drives the motor 61 of the second abnormal EPU by, for example, performing the second recovery process.

In step S706, the flight control device 40 updates the second abnormal EPU to another abnormal EPU. After step S706, the flight control device 40 returns to step S702. The flight control device 40 repeats the processes of steps S702 to S706 until another updatable abnormal EPU does not exist in the second abnormal EPUs. The absence of another updatable abnormal EPU in the second abnormal EPUs indicates that, for all the abnormal EPUs, determination has been made as to whether abnormalities in the other abnormal EPUs have been resolved by the multi-cut-off process. When the abnormality is not resolved for at least one abnormal EPU despite the absence of another updatable abnormal EPU in the second abnormal EPUs, the flight control device 40 may stop the driving of all the abnormal EPUs.

In the present embodiment, when abnormalities occur in a plurality of EPUs (a plurality of abnormal EPUs), the multi-cut-off process and the recovery process are sequentially performed one by one for the plurality of abnormal EPUs. In this case, there is a disadvantage that the abnormality in the eVTOL 10 is not resolved until confirmation is made that the abnormal EPU is not an apparently abnormal EPU. On the other hand, the EPU 50 finally confirmed to be an apparently abnormal EPU can be re-driven. Thus, only the driving of the abnormal EPU in which the EPU abnormality has actually occurred can be stopped. Therefore, even when the EPU abnormality occurs in the eVTOL 10, the influence of the EPU abnormality on the flight of the eVTOL 10 can be minimized.

### <Sixth Embodiment>

In the fifth embodiment, in the multiple-abnormality process, an apparently abnormal EPU among the plurality of abnormal EPUs is re-driven. In contrast, in the sixth embodiment, in the multiple-abnormality process, all the plurality of abnormal EPUs may not be re-driven. Configurations, operations, and effects not specifically described in the sixth embodiment are the same as in the first embodiment. In the sixth embodiment, the differences from the first embodiment will be mainly described.

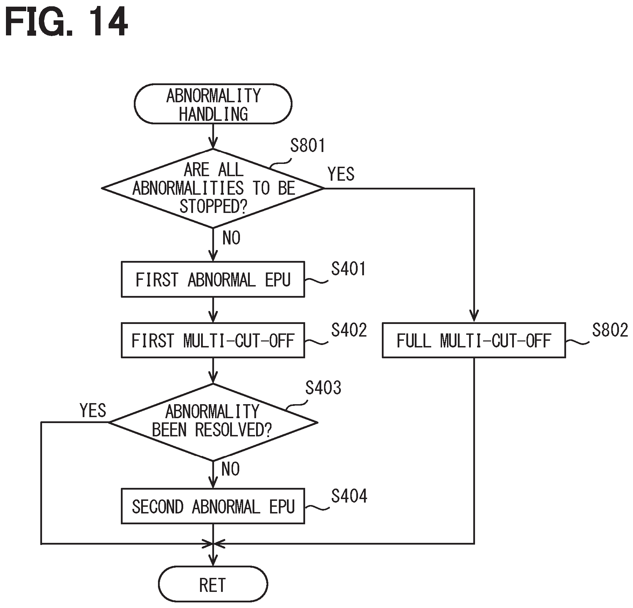

In the present embodiment, the multiple-abnormality process will be described with reference to the flowchart of FIG. 14. In step S801 illustrated in FIG. 14, the flight control device 40 determines whether to stop the driving of all the abnormal EPUs. The flight control device 40 determines whether to stop the driving of all the abnormal EPUs in accordance with the state of the EPU abnormality. For example, when the EPU abnormality includes a dead short in the supply path 130 in at least one abnormal EPU, determination is made that the EPU abnormality is an abnormality at a very high level, and the driving of all the abnormal EPUs is stopped.

On the other hand, when the EPU abnormality includes no dead short in the supply path 130 in at least one abnormal EPU, determination is made that it is not necessary to stop the driving of all the abnormal EPUs. When it is not necessary to stop the driving of all the abnormal EPUs, the flight control device 40 performs the processes of steps S401 to S404, as in the first embodiment.

When the driving of all the abnormal EPUs is to be stopped, the flight control device 40 proceeds to step S802. In step S802, the flight control device 40 performs a full multi-cut-off process. In the full multi-cut-off process, a process for stopping the driving of all the abnormal EPUs is performed. In the full multi-cut-off process, the same processes as in steps S106 to S109 of the first embodiment are performed for all the abnormal EPUs. The function of executing the process of step S802 in the flight control device 40 corresponds to the abnormality cut-off unit.

In the present embodiment, when abnormalities occur in a plurality of EPUs (a plurality of abnormal EPUs), the driving of all the abnormal EPUs is stopped. In this configuration, when an abnormality at a very high level such as a dead short occurs as the EPU abnormality, the spread and progression of the EPU abnormality can be suppressed by stopping the driving of all the abnormal EPUs. As described above, when an EPU abnormality occurs in which an excessively high level of voltage or current may be detected due to a dead short or the like, it is preferable to quickly resolve the EPU abnormality by, for example, quickly stopping the EPU 50 suspected of having an abnormality.

On the other hand, when there is a low possibility that the safety of the eVTOL 10 is rapidly lowered even if the EPU abnormality continues for a certain period of time, for example, when a dead short is not included in the EPU abnormality, it is preferable to specify the abnormal EPU in which the EPU abnormality has actually occurred. It is reasonable to stop the driving of only the abnormal EPU in which the EPU abnormality has actually occurred, such as the first abnormal EPU, in order to ensure the safety of the eVTOL 10.

### <Seventh Embodiment>

In the seventh embodiment, a motor switch is provided on the supply path between the power conversion unit and the motor. Configurations, operations, and effects not specifically described in the seventh embodiment are the same as in the first embodiment. In the seventh embodiment, differences from the first embodiment will be mainly described.

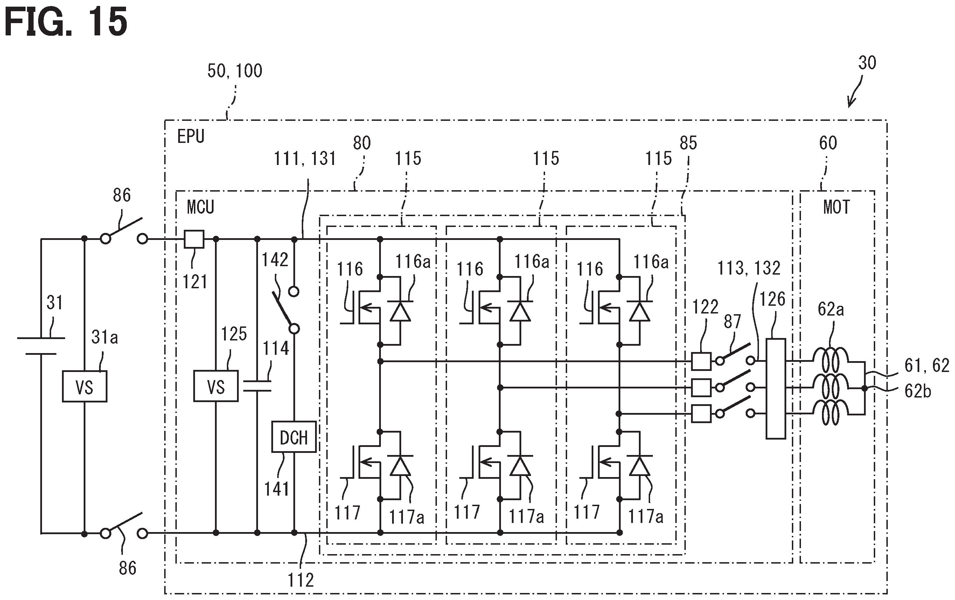

As illustrated in FIG. 15, the propulsion system 30 includes a motor switch 87. The motor switch 87 is provided in each of the plurality of propulsion devices 100. For example, the motor switch 87 is included in the inverter device 80. The motor switch 87 includes a mechanical switch or a mechanical relay having a mechanical contact. The motor switch 87 can transition between the energized state and the cut-off state. In the motor switch 87, the energized state may be referred to as a closed state, and the cut-off state may be referred to as an open state. The motor switch 87 may be included in the motor device 60 or may be provided independently of the propulsion device 100.

The motor switch 87 is provided on the supply path 130 between the inverter circuit 85 and the motor 61. The motor switch 87 can cut off the supply path 130. The motor switch 87 can cut off a current flowing through the supply path 130. The motor switch 87 is provided on the motor path 132. The motor switch 87 can cut off the motor path 132. The motor switch 87 can cut off a current flowing through the motor path 132. The motor switch 87 can cut off an AC current, and may be referred to as an AC switch. The motor switch 87 is provided on at least one of the output lines 113 of the plurality of phases in the motor path 132. For example, the motor switch 87 is provided on each of the output lines 113 of the plurality of phases.

Examples of the current that can be cut off by the motor switch 87 include a motoring current, a regenerative current, and an abnormal-time current. For example, when regenerative power is generated in the motor 61, a regenerative current may flow to the power-supply path 131 side through the motor switch 87, the arm switches 116, 117, the power-supply switch 86, and the like. In this case, even when the arm switches 116, 117 are in the cut-off state, the regenerative current may flow to the power-supply path 131 side through the arm diodes 116a, 117a. In contrast, when the motor path 132 is cut off by the motor switch 87, the regenerative current is prevented from flowing toward the arm diodes 116a, 117a by the motor switch 87.

The propulsion system 30 includes a discharge circuit 141 and a discharge switch 142. The discharge circuit 141 and the discharge switch 142 are provided in each of the plurality of propulsion devices 100. For example, the discharge circuit 141 and the discharge switch 142 are included in the inverter device 80. The discharge circuit 141 and the discharge switch 142 are provided with respect to the smoothing capacitor 114. The discharge circuit 141 and the discharge switch 142 may be provided independently of the inverter device 80 and the propulsion device 100.

The discharge circuit 141 is a circuit for discharging residual power of the smoothing capacitor 114. The discharge circuit 141 includes a resistive element, a capacitor element, and the like. The discharge circuit 141 is a dedicated circuit for discharging the smoothing capacitor 114. The discharge circuit 141 can discharge residual power remaining in the supply path 130. The discharge circuit 141 is connected to the smoothing capacitor 114 so as to allow energization. The discharge circuit 141 is provided on the power-supply path 131 between the inverter circuit 85 and the smoothing capacitor 114. The discharge circuit 141 is connected in parallel with the smoothing capacitor 114 with respect to the battery 31. In FIG. 15, the discharge circuit 141 is illustrated as a DCH.

The discharge switch 142 is connected in series with the discharge circuit 141. The discharge switch 142 is formed of a semiconductor switch or the like. The discharge switch 142 can transition between the energized state and the cut-off state. When in an energized state, the discharge switch 142 can allow a discharge current from the smoothing capacitor 114 to flow to the discharge circuit 141.

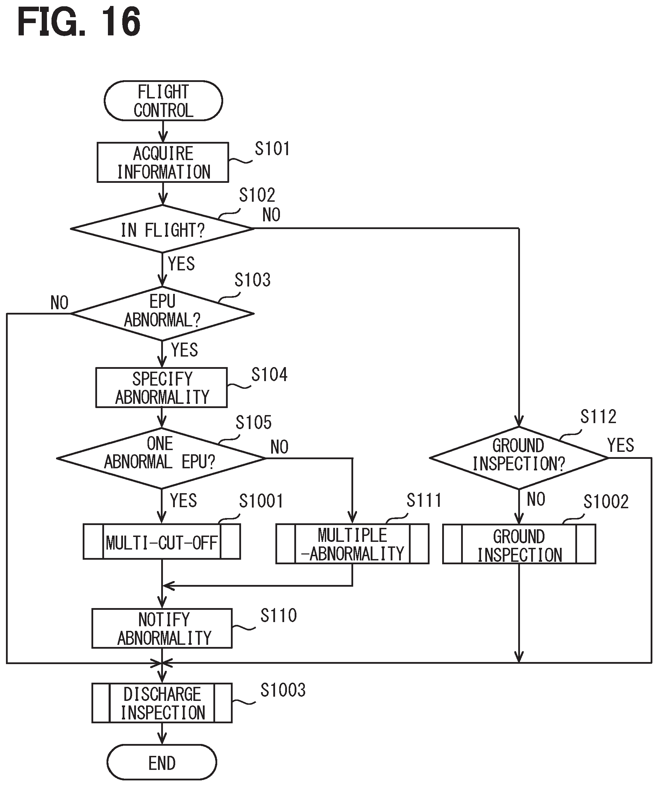

In the present embodiment, the flight control process will be described with reference to the flowchart of FIG. 16. In steps S101 to S105 and S110 to S112 illustrated in FIG. 16, the flight control device 40 performs the same processes as in the first embodiment.

In step S105, when the number of abnormal EPUs is one, the flight control device 40 proceeds to step S1001 and performs the multi-cut-off process. In the multi-cut-off process, the supply path 130 is cut off by a plurality of switches such as the power-supply switch 86, the arm switches 116, 117, and the motor switch 87. The flight control device 40 cuts off the supply path 130 by at least one of the power-supply switch 86, the arm switches 116, 117, and the motor switch 87. Further, the flight control device 40 cuts off the supply path 130 by at least one of the power-supply switch 86 and the arm switches 116, 117. The function of executing the process of step S1001 in the flight control device 40 corresponds to a selective cut-off unit.

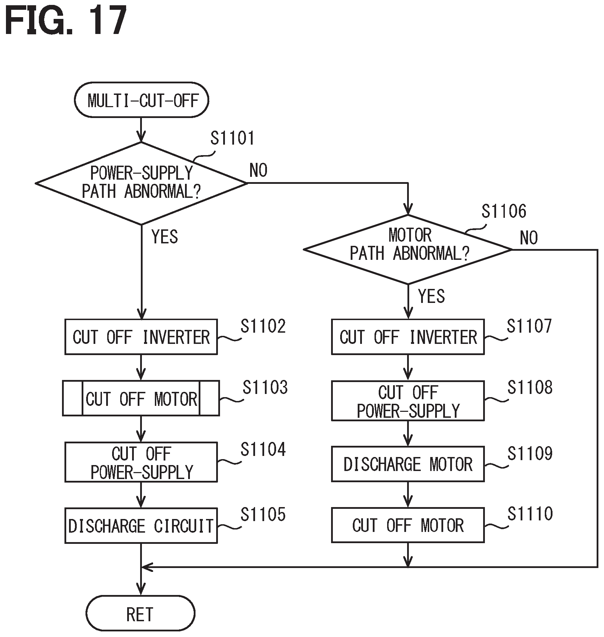

The multi-cut-off process will be described with reference to the flowchart of FIG. 17. In step S1101 of the multi-cut-off process, the flight control device 40 determines whether an abnormality related to the power-supply path 131 has occurred as an EPU abnormality. Examples of an abnormality related to the power-supply path 131 include a short circuit and a ground fault in the power-supply path 131. Examples of a short circuit in the power-supply path 131 include short circuits in the battery 31, the smoothing capacitor 114, a filter circuit, and the like.

The flight control device 40 uses the sensor values of the battery voltage sensor 31a, the power-supply voltage sensor 125, and the power-supply current sensor 121 to determine whether an abnormality related to the power-supply path 131 has occurred. Examples of the case where a short circuit has occurred in the power-supply path 131 include a case where an overcurrent in the power-supply path 131 has been detected by the sensor value of the power-supply current sensor 121 and a case where a low voltage in the power-supply path 131 has been detected by the sensor values of the voltage sensors 31a, 125.

When an abnormality related to the power-supply path 131 has occurred, the flight control device 40 performs a power-supply multi-cut-off process in steps S1102 to S1105. In the power-supply multi-cut-off process, the supply path 130 is cut off at a plurality of places. When an abnormality related to the power-supply path 131 occurs, there is a concern that, for an abnormal-time current, the possibility that the power-supply current Idc becomes an overcurrent is higher than the possibility that the motor current lac becomes an overcurrent. For example, when a dead short occurs in the power-supply path 131, there is a concern that the power-supply current Idc may flow to the P-line 111 or the N-line 112 as a large current. In contrast, in the power-supply multi-cut-off process, the inverter circuit 85 and the motor switch 87 are switched to the cut-off state so that the power-supply current Idc is reduced. In the power-supply multi-cut-off process, after the motor path 132 is cut off by the motor switch 87, the power-supply path 131 is cut off by the power-supply switch 86. The function of executing the processes of steps S1102 to S1105 in the flight control device 40 corresponds to a subsequent power-supply cut-off unit.

In step S1102 of the power-supply multi-cut-off process, the flight control device 40 performs the inverter cut-off process as in step S106 of the first embodiment. The function of executing the process of step S1102 in the flight control device 40 corresponds to the current reduction unit and the selective reduction unit.

In step S1103, the flight control device 40 performs a motor cut-off process. In the motor cut-off process, a process for executing motor cut-off is performed. The motor cut-off is to cut off the motor path 132 by the motor switch 87. By performing the motor cut-off process after the inverter cut-off process, the flight control device 40 cuts off the abnormal-time current by the motor switch 87 after the timing at which the inverter circuit 85 starts reducing the abnormal-time current. The function of executing the process of step S1103 in the flight control device 40 corresponds to a motor cut-off unit.

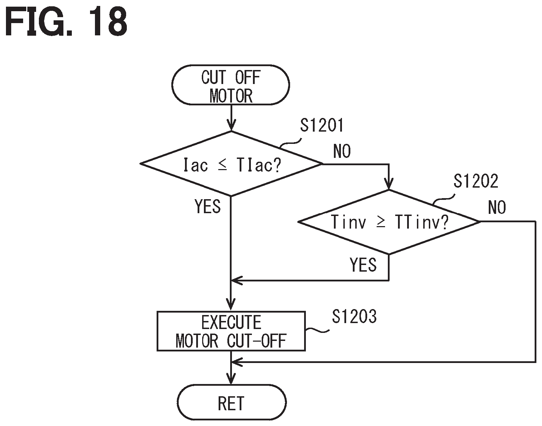

The motor cut-off process will be described with reference to the flowchart of FIG. 18. In step S1201 illustrated in FIG. 18, the flight control device 40 determines whether the motor current lac is equal to or less than a motor current threshold Tlac. The motor current threshold Tlac is stored in the memory 43 or the like, which is a value determined in advance by a test or the like. The motor current threshold Tlac is set to a value of a current that can be cut off by the motor switch 87. For example, the motor current threshold Tlac is set to a value corresponding to the rated current of the motor switch 87.

When the motor current lac, which is an abnormal-time current, is reduced to the motor current threshold Tlac by the motor cut-off process, the flight control device 40 proceeds to step S1203. In step S1203, the flight control device 40 performs a motor cut-off execution process. In the motor cut-off execution process, the motor switch 87 is switched to the cut-off state. The flight control device 40 cuts off the motor current lac by the motor switch 87 after the motor current lac is reduced by the inverter cut-off process. The function of executing the process of step S1203 in the flight control device 40 corresponds to a motor reduction cut-off unit.

For example, unlike the present embodiment, a comparative example is assumed in which the flight control device 40 performs a motor cut-off execution process without performing the inverter cut-off process. In this comparative example, a situation is likely to occur in which the motor switch 87 cuts off the motor current lac in a state where the motor current lac, which is an abnormal-time current, is larger than the motor current threshold Tlac. In this situation, even when the motor switch 87 is switched to the cut-off state, there is a concern that the motor current lac is not cut off due to, for example, generation of arc discharge in the motor switch 87. In contrast, in the present embodiment, since the motor current lac is reduced to the motor current threshold Tlac, the motor current lac tends to be cut off by the motor switch 87.

When the motor current lac is not equal to or less than the motor current threshold Tlac, the flight control device 40 proceeds to step S1202 and determines whether the inverter time Tinv has reached the inverter time threshold TTinv, as in step S202 of the first embodiment.

When the inverter time Tinv has reached the inverter time threshold TTinv, the flight control device 40 proceeds to step S1203 and performs a motor cut-off execution process. When the inverter time Tinv has reached the inverter time threshold TTinv, the flight control device 40 cuts off the motor current lac by the motor switch 87. The function of executing the process of step S1203 in the flight control device 40 corresponds to a motor elapsed-time cut-off unit.

For example, unlike the present embodiment, a comparative example is assumed in which the flight control device 40 performs a motor cut-off execution process without waiting after the inverter cut-off process. In this comparative example, a situation is likely to occur in which the motor switch 87 cuts off the abnormal-time current in a state where the surge voltage generated in association with the inverter circuit 85 cutting off the abnormal-time current is large. In this situation, when the motor switch 87 is switched to the cut-off state, there is a concern that an abnormality may occur in the motor switch 87 due to, for example, damage to the motor switch 87 caused by the surge voltage. In contrast, in the present embodiment, since the motor switch 87 cuts off the abnormal-time current with the surge voltage in the reduced state, an abnormality is unlikely to occur in the motor switch 87 due to the surge voltage.

Returning to FIG. 17, in step S1104, the flight control device 40 performs the power-supply cut-off process as in step S108 of the first embodiment. The function of executing the process of step S1104 in the flight control device 40 corresponds to the power-supply cut-off unit.

In step S1105, the flight control device 40 performs a circuit discharge process. The circuit discharge process is a process for discharging residual power of the smoothing capacitor 114 to the discharge circuit 141. In the smoothing capacitor 114, residual electric charge flows to the discharge circuit 141 as a discharge current, whereby the residual power is discharged in the discharge circuit 141. The flight control device 40 switches the discharge switch 142 to the energized state so that the discharge current flows through the discharge circuit 141. In the circuit discharge process, the residual power remaining in the supply path 130 is discharged by the discharge circuit 141.

In step S1101, when no abnormality related to the power-supply path 131 has occurred, the flight control device 40 proceeds to step S1106. In step S1106, the flight control device 40 determines whether an abnormality related to the motor path 132 has occurred as an EPU abnormality. Examples of an abnormality related to the motor path 132 include a short circuit and a ground fault in the motor path 132. Examples of a short circuit in the motor path 132 include short circuits in the inverter circuit 85 and the motor 61.

The flight control device 40 uses the sensor values of the motor voltage sensor 126 and the motor current sensor 122 to determine whether an abnormality related to the motor path 132 has occurred. Examples of the case where a short circuit has occurred in the motor path 132 include a case where an overcurrent in the motor path 132 is detected by the sensor value of the motor current sensor 122 and a case where a low voltage in the motor path 132 is detected by the sensor value of the motor voltage sensor 126.

When an abnormality related to the motor path 132 has occurred, the flight control device 40 performs a motor multi-cut-off process in steps S1107 to S1110. In the motor multi-cut-off process, the supply path 130 is cut off at a plurality of places. When an abnormality related to the motor path 132 occurs, there is a concern that, for the abnormal-time current, the possibility that the motor current lac becomes an overcurrent becomes higher than the possibility that the power-supply current Idc becomes an overcurrent. For example, when a dead short occurs in the motor path 132, there is a concern that the motor current lac flows to the output line 113 as a large current. In contrast, in the motor multi-cut-off process, the inverter circuit 85 and the power-supply switch 86 are switched to the cut-off state so that the motor current lac is reduced. In the motor multi-cut-off process, after the power-supply path 131 is cut off by the power-supply switch 86, the motor path 132 is cut off by the motor switch 87. The function of executing the processes of steps S1107 to S1110 in the flight control device 40 corresponds to a subsequent motor cut-off unit.

The flight control device 40 performs the inverter cut-off process in step S1107 of the motor multi-cut-off process as in step S1102 described above. The function of executing the process of step S1107 in the flight control device 40 corresponds to the current reduction unit and the selective reduction unit.

In step S1108, the flight control device 40 performs the power-supply cut-off process as in step S1104 described above. The function of executing the process of step S1108 in the flight control device 40 corresponds to the power-supply cut-off unit.

In step S1109, the flight control device 40 performs the motor discharge process as in step S603 of the first embodiment. In step S1110, the flight control device 40 performs the motor cut-off process as in step S1103 described above. The function of executing the process of step S1110 in the flight control device 40 corresponds to the motor cut-off unit. When the motor discharge process is completed after the inverter cut-off process, a surge voltage is less likely to occur when the motor cut-off process is performed. Thus, in this motor cut-off process, the standby determination in step S1202 may not be made.

Returning to FIG. 16, after step S1001, the flight control device 40 proceeds to step S110 and performs the abnormality notification process. In this abnormality notification process, the occurrence of an abnormality related to the power-supply path 131, the occurrence of an abnormality in the motor path 132, and the like are notified as the EPU abnormality. When there are a plurality of abnormal EPUs, the flight control device 40 may perform the multi-cut-off process of step S1001 as the multi-cut-off process for the first abnormal EPU in step S111.

In steps S102 and S112, when the eVTOL 10 is not in flight and the ground inspection is to be performed, the flight control device 40 proceeds to step S1002. In step S1002, the flight control device 40 performs the ground inspection process. In the ground inspection process, confirmation is made that the motor switch 87 normally operates in addition to that the power-supply switch 86 and the arm switches 116, 117 normally operate. The function of executing the process of step S1002 in the flight control device 40 corresponds to the switch inspection unit.

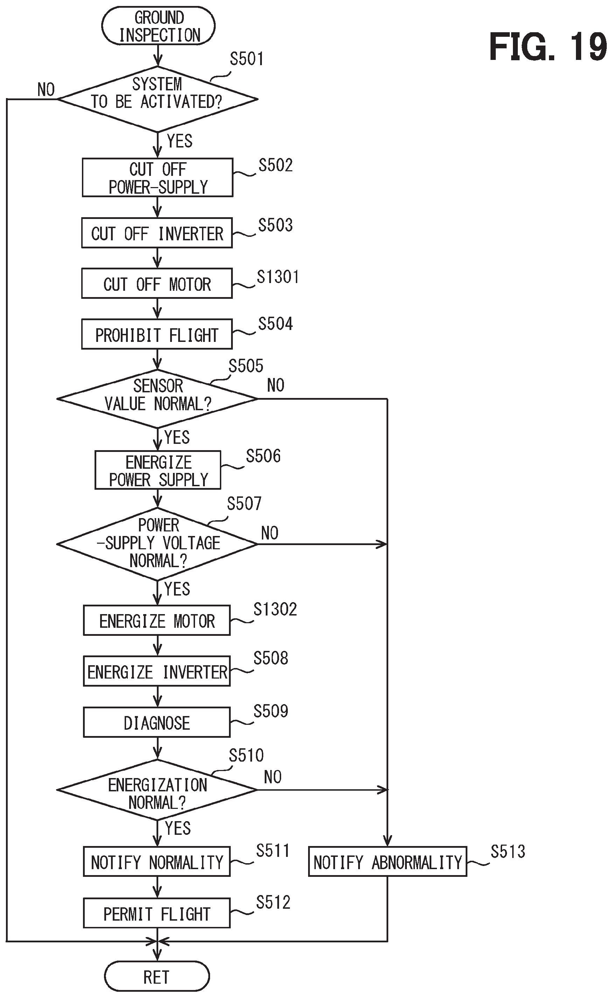

The ground inspection process will be described with reference to the flowchart of FIG. 19. The flight control device 40 performs the processes of steps S501 to S513 in the ground inspection process, as in the first embodiment. In steps S502, S503, and S1301, the flight control device 40 sets the supply path 130 to the initial state. In step S1301, the flight control device 40 sets the motor switch 87 to the cut-off state. When the power-supply voltage is normal in step S507, the flight control device 40 proceeds to step S1302 and switches the motor switch 87 to the energized state. Accordingly, the flight control device 40 can confirm that the motor switch 87 normally shifts from the cut-off state to the energized state. After step S1302, the flight control device 40 performs the inverter energization process in step S508.

The flight control device 40 may confirm whether the motor switch 87 can normally cut off the current flowing through the motor path 132. For example, after the motor energization process in step S1302 and the inverter energization process in step S508, the motor cut-off process in step S1301 and the normality determination of the sensor value in step S505 may be made again. When the sensor value is determined to be normal in step S505, confirmation is made that the motor switch 87 can normally cut off the current.

In the normality notification process in step S511, the flight control device 40 notifies that the motor switch 87 normally operates in addition to notifying that the power-supply switch 86 and the inverter circuit 85 normally operate. Further, in the abnormality notification process in step S513, the flight control device 40 can notify that the motor switch 87 does not normally operate in addition to notifying that the power-supply switch 86 and the inverter circuit 85 do not normally operate.

Returning to FIG. 16, the flight control device 40 proceeds to step S1003 after steps S101 to S105, S110 to S112, S1001, and S1002. In step S1003, the flight control device 40 performs the discharge inspection process. In the discharge inspection process, by using the discharge of the smoothing capacitor 114, confirmation is made that the motor switch 87 normally operates in addition to notification made that the power-supply switch 86 and the arm switches 116, 117 normally operate. The function of executing the process of step S1003 in the flight control device 40 corresponds to the switch inspection unit.

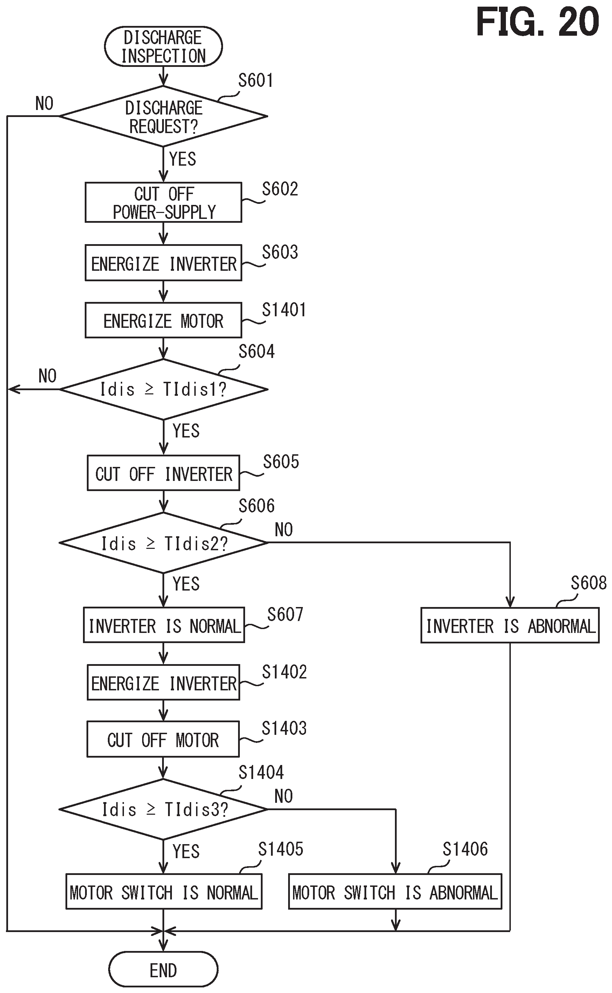

The discharge inspection process will be described with reference to the flowchart of FIG. 20. In the discharge inspection process, the flight control device 40 performs the processes of steps S601 to S608, as in the first embodiment. After step S603, the flight control device 40 proceeds to step S1401 and performs the motor energization process. In the motor energization process, a process for switching the motor switch 87 to the energized state is performed. In steps S603 and S1401, the flight control device 40 drives the inverter circuit 85 and the motor switch 87 so that the residual power of the smoothing capacitor 114 is discharged to the motor 61 via the inverter circuit 85 and the motor switch 87. This allows the discharge current to flow through the inverter circuit 85 and the motor switch 87.

After step S607, the flight control device 40 performs a process for confirming that the motor switch 87 normally operates in steps S1402 to S1406. In step S1402, the flight control device 40 performs the inverter energization process as in step S603 described above. In step S1403, the flight control device 40 performs the motor cut-off process as in step S1103 described above.

In the supply path 130, the inverter circuit 85 is switched to the energized state in step S1402, whereby motor discharge is performed on the smoothing capacitor 114. However, since the motor switch 87 cuts off the motor path 132 in step S1403, the motor discharge is stopped by the motor switch 87. That is, the discharge current is cut off by the motor switch 87.

In step S1404, the flight control device 40 determines whether the discharge current Idis is smaller than a third discharge threshold Tldis3. The third discharge threshold Tldis3 is a value determined in advance by a test or the like, and is stored in the memory 43 or the like. The third discharge threshold Tldis3 is set to a value indicating that the motor discharge has been stopped by the motor switch 87. When the discharge current Idis becomes smaller than the third discharge threshold Tldis3 as a result of the motor cut-off process, the flight control device 40 determines that the motor switch 87 has normally cut off the discharge current Idis. On the other hand, when the discharge current Idis does not become smaller than the third discharge threshold Tldis3 even though the motor cut-off process has been performed, the flight control device 40 determines that the motor switch 87 has not been able to cut off the discharge current Idis.

When the discharge current Idis is smaller than the third discharge threshold Tldis3, the flight control device 40 proceeds to step S1405. In step S1405, the flight control device 40 performs a motor switch normality process. In the motor switch normality process, notification is made that the motor switch 87 is normally operated, and the like. In the normal motor switch 87, both energization and cut-off of the discharge current Idis are normally performed.

When the discharge current Idis is not smaller than the third discharge threshold Tldis3, the flight control device 40 proceeds to step S1406. In step S1406, the flight control device 40 performs a motor switch abnormality process. In the motor switch abnormality process, notification is made that the motor switch 87 is not normally driven, and the like. In the motor switch 87, when at least one of energization and cut-off of the discharge current Idis is not normally performed, the motor switch 87 is not normal.

When the motor cut-off process is performed in step S1403, the smoothing capacitor 114 may be brought into a state where its discharge is stopped halfway. Therefore, the flight control device 40 may perform the motor energization process again after determining whether the discharge current Idis is smaller than the third discharge threshold Tldis3. For example, after steps S1405 and S1406, the flight control device 40 may perform the motor energization process until the discharge of the smoothing capacitor 114 is completed.

According to the present embodiment, in the flight control device 40, when an abnormality related to the motor 61 occurs, the supply path 130 is cut off by at least one of the power-supply switch 86, the arm switches 116, 117, and the motor switch 87 in a mode corresponding to the state of the abnormality. In this configuration, by driving the arm switches 116, 117 so that the power-supply current Idc and the motor current lac become small, it is possible to cause the power-supply switch 86 and the motor switch 87 to cut off the power-supply current Idc and the motor current lac in the reduced state. This makes it possible to suppress deterioration in the safety of the eVTOL 10 that would otherwise occur when the power-supply switch 86 or the motor switch 87 cannot cut off the power-supply current Idc or the motor current lac due to the power-supply current Idc or the motor current lac being excessively large or the like.

According to the present embodiment, the flight control device 40 cuts off the motor current lac by the motor switch 87 after the timing at which the arm switches 116, 117 start reducing the motor current lac. In this configuration, the motor current lac in a state reduced by the arm switches 116, 117 can be cut off by the motor switch 87. Thus, for example, unlike the present embodiment, compared with a configuration in which the arm switches 116, 117 do not reduce the motor current lac, the motor current lac can be cut off by the motor switch 87 even when the motor switch 87 is reduced in weight and the breaking performance deteriorates. Therefore, the weight of the motor switch 87 can be reduced.

For example, unlike the present embodiment, a configuration is assumed in which the motor current lac is cut off by the motor switch 87 in a state where the motor current lac is not reduced by the arm switches 116, 117. In this configuration, since the motor switch 87 cuts off the motor current lac while the current remains large, a burden on the motor switch 87 and the supply path 130 tends to be large at the time of cutting off the current.

In contrast, according to the present embodiment, the flight control device 40 cuts off the motor current lac by the motor switch 87 after the motor current lac is reduced by the arm switches 116, 117. In this configuration, it is not necessary for the motor switch 87 to cut off the motor current lac while the current remains large. Thus, it is possible to reduce a burden on the motor switch 87 and the supply path 130 when the motor switch 87 cuts off the motor current lac. That is, it is possible to avoid a risk that the motor switch 87 cuts off a large current. Moreover, since the motor current lac is reduced by the arm switches 116, 117, arc discharge is less likely to occur when the motor switch 87 physically cuts off the supply path 130. This enables the motor switch 87 to reliably cut off the motor current lac.

According to the present embodiment, the flight control device 40 cuts off the motor current lac by the motor switch 87 after the inverter time Tinv reaches the inverter time threshold TTinv. In this configuration, even when a surge voltage is generated in association with a reduction in the motor current lac by the arm switches 116, 117, the motor switch 87 can cut off the motor current lac after waiting for the reduction of the surge voltage. Thus, when the motor switch 87 cuts off the motor current lac, it is possible to suppress a burden on the motor switch 87 and the supply path 130 due to a surge voltage. That is, in the power-supply switch 86 and the supply path 130, it is possible to reduce a burden when the motor switch 87 cuts off the motor current lac.

According to the present embodiment, when an abnormality related to the power-supply path 131 occurs, the flight control device 40 cuts off the power-supply path 131 by the power-supply switch 86 after cutting off the motor path 132 by the motor switch 87. In this configuration, the power-supply current Idc in a state reduced by the motor switch 87 can be cut off by the power-supply switch 86. As described above, the weight reduction of the power-supply switch 86 can be realized by adjusting the relative cut-off timing between the power-supply switch 86 and the motor switch 87.

When an abnormality related to the power-supply path 131 occurs, there is a concern that the abnormal-time current flowing through the power-supply path 131 increases compared with a case where an abnormality related to the motor path 132 occurs. Thus, when an abnormality related to the power-supply path 131 occurs, from the viewpoint of reliably cutting off the power-supply current Idc by the power-supply switch 86, it is preferable to cut off the motor current lac by the motor switch 87 at a timing when the power-supply current Idc is likely to be reduced. In addition, from the viewpoint of reliably cutting off the abnormal-time current in the supply path 130, it is preferable to first cut off the switch closer to a place where an abnormality such as a short circuit has occurred, among the power-supply switch 86 and the motor switch 87.

According to the present embodiment, when an abnormality related to the motor path 132 occurs, the flight control device 40 cuts off the power-supply path 131 by the power-supply switch 86, and then cuts off the motor path 132 in the motor switch 87. In this configuration, the motor current lac in a state reduced by the power-supply switch 86 can be cut off by the motor switch 87. As described above, the weight of the motor switch 87 can be reduced by adjusting the relative cut-off timing between the motor switch 87 and the power-supply switch 86.

When an abnormality related to the motor path 132 occurs, there is a concern that the abnormal-time current flowing through the motor path 132 increases compared with a case where an abnormality related to the power-supply path 131 occurs. Thus, when an abnormality related to the motor path 132 occurs, from the viewpoint of reliably cutting off the motor current lac by the motor switch 87, it is preferable to cut off the power-supply current Idc by the power-supply switch 86 at a timing when the motor current lac tends to be reduced.

According to the present embodiment, the motor switch 87 is provided on the supply path 130 between the inverter circuit 85 and the motor 61. In this configuration, when an abnormality occurs in the motor path 132, the spread and progression of the abnormality in the abnormal EPU can be suppressed by the motor switch 87. For example, even when a coil short circuit or the like occurs as an abnormality related to the motor 61, the motor switch 87 can suppress the influence of the abnormality extending to the power-supply path 131 side.

In the present embodiment, the arm switches 116, 117, the power-supply switch 86, and the motor switch 87 can individually cut off the supply path 130. In this configuration, even when an abnormality occurs in any of the arm switches 116, 117, the power-supply switch 86, and the motor switch 87, the supply path 130 can be cut off by the switch in which no abnormality has occurred. Therefore, it is possible to ensure the redundancy of the safety devices such as the arm switches 116, 117, the power-supply switch 86, and the motor switch 87.

In the present embodiment, the motor switch 87 has a mechanical contact. In this configuration, the supply path 130 is physically cut off by the motor switch 87. Thus, it is possible to realize a configuration in which an abnormal-time current flowing through the supply path 130 is reliably cut off by the motor switch 87. In the present embodiment, even when an abnormality such as welding occurs in the motor switch 87, the supply path 130 can be cut off by the arm switches 116, 117.

In the present embodiment, when an abnormality related to the motor 61 occurs, the arm switches 116, 117, each of which is a semiconductor switch, are cut off, and then the motor switch 87, which is a mechanical switch, is cut off. Thus, a burden on the motor switch 87 when the motor current lac is cut off can be reduced by the semiconductor switch.

### <Eighth Embodiment>

In the seventh embodiment, determination is made as to whether the inverter time Tinv has reached the inverter time threshold TTinv when the abnormal-time current is cut off by the motor switch 87. In contrast, in the eighth embodiment, when the power-supply path 131 is cut off by the motor switch 87, determination is not made as to whether the inverter time Tinv has reached the inverter time threshold TTinv. Configurations, operations, and effects not specifically described in the eighth embodiment are the same as in the seventh embodiment. In the eighth embodiment, differences from the seventh embodiment will be mainly described.

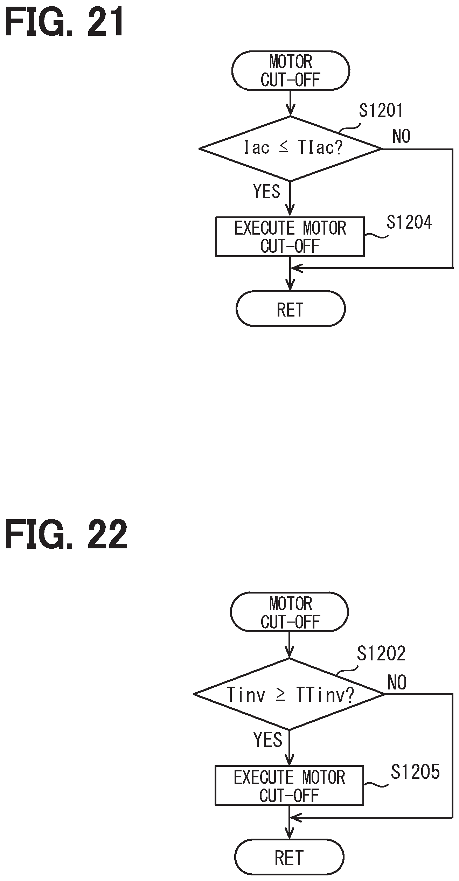

In the present embodiment, the power-supply cut-off process will be described with reference to the flowchart of FIG. 21. In step S1201 illustrated in FIG. 21, the flight control device 40 determines whether the motor current lac is equal to or less than the motor current threshold Tlac, as in the seventh embodiment. When the motor current lac is equal to or less than the motor current threshold Tlac, the flight control device 40 proceeds to step S1204 and performs the motor cut-off execution process as in step S1203 of the seventh embodiment. The function of executing the process of step S1204 in the flight control device 40 corresponds to the motor reduction cut-off unit. On the other hand, when the motor current lac is not equal to or less than the motor current threshold Tlac, the flight control device 40 terminates the present power-supply cut-off process as is, regardless of the inverter time Tinv.

### <Ninth Embodiment>

In the seventh embodiment, when the abnormal-time current is cut off by the motor switch 87, determination is made as to whether the motor current lac is equal to or less than the motor current threshold Tlac. In contrast, in the ninth embodiment, when the motor switch 87 cuts off the motor path 132, determination is not made as to whether the motor current lac is equal to or less than the motor current threshold Tlac. Configurations, operations, and effects not specifically described in the ninth embodiment are the same as in the seventh embodiment. In the ninth embodiment, differences from the seventh embodiment will be mainly described.

In the present embodiment, the motor cut-off process will be described with reference to the flowchart of FIG. 22. In step S1202 illustrated in FIG. 22, the flight control device 40 determines whether the inverter time Tinv has reached the inverter time threshold TTinv, as in the seventh embodiment. When the inverter time Tinv has reached the inverter time threshold TTinv, the flight control device 40 proceeds to step S1205 and performs the motor cut-off execution process as in step S1203 of the seventh embodiment. The function of executing the process of step S1205 in the flight control device 40 corresponds to the motor elapsed-time cut-off unit. On the other hand, when the inverter time Tinv has not reached the inverter time threshold TTinv, the flight control device 40 terminates the present power-supply cut-off process as is, regardless of an increase or a decrease in the motor current lac.

### <Tenth Embodiment>

In the first embodiment, one propulsion device 100 includes only one inverter device 80. In contrast, in the tenth embodiment, one propulsion device 100 includes a plurality of inverter devices 80. Configurations, operations, and effects not specifically described in the tenth embodiment are the same as in the first embodiment. In the tenth embodiment, differences from the first embodiment will be mainly described.

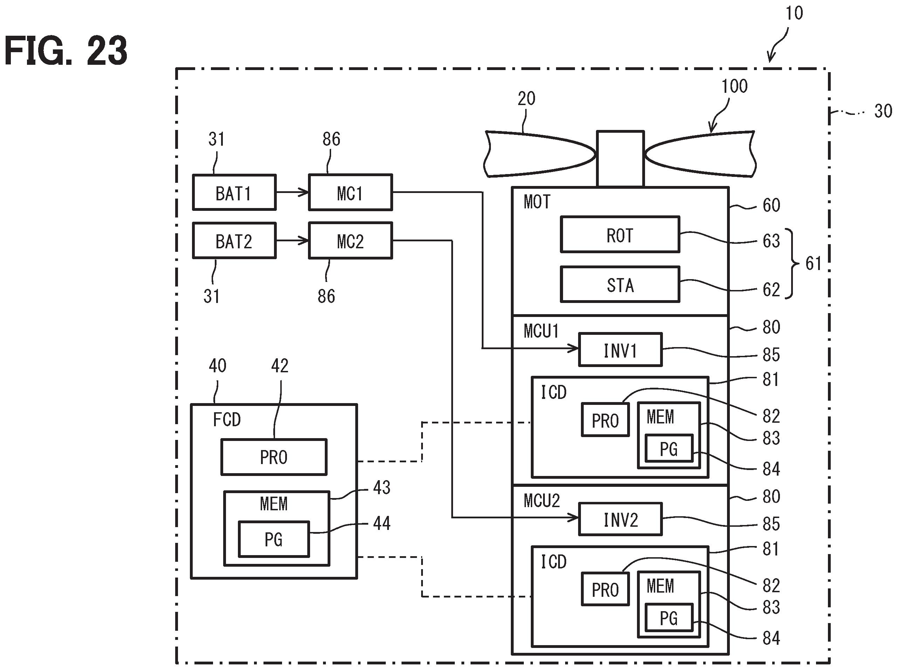

As illustrated in FIG. 23, one propulsion device 100 includes one motor device 60 and a plurality of inverter devices 80. In the propulsion device 100, each of the plurality of inverter devices 80 controls the motor 61. In the plurality of inverter devices 80, the respective inverter circuits 85 supply power to the motor stator 62. In the plurality of inverter devices 80, the respective inverter control units 81 perform motor control.

For example, one propulsion device 100 includes m inverter devices 80 and an mxn-phase motor 61. m and n are natural numbers. In the propulsion device 100, each of the m inverter devices 80 drives the n-phase motor 61. For example, the stator coil 62a is an m×n-phase coil. Each of the m inverter devices 80 supplies power to the n-phase stator coil 62a.

In the propulsion system 30, a plurality of batteries 31 are provided for one propulsion device 100. In one propulsion device 100, a plurality of inverter devices 80 are connected to separate batteries 31 so as to allow energization. For example, the propulsion system 30 includes two batteries 31. In one propulsion device 100, each of the plurality of inverter devices 80 is individually provided with a power-supply switch 86.

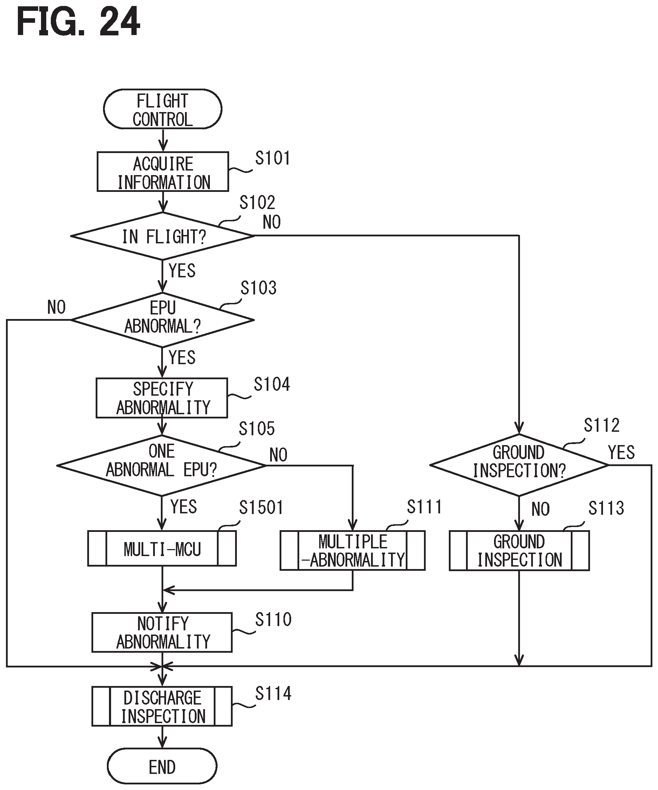

In the present embodiment, the flight control process will be described with reference to the flowchart of FIG. 24. In steps S101 to S105 and S110 to S112 illustrated in FIG. 24, the flight control device 40 performs the same processes as in the first embodiment. In step S105, when the number of abnormal EPUs is one, the flight control device 40 proceeds to step S1501 and performs a multi-inverter process. In the multi-inverter process, the driving of at least one inverter device 80 is stopped in the abnormal EPU.

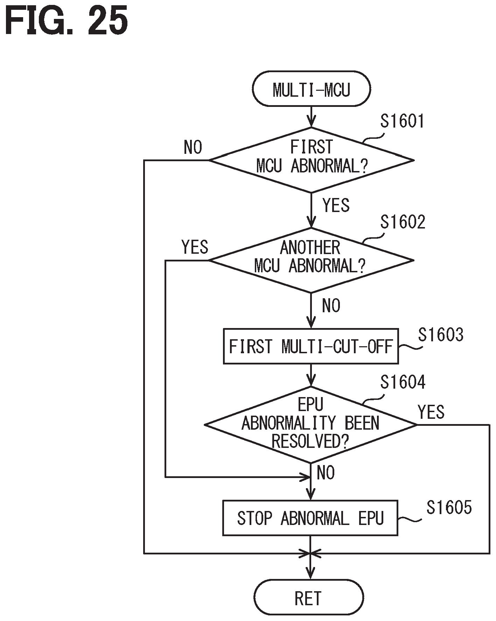

The multi-inverter process will be described with reference to the flowchart of FIG. 25. In step S1601 of the multi-inverter process, the flight control device 40 determines whether an abnormality has occurred in the first inverter device of the abnormal EPU. The flight control device 40 sets any one of the plurality of inverter devices 80 in the abnormal EPU as the first inverter device. The flight control device 40 determines whether an abnormality has occurred in the first inverter device by, for example, determining whether the sensor value is an abnormal value for the first inverter device.

For example, the flight control device 40 sets the inverter device 80 having the highest possibility of occurrence of an abnormality as the first inverter device among the plurality of inverter devices 80 in the abnormal EPU. The flight control device 40 acquires a sensor value for each of the plurality of inverter devices 80 in the abnormal EPU, and estimates the possibility of abnormality occurrence for each of the plurality of inverter devices 80 using these sensor values.

When an abnormality occurs in the first inverter device, the flight control device 40 proceeds to step S1602. In step S1602, the flight control device 40 determines whether an abnormality has occurred in all the other inverter devices. The flight control device 40 sets all the inverter devices 80 different from the first inverter device among the plurality of inverter devices 80 in the abnormal EPU as the other inverter devices. The other inverter devices are one or more inverter devices 80. The flight control device 40 determines whether an abnormality has occurred in the other inverter device by determining whether the sensor value of the other inverter device is abnormal.

When no abnormality has occurred in the other inverter device, the flight control device 40 proceeds to step S1603. In step S1603, the flight control device 40 performs the multi-cut-off process on the first inverter device. In this multi-cut-off process, the same processes as in steps S106 to S109 of the first embodiment are performed on the first inverter device. That is, in this multi-cut-off process, the driving of the first inverter device is stopped. The function of executing the process of step S1603 in the flight control device 40 corresponds to the abnormality cut-off unit.

In step S1604, the flight control device 40 determines whether the EPU abnormality that has occurred in the abnormal EPU has been resolved. The flight control device 40 determines whether the EPU abnormality has been resolved using the sensor value or the like for the abnormal EPU in a state where the driving of the first inverter device is stopped. When the EPU abnormality in the abnormal EPU has been resolved, the flight control device 40 terminates the present multi-inverter process as is. In this case, the driving of the abnormal EPU is continued by continuing the driving of the other inverter device.

When the EPU abnormality that has occurred in the abnormal EPU is not resolved, the flight control device 40 proceeds to step S1605. In step S1605, the flight control device 40 performs an abnormal EPU stop process. In the abnormal EPU stop process, a process for stopping the abnormal EPU is performed. For example, the flight control device 40 performs the multi-cut-off process on all the other inverter devices. In this multi-cut-off process, the same processes as in steps S106 to S109 of the first embodiment are performed on all the other inverter devices. That is, in this multi-cut-off process, the driving of all the other inverter devices is stopped.

In step S1602, when an abnormality occurs in the other inverter device, the flight control device 40 proceeds to step S1605 and performs the abnormal EPU stop process. In this case, the flight control device 40 determines that an abnormality has occurred in each of the first inverter device and the other inverter device, and stops the driving of the abnormal EPU. For example, when an abnormality occurs in at least one of the other inverter devices, the flight control device 40 stops driving the abnormal EPU.

When no abnormality has occurred in at least one of the other inverter devices in step S1602, the flight control device 40 may continue the driving of the abnormal EPU by continuing the driving of the other inverter device in which no abnormality has occurred. In this case, the flight control device 40 stops the driving of the other inverter device in which an abnormality has occurred to resolve the EPU abnormality in the abnormal EPU, and then continues the driving of the abnormal EPU.

In addition, the flight control device 40 repeatedly performs the multi-inverter process so that all the inverter devices 80 are sequentially set as the first inverter devices. For example, the flight control device 40 sets the inverter device 80, which is to be set first, as the first inverter device in step S1601 in the current multi-inverter process. The flight control device 40 sequentially sets the inverter devices 80, which are to be set second and thereafter, as the first inverter device in step S1601 in the next and subsequent multi-inverter processes.

Returning to FIG. 24, after step S1501, the flight control device 40 proceeds to step S110 and performs the abnormality notification process. In this abnormality notification process, notification is made, as the EPU abnormality, that an abnormality has occurred in the first inverter device, that the driving of the abnormal EPU has been stopped, or the like. When there are a plurality of abnormal EPUs, the flight control device 40 may perform the multi-inverter process on the first abnormal EPU in step S111.

In the present embodiment, the number of inverter devices 80 to be stopped in driving in the abnormal EPU is set in accordance with the state of the EPU abnormality. In this configuration, in the abnormal EPU, stopping of driving of all the inverter devices 80 and stopping of driving of the specific inverter device 80 are selected according to the state of an abnormality related to the motor 61. That is, stopping of the abnormal EPU and continuation of driving of the abnormal EPU are selected. This makes it possible to suppress a situation in which the driving of all the inverter devices 80 is stopped and the output of the abnormal EPU is completely lost even though the normal inverter device 80 exists in the abnormal EPU. When the normal inverter device 80 does not exist in the abnormal EPU, the driving of all the inverter devices 80 is stopped, so that it is possible to preferentially prevent the spread and progression of the abnormality in the abnormal EPU. As described above, since the inverter device 80 to be stopped in driving is selected according to the state of an abnormality, it is possible to suppress insufficiency of the output of the EPU 50 while ensuring the safety of the eVTOL 10.

In the present embodiment, in the abnormal EPU, when the EPU abnormality is not resolved even after the driving of the first inverter device is stopped, the driving of the abnormal EPU is stopped. In this configuration, since the driving of the other inverter device is continued, it is possible to suppress the spread and progression of the abnormality in the abnormal EPU. Further, in this configuration, it is possible to suppress the spread of the EPU abnormality in the abnormal EPU to other EPUs 50.

The seventh embodiment is preferably applied to the present embodiment. That is, in the present embodiment, the motor switch 87 is preferably provided on the motor path 132. In the present embodiment, when the EPU abnormality is resolved in association with stopping of driving of the first inverter device, the other inverter device continues the driving of the EPU 50. In this case, since the motor 61 is driven by the other inverter device, regenerative power generated in association with the rotation of the motor rotor 63 is supplied to the first inverter device. In the first inverter device, there is a concern that an abnormality spreads or progresses due to, for example, a regenerative current flowing through the arm switches 116, 117 or the smoothing capacitor 114.

In contrast, by applying the configuration of the seventh embodiment to the present embodiment, the motor path 132 is cut off by the motor switch 87 in the first inverter device. In this configuration, the supply of regenerative power from the motor 61 to the first inverter device is cut off by the motor switch 87. Thus, in the first inverter device, it is possible to suppress the promotion of propagation or progression of the abnormality due to the regenerative current.

### <Eleventh Embodiment>

In the first embodiment, the inverter cut-off process is performed in the multi-cut-off process. In contrast, in the eleventh embodiment, one of the multi-cut-off process and the inverter cut-off process is performed. Configurations, operations, and effects not specifically described in the eleventh embodiment are the same as in the first embodiment. In the eleventh embodiment, differences from the first embodiment will be mainly described.

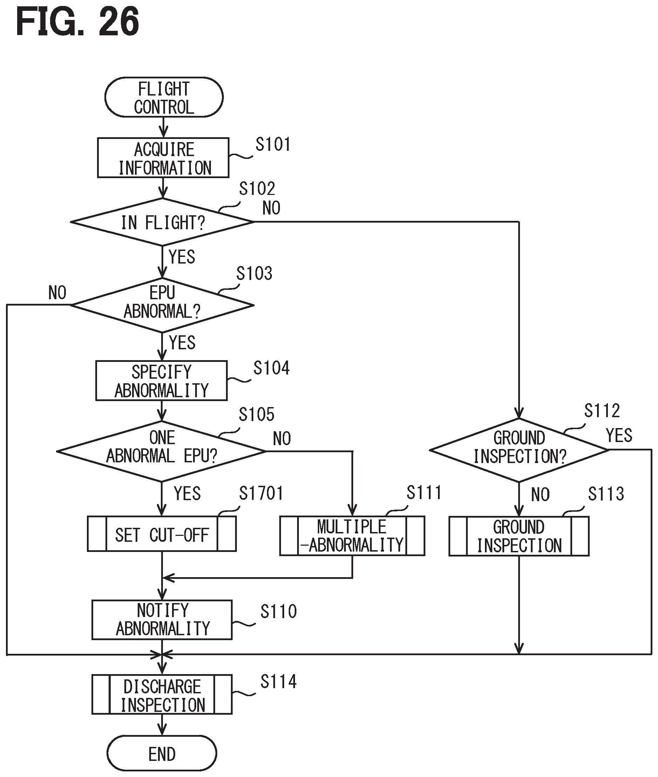

In the present embodiment, the flight control process will be described with reference to the flowchart of FIG. 26. In steps S101 to S105 and S110 to S112 illustrated in FIG. 26, the flight control device 40 performs the same processes as in the first embodiment. In step S105, when the number of abnormal EPUs is one, the flight control device 40 proceeds to step S1701 and performs a cut-off setting process. In the cut-off setting process, the supply path 130 is cut off by at least one of the arm switches 116, 117 and the power-supply switch 86 in a mode corresponding to the state of the EPU abnormality. The function of executing the process of step S1701 in the flight control device 40 corresponds to the abnormality cut-off unit.

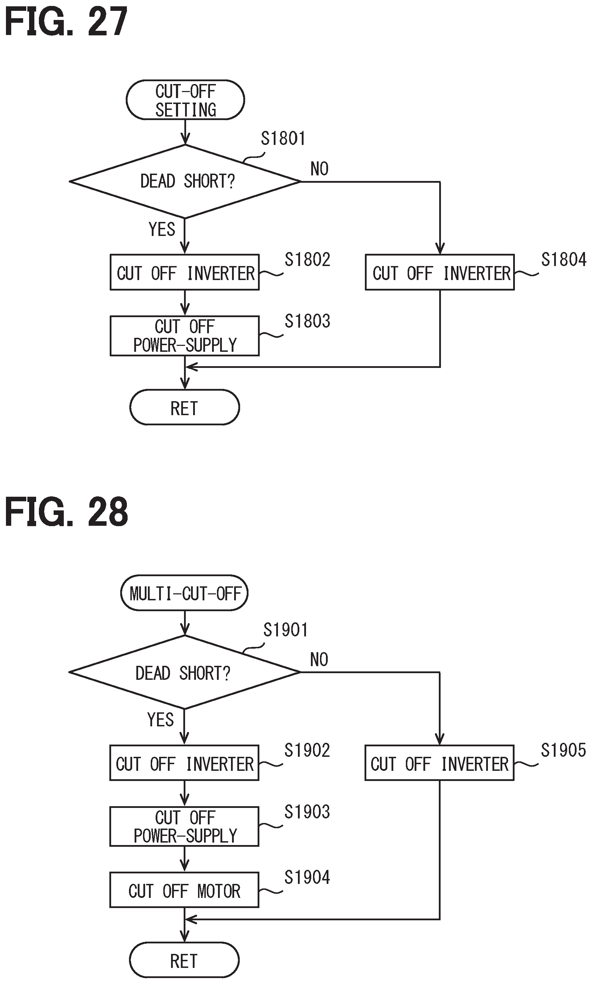

The cut-off setting process will be described with reference to the flowchart of FIG. 27. In step S1801 illustrated in FIG. 27, the flight control device 40 determines whether a dead short has occurred as an abnormality related to the motor 61. The flight control device 40 determines whether to perform the multi-cut-off process or the inverter cut-off process by determining whether a dead short has occurred. The flight control device 40 selects one of the multi-cut-off process and the inverter cut-off process in accordance with the state of the abnormality related to the motor 61. The function of executing the process of step S1801 in the flight control device 40 corresponds to a cut-off selection unit.

When a dead short occurs, the flight control device 40 determines that it is necessary to perform the multi-cut-off process. As the state in which the multi-cut-off process needs to be performed for the abnormality related to the motor 61, a type of a short circuit such as a dead short, a place where a short circuit has occurred in the supply path 130, or the like may be used.

When a dead short occurs, the flight control device 40 performs the multi-cut-off process in steps S1802 and S1803. The flight control device 40 performs the inverter cut-off process in step S1802, and performs the power-supply cut-off process in step S1803. That is, the flight control device 40 cuts off the supply path 130 by both the arm switches 116, 117 and the power-supply switch 86 in steps S1802 and S1803. The function of executing the processes of steps S1802 and S1803 in the flight control device 40 corresponds to a dual cut-off unit. In addition, the function of executing the process of step S1802 in the flight control device 40 corresponds to the current reduction unit. Moreover, the function of executing the process of step S1803 in the flight control device 40 corresponds to the power-supply cut-off unit.

When a dead short is not included in abnormalities related to the motor 61, the flight control device 40 performs the inverter cut-off process in step S1804. In this case, the flight control device 40 does not perform the power-supply cut-off process. The flight control device 40 cuts off the supply path 130 only by the arm switches 116, 117 among the arm switches 116, 117 and the power-supply switch 86. The function of executing the process of step S1804 in the flight control device 40 corresponds to a conversion cut-off unit.

Returning to FIG. 26, after step S1701, the flight control device 40 proceeds to step S110 and performs the abnormality notification process. In this abnormality notification process, notification is made that only the multi-cut-off process has been performed or only the inverter cut-off process has been performed. When there are a plurality of abnormal EPUs, the flight control device 40 may perform the cut-off setting process on the first EPU in step S111.

According to the present embodiment, the flight control device 40 selects one of the multi-cut-off process and the inverter cut-off process in accordance with the state of an abnormality related to the motor 61. In this configuration, the multi-cut-off process can be performed only when the state of an abnormality related to the motor 61 is a state requiring cut-off of the abnormal-time current by the power-supply switch 86. Thus, it is possible to suppress a case where the multi-cut-off process is not performed although it is necessary to cut off the abnormal-time current by the power-supply switch 86. This enables deterioration in the safety of the eVTOL 10 to be suppressed by the multi-cut-off process. It is also possible to suppress a case where the multi-cut-off process is performed in a situation where the cut-off of the abnormal-time current by the power-supply switch 86 is not necessarily required. This reduces the operation frequency of the power-supply switch 86, which is a mechanical switch, whereby a burden on the power-supply switch 86 can be reduced. As described above, it is possible to manage a burden on the power-supply switch 86 while improving the safety of the eVTOL 10.

### <Twelfth Embodiment>

In the eleventh embodiment, a configuration in which one of the multi-cut-off process and the inverter cut-off process is performed is applied to the first embodiment. In contrast, in the twelfth embodiment, a configuration in which one of the multi-cut-off process and the inverter cut-off process is performed is applied to the seventh embodiment. Configurations, operations, and effects not specifically described in the twelfth embodiment are the same as in the seventh embodiment. In the twelfth embodiment, differences from the seventh embodiment will be mainly described.

The flight control device 40 performs the cut-off setting process in step S1701, as in the eleventh embodiment. In the present embodiment, the cut-off setting process will be described with reference to the flowchart of FIG. 28. In step S1901 illustrated in FIG. 28, the flight control device 40 determines whether a dead short has occurred, as in step S1801 of the eleventh embodiment. The function of executing the process of step S1901 in the flight control device 40 corresponds to the cut-off selection unit.

When a dead short occurs, the flight control device 40 performs the multi-cut-off process in steps S1902 to S1904. The flight control device 40 performs the inverter cut-off process in step S1902, performs the power-supply cut-off process in step S1903, and performs the motor cut-off process in step S1904. The flight control device 40 cuts off the supply path 130 by all of the arm switches 116, 117, the power-supply switch 86, and the motor switch 87. The flight control device 40 may perform one of the power-supply cut-off process and the motor cut-off process after the other, or may perform both processes at the same time.

The function of executing the processes of steps S1902 and S1903 in the flight control device 40 corresponds to the dual cut-off unit. In addition, the function of executing the process of step S1902 in the flight control device 40 corresponds to the current reduction unit. Moreover, the function of executing the process of step S1903 in the flight control device 40 corresponds to the power-supply cut-off unit.

When a dead short is not included in abnormalities related to the motor 61, the flight control device 40 performs the inverter cut-off process in step S1905. In this case, the flight control device 40 does not perform the power-supply cut-off process and the inverter cut-off process. The flight control device 40 cuts off the supply path 130 only by the arm switches 116, 117 among the arm switches 116, 117, the power-supply switch 86, and the motor switch 87. The function of executing the process of step S1905 in the flight control device 40 corresponds to the conversion cut-off unit.

### <Thirteenth Embodiment>

In the thirteenth embodiment, when a short circuit occurs in the arm switches 116, 117 as an abnormality related to the motor 61, the power-supply switch 86 is cut off. Configurations, operations, and effects not specifically described in the thirteenth embodiment are the same as in the first embodiment. In the thirteenth embodiment, differences from the first embodiment will be mainly described.

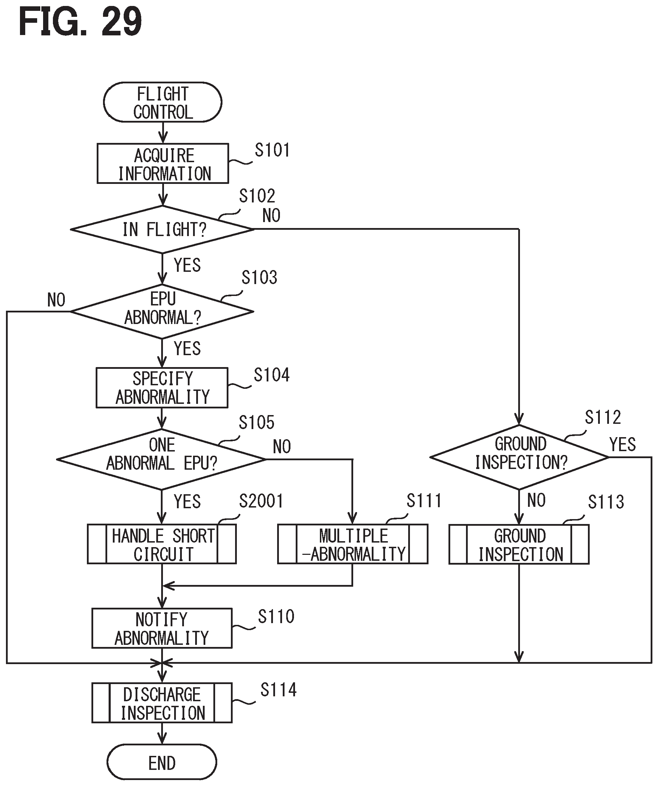

In the present embodiment, the flight control process will be described with reference to the flowchart of FIG. 29. In steps S101 to S105 and S110 to S114 illustrated in FIG. 29, the flight control device 40 performs the same processes as in the first embodiment.

When the number of abnormal EPUs is one in step S105, the flight control device 40 proceeds to step S2001 and performs a short-circuit handling process. In the short-circuit handling process, when a short circuit occurs in the arm switches 116, 117, a process is performed to suppress the occurrence of an abnormality such as a secondary failure in the inverter circuit 85 or the like due to the occurrence of the short circuit in the arm switches 116, 117.

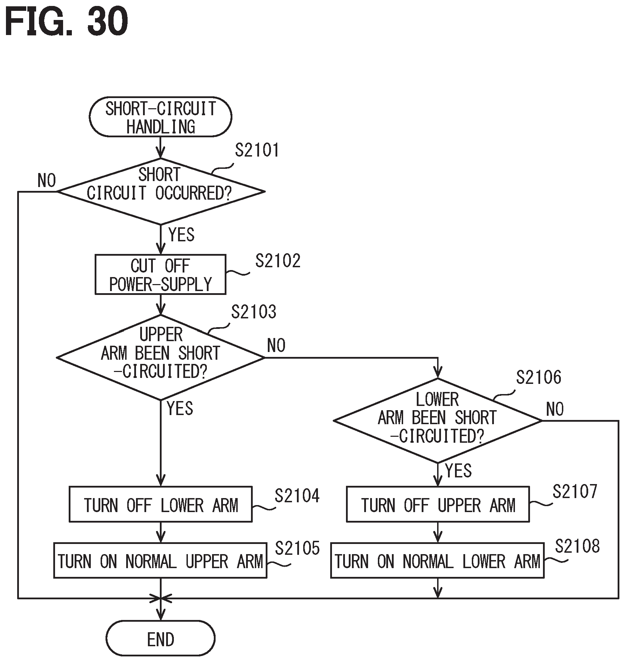

The short-circuit handling process will be described with reference to the flowchart of FIG. 30. In step S2101 of the short-circuit handling process, the flight control device 40 determines whether a short circuit has occurred in the arm switches 116, 117. For example, the flight control device 40 determines whether a short circuit has occurred in each of the plurality of arm switches 116, 117 using detection signals from various sensors such as the voltage sensors 125, 126.

The inverter device 80 includes an inter-terminal voltage sensor for detecting a voltage between the terminals of the arm switches 116, 117. For example, the inter-terminal voltage sensor is provided in each of the upper arm switch 116 and the lower arm switch 117 (not illustrated). The flight control device 40 detects the voltage between the terminals of the arm switches 116, 117 using a detection signal from the inter-terminal voltage sensor or the like. The flight control device 40 detects a short circuit in the arm switches 116, 117 using the voltage between the terminals of the arm switches 116, 117, the switch drive voltage, and the like. The voltage between the terminals is a voltage between the input terminal and the output terminal of the arm switches 116, 117. For example, in the MOSFET, the drain-source voltage is the inter-terminal voltage, and the gate voltage is the switch drive voltage.

The flight control device 40 identifies the arm switches 116, 117 in which a short circuit has occurred. For example, the flight control device 40 determines in which phase a short circuit has occurred, whether in the upper arm switch 116 or the lower arm switch 117 the short circuit has occurred, and the like. The upper arm switch 116 is provided on the high-potential side of the inverter circuit 85 by being connected to the P-line 111. The lower arm switch 117 is provided on the low-potential side of the inverter circuit 85 by being connected to the N-line 112. In each of the plurality of phases, the upper arm switch 116 and the lower arm switch 117 are connected in series.

It is assumed that, when a short circuit occurs in the arm switches 116, 117, the plurality of arm switches 116, 117 include a short-circuited switch SW1 and a normal switch SW2. The short-circuited switch SW1 is an arm switch in which a short circuit has occurred. The normal switch SW2 is an arm switch in which no short circuit has occurred.

The normal switch SW2 includes a side-by-side switch SW2a, a first series switch SW2b, and a second series switch SW2c. The side-by-side switch SW2a is provided side-by-side with the short-circuited switch SW1 in the inverter circuit 85. The side-by-side switch SW2a is an arm switch on the same potential side as the short-circuited switch SW1 among the upper arm switch 116 and the lower arm switch 117. The first series switch SW2b is an arm switch connected in series with the short-circuited switch SW1. The second series switch SW2c is an arm switch connected in series with the side-by-side switch SW2a.

The side-by-side switch SW2a and the second series switch SW2c are connected in parallel with the short-circuited switch SW1. The side-by-side switch SW2a and the second series switch SW2c are disposed in parallel with the short-circuited switch SW1 by being provided in a phase different from the short-circuited switch SW1 among the plurality of phases. The side-by-side switch SW2a and the second series switch SW2c correspond to parallel switches.

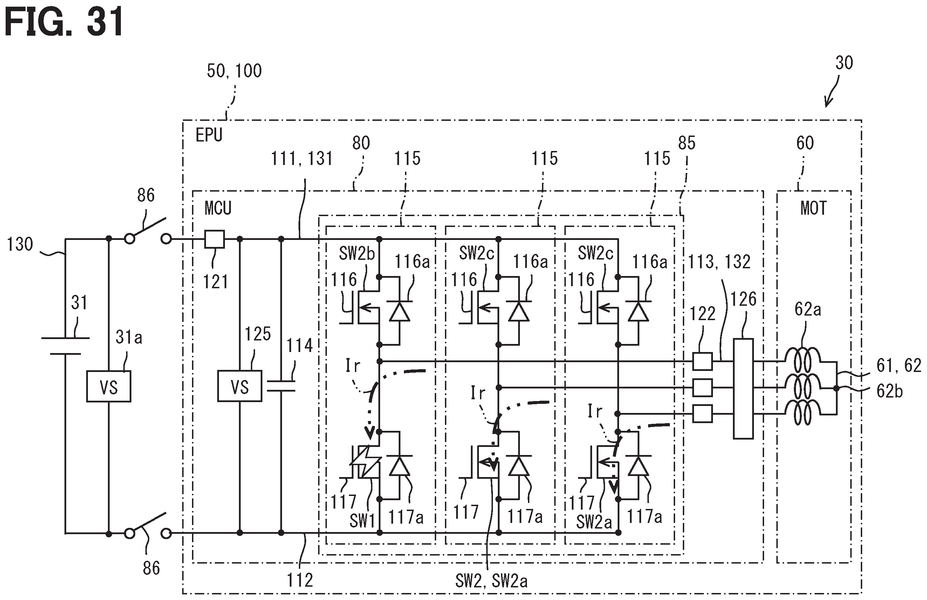

For example, as illustrated in FIG. 31, when a short circuit occurs in the U-phase lower arm switch 117, the U-phase lower arm switch 117 is the short-circuited switch SW1. In this case, the U-phase upper arm switch 116 is the first series switch SW2b. In the V phase and the W phase, the respective lower arm switches 117 are the side-by-side switches SW2a, and the respective upper arm switches 116 are the second series switches SW2c.

When a short circuit occurs in the arm switches 116, 117, the flight control device 40 proceeds to step S2102. In step S2102, the flight control device 40 performs the power-supply cut-off process as in step S108 of the first embodiment. The flight control device 40 may perform the inverter cut-off process in step S106 and may make the power-supply cut-off request determination in step S107 before performing the power-supply cut-off process, as in the first embodiment.

The flight control device 40 performs a current distribution process in steps S2103 to S2108. In the current distribution process, when a regenerative current is generated in the motor 61, the arm switches 116, 117 are controlled so that the regenerative current is distributed to and flows through the arm switches 116, 117 of each of the plurality of phases. For example, the flight control device 40 controls the normal switch SW2 so that the regenerative current is distributed to and flows through the short-circuited switch SW1 and the side-by-side switch SW2a.

In step S2103, the flight control device 40 determines whether a short circuit has occurred in the upper arm switch 116. When a short circuit occurs in the upper arm switch 116, at least one of the plurality of upper arm switches 116 is the short-circuited switch SW1. In this case, the side-by-side switch SW2a is among the plurality of upper arm switches 116. The series switches SW2b, SW2c are among the plurality of lower arm switches 117.

When a short circuit occurs in the upper arm switch 116, the flight control device 40 proceeds to step S2104. In step S2104, the flight control device 40 sets to the cut-off state the lower arm switches 117 connected in series with the short-circuited switch SW1 and the side-by-side switch SW2a among the plurality of normal switches SW2. That is, the flight control device 40 sets the series switches SW2b, SW2c included in the plurality of lower arm switches 117 to the cut-off state. For example, in the inverter circuit 85, all the lower arm switches 117 are turned off. The function of executing the process of step S2104 in the flight control device 40 corresponds to a series cut-off unit.

In step S2105, the flight control device 40 sets to the energized state the upper arm switch 116 connected in parallel with the short-circuited switch SW1 among the plurality of normal switches SW2. That is, the flight control device 40 sets the side-by-side switches SW2a included in the plurality of upper arm switches 116 to the energized state. The plurality of upper arm switches 116 include at least one side-by-side switch SW2a. For example, in the inverter circuit 85, all the upper arm switches 116 other than the short-circuited switch SW1 are turned on. The function of executing the process of step S2105 in the flight control device 40 corresponds to a parallel energization unit.

When at least one upper arm switch 116 becomes the short-circuited switch SW1, the flight control device 40 may output an ON signal for setting the short-circuited switch SW1 to the energized state in addition to the side-by-side switch SW2a. For example, the flight control device 40 may apply a switch drive voltage for turning on the short-circuited switch SW1 to the short-circuited switch SW1. In this configuration, for example, when the short-circuited state of the short-circuited switch SW1 is unintentionally resolved, the switch that has been the short-circuited switch SW1 can be set to the energized state together with the side-by-side switch SW2a. In this case, while the side-by-side switch SW2a is in the energized state, the switch that was the short-circuited switch SW1 is in the cut-off state, so that it is possible to avoid a current imbalance in the upper and lower arm circuits 115 of the plurality of phases and the like.

When no short circuit has occurred in the upper arm switch 116, the flight control device 40 proceeds to step S2106. In step S2106, the flight control device 40 determines whether a short circuit has occurred in the lower arm switch 117. When a short circuit occurs in the lower arm switch 117, at least one of the plurality of lower arm switches 117 is the short-circuited switch SW1. In this case, the side-by-side switch SW2a is among the plurality of lower arm switches 117. The series switches SW2b, SW2c are among the plurality of upper arm switches 116.

When a short circuit occurs in the lower arm switch 117, the flight control device 40 proceeds to step S2107. In step S2107, the flight control device 40 sets to the cut-off state the upper arm switches 116 connected in series with the short-circuited switch SW1 and the side-by-side switch SW2a among the plurality of normal switches SW2. That is, the flight control device 40 sets the series switches SW2b, SW2c included in the plurality of upper arm switches 116 to the cut-off state. For example, in the inverter circuit 85, all the upper arm switches 116 are turned off. The function of executing the process of step S2107 in the flight control device 40 corresponds to the series cut-off unit.

In step S2108, the flight control device 40 sets to the energized state the lower arm switch 117 connected in parallel with the short-circuited switch SW1 among the plurality of normal switches SW2. That is, the flight control device 40 sets the side-by-side switches SW2a included in the plurality of lower arm switches 117 to the energized state. The plurality of lower arm switches 117 include at least one side-by-side switch SW2a. For example, in the inverter circuit 85, all the lower arm switches 117 other than the short-circuited switch SW1 are turned on. The function of executing the process of step S2108 in the flight control device 40 corresponds to the parallel energization unit.

When at least one lower arm switch 117 becomes the short-circuited switch SW1, the flight control device 40 may output an ON signal to the short-circuited switch SW1 as in the case where at least one upper arm switch 116 becomes the short-circuited switch SW1.

For example, as illustrated in FIG. 31, when a short circuit occurs in one switch (one short-circuited switch SW1), the flight control device 40 turns on all the side-by-side switches SW2a and turns off all the series switches SW2b, SW2c. In this case, a regenerative current Ir generated by the motor 61 flows so as to be distributed to the plurality of side-by-side switches SW2a in addition to the short-circuited switch SW1. In the propulsion system 30, even when the power-supply switch 86 is turned off, the regenerative current Ir generated by the rotation of the propeller 20 may flow from the motor 61 into the short-circuited switch SW1.

For example, unlike the present embodiment, a configuration is assumed in which, when a short circuit occurs in one switch (one short-circuited switch SW1), all the side-by-side switches SW2a and all the series switches SW2b, SW2c are turned off. In this configuration, the regenerative current Ir generated by the motor 61 tends to flow to only one short-circuited switch SW1. Thus, the regenerative current Ir flowing through the short-circuited switch SW1 tends to increase. In contrast, in the present embodiment, since the regenerative current Ir is distributed to the short-circuited switch SW1 and the side-by-side switch SW2a, the regenerative current Ir flowing through the short-circuited switch SW1 is less likely to increase.

According to the present embodiment, when a short circuit occurs in a switch (short-circuited switch SW1), the flight control device 40 sets the side-by-side switch SW2a, which is at least one parallel switch, to the energized state. In this case, even when the regenerative current Ir is generated in the motor 61 in a state where the power supply from the battery 31 to the motor 61 is cut off by the power-supply switch 86, the regenerative current Ir flows so as to be distributed to the short-circuited switch SW1 and the side-by-side switch SW2a. Thus, the regenerative current Ir flowing through the short-circuited switch SW1 can be reduced. For example, the peak value of the regenerative current Ir flowing through the short-circuited switch SW1 can be reduced. This makes it possible to suppress the occurrence of an abnormality such as a secondary failure in the short-circuited switch SW1, the inverter circuit 85, and the inverter device 80 due to the large regenerative current Ir flowing through the short-circuited switch SW1. Examples of the secondary failure of the inverter circuit 85 include the normal switch SW2 and the normal diodes 116a, 117a failing due to the large regenerative current Ir passing through the short-circuited switch SW1.

According to the present embodiment, when a short circuit occurs in a switch (short-circuited switch SW1), the flight control device 40 sets to the energized state the side-by-side switch SW2a on the same potential side as the short-circuited switch SW1 among the upper arm switch 116 and the lower arm switch 117. In this case, the regenerative current Ir can flow only to one of the high-potential side, which is the upper arm switch 116 side, and the low-potential side, which is the lower arm switch 117 side. Thus, after the flow destination of the regenerative current Ir is managed, the flow of the large regenerative current Ir through the short-circuited switch SW1 can be suppressed by the side-by-side switch SW2a.

In the present embodiment, when a short circuit occurs in the arm switches 116, 117, since the short-circuited switch SW1 exists, even if all the arm switches 116, 117 other than the short-circuited switch SW1 are turned off, the current flowing through the inverter circuit 85 cannot be completely cut off. In addition, even when the power supply from the battery 31 to the motor 61 is cut off by the power-supply switch 86, the propeller 20 does not stop suddenly. Therefore, in the configuration without the motor switch 87 that cuts off the motor 61 and the inverter circuit 85 as in the present embodiment, there is a concern that electromotive force is generated as regenerative power by rotation of the propeller 20, and a large current flows through the short-circuited switch SW1, which is a short-circuited portion. Therefore, in the present embodiment, the arm switches 116, 117 different from a short-circuited abnormal portion such as the short-circuited switch SW1 are also turned on, so that it is possible to disperse the regenerative current Ir flowing through the inverter circuit 85 and to protect the short-circuited switch SW1.

According to the present embodiment, when a short circuit occurs in a switch (short-circuited switch SW1), the flight control device 40 sets to the cut-off state each of the first series switch SW2b connected in series with the short-circuited switch SW1 and the second series switch SW2c connected in series with the side-by-side switch SW2a. In this configuration, the series switches SW2b, SW2c avoid the P-line 111 and the N-line 112 being short-circuited by the arm switches 116, 117. Thus, the series switches SW2b, SW2c can suppress the occurrence of an abnormality in the inverter device 80 or the like due to a short circuit between the P-line 111 and the N-line 112.

### <Fourteenth Embodiment>

In the fourteenth embodiment, when a short circuit occurs in the arm switches 116, 117, the side-by-side switch SW2a may be turned on in accordance with the generation state of the regenerative current Ir. Configurations, operations, and effects that are not particularly described in the fourteenth embodiment are the same as in the thirteenth embodiment. In the fourteenth embodiment, differences from the thirteenth embodiment will be mainly described.

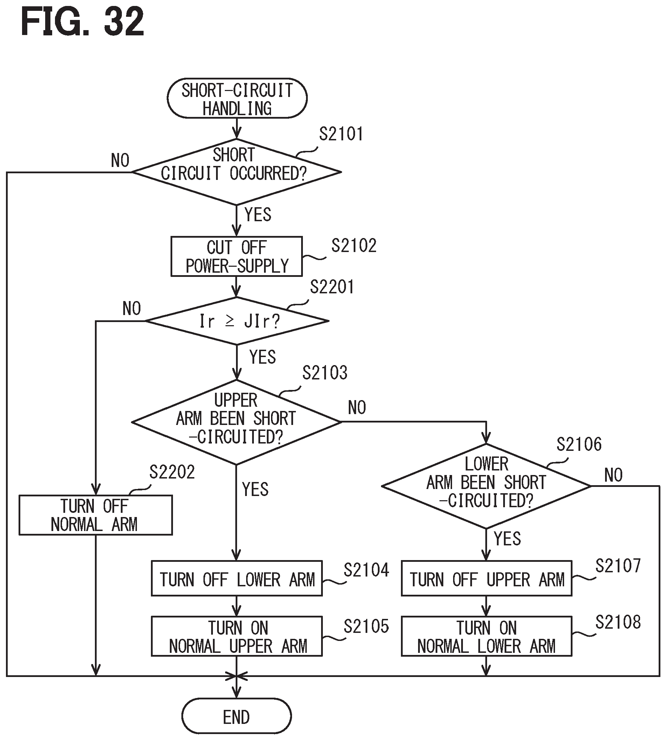

In the present embodiment, the short-circuit handling process will be described with reference to the flowchart of FIG. 32. In steps S2101 to S2108 illustrated in FIG. 32, the flight control device 40 performs the same processes as in the thirteenth embodiment.

After performing the power-supply cut-off process in step S2102, the flight control device 40 proceeds to step S2201. In step S2201, the flight control device 40 determines whether the regenerative current Ir is equal to or larger than a regenerative current threshold JIr. For example, the flight control device 40 determines whether the regenerative current Ir flowing through the short-circuited switch SW1 in a state where the regenerative current Ir is not distributed to the short-circuited switch SW1 and the side-by-side switch SW2a is equal to or larger than the regenerative current threshold JIr. The flight control device 40 calculates the regenerative current Ir flowing through the short-circuited switch SW1 using a detection signal from the motor current sensor 122 and the like. The regenerative current threshold JIr is a value determined in advance by a test or the like, and is stored in the memory 43 or the like. The regenerative current threshold JIr is set to a value small enough to make it difficult for a secondary failure of the inverter circuit 85 or the like to occur even when the regenerative current Ir flows through the short-circuited switch SW1.

When the regenerative current Ir is not equal to or larger than the regenerative current threshold JIr, the flight control device 40 proceeds to step S2202. In step S2202, the flight control device 40 sets the normal switch SW2 to the cut-off state. The flight control device 40 sets to the cut-off state each of the side-by-side switch SW2a, the first series switch SW2b, and the second series switch SW2c as the normal switch SW2. For example, in the inverter circuit 85, all the normal switches SW2 are turned off.

When the regenerative current Ir is equal to or larger than the regenerative current threshold JIr, the flight control device 40 performs the processes of steps S2103 to S2108, as in the thirteenth embodiment. That is, when the regenerative current Ir is large enough to cause an abnormality such as a secondary failure in the short-circuited switch SW1, the flight control device 40 performs a process for allowing the regenerative current Ir to flow so as to be distributed to the short-circuited switch SW1 and the side-by-side switch SW2a.

According to the present embodiment, when an abnormality occurs in the arm switches 116, 117 and the regenerative current Ir is not equal to or larger than the regenerative current threshold JIr, all the normal switches SW2 are turned off. In this configuration, even when a short circuit occurs in a switch (short-circuited switch SW1), as long as the regenerative current Ir flowing through the short-circuited switch SW1 is sufficiently small, it is possible to preferentially prevent occurrence of an abnormality in the inverter circuit 85 due to turning on the side-by-side switch SW2a.

In the present embodiment, when the regenerative current Ir is not equal to or larger than the regenerative current threshold JIr in each of the plurality of phases, the flight control device 40 may set the normal switch SW2 to the cut-off state in step S2202. In this configuration, when the regenerative current Ir is equal to or larger than the regenerative current threshold JIr in at least one phase, the flight control device 40 may perform a process for distributing the regenerative current Ir to the short-circuited switch SW1 and the side-by-side switch SW2a in steps S2103 to S2108.

Furthermore, in the present embodiment, the temperatures of the arm switches 116, 117 may be used for determining whether the regenerative current Ir is sufficiently small in step S2201. For example, the flight control device 40 calculates the temperatures of the short-circuited switch SW1, the side-by-side switch SW2a, and the second series switch SW2c using detection signals from various sensors and the like, and determines whether the regenerative current Ir is sufficiently small using the temperatures of the switches SW1, SW2a, and SW2c. Examples of the case where the regenerative current Ir is sufficiently small include a case where the temperature of the short-circuited switch SW1 is lower than a predetermined temperature, a case where the temperature of the side-by-side switch SW2a is lower than a predetermined temperature, and a case where the temperature of the second series switch SW2c is lower than a predetermined temperature. The regenerative current Ir also tends to be sufficiently small when the temperature difference between the short-circuited switch SW1 and the side-by-side switch SW2a or the second series switch SW2c is smaller than a predetermined temperature difference.

In the present embodiment, the regenerative current Ir may not be used for determining whether the regenerative current Ir is sufficiently small in step S2201. For example, the flight control device 40 may determine whether the regenerative current Ir is sufficiently small using the rotational speed of the propeller 20 or the motor 61. The flight control device 40 calculates the rotational speeds of the propeller 20 and the motor 61 using detection signals from various sensors and the like, and determines whether the rotational speeds of the propeller 20 and the motor 61 are equal to or higher than a predetermined rotational speed threshold. The flight control device 40 may turn off the normal switch SW2 when the rotational speed is not equal to or higher than the rotational speed threshold. The flight control device 40 may perform a process for distributing the regenerative current Ir to the short-circuited switch SW1 and the side-by-side switch SW2a when the rotational speed is equal to or higher than the rotational speed threshold.

### <Fifteenth Embodiment>

In the fifteenth embodiment, one motor 61 may be driven by a plurality of inverter circuits 85. Configurations, operations, and effects not specifically described in the fifteenth embodiment are the same as in the first embodiment. In the fifteenth embodiment, differences from the first embodiment will be mainly described.

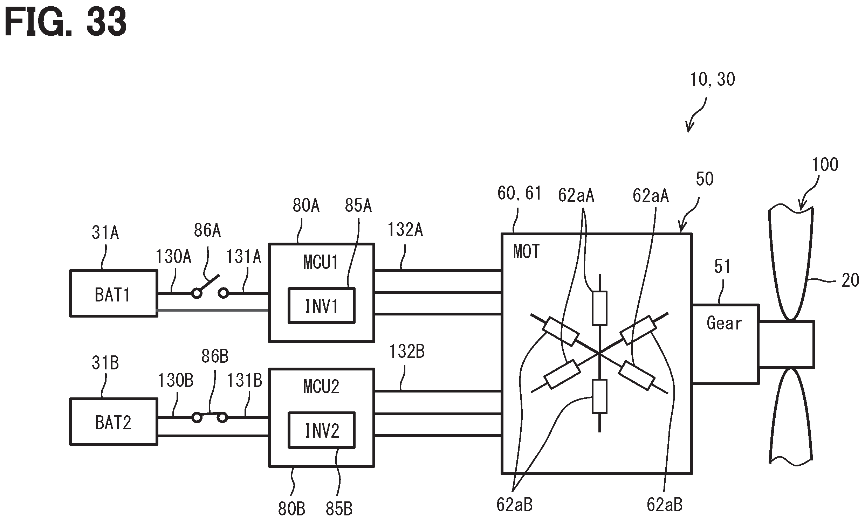

The propulsion system 30 includes a plurality of inverter devices 80, as in the tenth embodiment. For example, as illustrated in FIG. 33, the propulsion system 30 includes a first inverter device 80A and a second inverter device 80B. The propulsion system 30 includes equipment, components, and the like associated with each of the first inverter device 80A and the second inverter device 80B.

The first is added to the names of the equipment and components associated with the first inverter device 80A, and is added to the reference numerals. For example, the propulsion system 30 includes a first battery 31A, a first power-supply switch 86A, a first supply path 130A, a first power-supply path 131A, and a first motor path 132A. The first inverter device 80A includes a first inverter circuit 85A. The first inverter circuit 85A corresponds to a first power conversion unit.

The second is added to the names of the equipment and components associated with the second inverter device 80B, and is added to the reference numerals. For example, the propulsion system 30 includes a second battery 31B, a second power-supply switch 86B, a second supply path 130B, a second power-supply path 131B, and a second motor path 132B. The second inverter device 80B includes a second inverter circuit 85B. The second inverter circuit 85B corresponds to a second power conversion unit.

In FIG. 33, the first battery 31A is illustrated as BAT1, the first inverter device 80A as MCU1, and the first inverter circuit 85A as INV1. The second battery 31B is illustrated as BAT2, the second inverter device 80B as MCU2, and the second inverter circuit 85B as INV2. The gear 51 is illustrated as Gear.

The motor 61 is a six-phase motor. The motor 61 includes two three-phase stator coils 62a. The motor 61 includes a first stator coil 62aA and a second stator coil 62aB. Power is supplied from the first battery 31A to the first stator coil 62aA via the first inverter circuit 85A. The first stator coil 62aA is included in the first motor path 132A. Power is supplied from the second battery 31B to the second stator coil 62aB via the second inverter circuit 85B. The second stator coil 62aB is included in the second motor path 132B.

The first inverter circuit 85A and the second inverter circuit 85B can drive the motor 61 in states independent of each other. When both the first inverter circuit 85A and the second inverter circuit 85B are to drive the motor 61, the motor 61 is driven in six phases as a six-phase motor. When only one of the first inverter circuit 85A and the second inverter circuit 85B is to drive the motor 61, the motor 61 is driven in three phases as a three-phase motor.

The EPU 50 includes a gear 51. The gear 51 mechanically connects the motor 61 and the propeller 20. The gear 51 transmits the drive of the motor 61 to the propeller 20. The gear 51 is provided between the motor 61 and the propeller 20. The gear 51 includes a speed reducer. The gear 51 may be referred to as a gear box or a gear device.

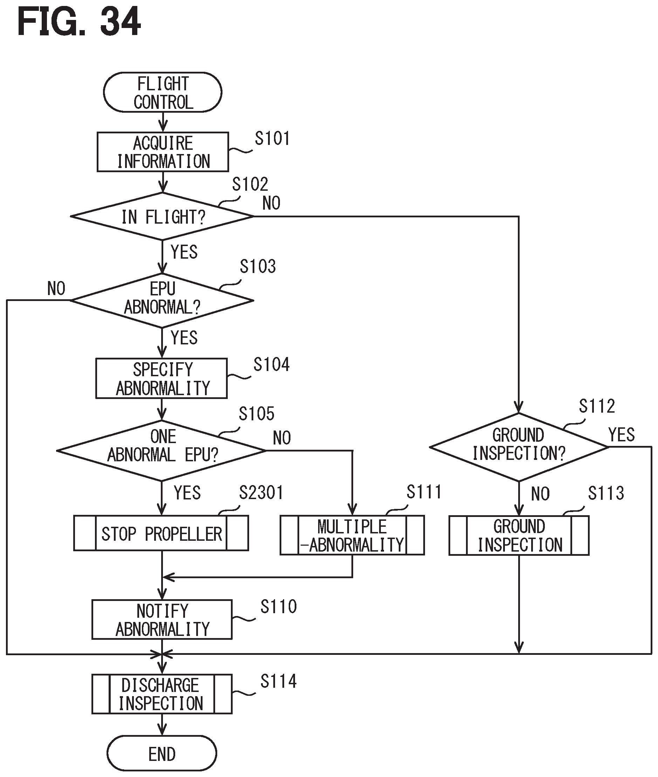

Next, the flight control process will be described with reference to the flowchart of FIG. 34. In steps S101 to S105 and S110 to S114 illustrated in FIG. 34, the flight control device 40 performs the same processes as in the first embodiment.

In step S105, when the number of abnormal EPUs is one, the flight control device 40 proceeds to step S2301 and performs a propeller stop process. In the propeller stop process, when a short circuit occurs in the arm switches 116, 117, a process for stopping the rotation of the propeller 20 by stopping the driving of the motor 61 is performed.

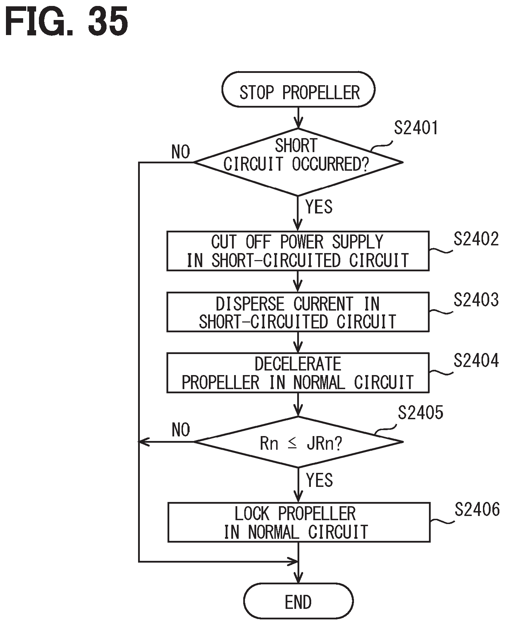

The propeller stop process will be described with reference to the flowchart of FIG. 35. In step S2401 of the propeller stop process, the flight control device 40 determines whether a short circuit has occurred in the arm switches 116, 117 of each of the first inverter circuit 85A and the second inverter circuit 85B.

The flight control device 40 determines in which of the first inverter circuit 85A and the second inverter circuit 85B a short circuit in the arm switches 116, 117 has occurred. The flight control device 40 specifies, as a short-circuited circuit IC1, the inverter circuit in which a short circuit has occurred in the arm switches 116, 117 among the first inverter circuit 85A and the second inverter circuit 85B. In other words, the flight control device 40 specifies, as a normal circuit IC2, the inverter circuit in which no short circuit has occurred in the arm switches 116, 117 among the first inverter circuit 85A and the second inverter circuit 85B. The short-circuited switch SW1 is included in the short-circuited circuit IC1 but is not included in the normal circuit IC2. The short-circuited circuit IC1 corresponds to a short-circuit conversion unit.

In step S2402, the flight control device 40 performs the power-supply cut-off process on the short-circuited circuit IC1 as in step S2102 of the thirteenth embodiment. By performing the power-supply cut-off process on the short-circuited circuit IC1, the flight control device 40 stops the driving of the motor 61 by the short-circuited circuit IC1. The flight control device 40 performs the power-supply cut-off process on the short-circuited circuit IC1, and then drives the motor 61 as a three-phase motor by the normal circuit IC2. In step S2403, the flight control device 40 performs the current distribution process on the short-circuited circuit IC1 as in steps S2103 to S2108 of the thirteenth embodiment.

In step S2404, the flight control device 40 performs a propeller deceleration process on the normal circuit IC2. In the propeller deceleration process, the normal circuit IC2 drives the motor 61 so as to decelerate the rotation of the propeller 20. The flight control device 40 controls the normal circuit IC2 so that the rotational speed of the propeller 20 gradually decreases. By decelerating the rotation of the motor 61, the flight control device 40 decelerates the rotation of the propeller 20. In the propulsion system 30, the flight control device 40 decelerates the rotation of the propeller 20, thereby restricting the rotation of the motor 61. The function of executing the process of step S2404 in the flight control device 40 corresponds to a rotation restriction unit.

In step S2405, the flight control device 40 determines whether a rotational speed Rn is equal to or lower than a rotational speed threshold JRn. The rotational speed Rn is the rotational speed of the propeller 20 or the motor 61. The flight control device 40 calculates the rotational speed Rn using detection signals from various sensors and the like. The rotational speed threshold JRn is a value determined in advance by a test or the like, and is stored in the memory 43 or the like. The rotational speed threshold JRn is a value indicating that the rotational speed Rn is sufficiently small for locking the propeller 20. When the propeller 20 is locked, the propeller 20 is held at a predetermined angle so as not to rotate.

When the rotational speed Rn is not equal to or lower than the rotational speed threshold JRn, the flight control device 40 determines not to lock the propeller 20 and terminates the propeller stop process as is. The flight control device 40 repeats the processes of steps S2401 to S2404 until the rotational speed Rn becomes equal to or lower than the rotational speed threshold JRn.

When the rotational speed Rn is equal to or lower than the rotational speed threshold JRn, the flight control device 40 proceeds to step S2406. In step S2406, the flight control device 40 performs a propeller lock process on the normal circuit IC2. In the propeller lock process, a process for locking the propeller 20 is performed. For example, the flight control device 40 drives the normal circuit IC2 so that the propeller 20 is held at a predetermined angle. The normal circuit IC2 is driven to hold the rotational speed Rn at zero. For example, the normal circuit IC2 is driven to generate a force between the motor stator 62 and the motor rotor 63 so as to hold the angle of the motor rotor 63 with respect to the motor stator 62 at a predetermined angle. The flight control device 40 locks the propeller 20 using electrical energy. In the propulsion system 30, the flight control device 40 locks the propeller 20, thereby restricting the rotation of the motor 61. The function of executing the process of step S2406 in the flight control device 40 corresponds to the rotation restriction unit.

According to the present embodiment, when a short circuit occurs in the arm switches 116, 117 in the short-circuited circuit IC1, the flight control device 40 drives the normal circuit IC2 so as to restrict the rotation of the motor 61. In this configuration, when a short circuit occurs in the arm switches 116, 117, the rotation of the motor 61 is restricted, thereby restricting the generation of the regenerative current Ir in the short-circuited circuit IC1. This makes it possible to suppress the regenerative current Ir from flowing to the short-circuited switch SW1 as a large current in the short-circuited circuit IC1. Therefore, the occurrence of an abnormality such as a secondary failure in the inverter circuit 85 or the like due to the regenerative current Ir flowing through the short-circuited switch SW1 can be suppressed by the rotation restriction of the motor 61 by the normal circuit IC2.

In the present embodiment, the flight control device 40 may lock the propeller 20 using mechanical energy. For example, the EPU 50 may include a locking member such as a pin that locks the propeller 20 using mechanical energy. The locking member is movable between an engagement position and a release position. When the locking member is at the engagement position, the locking member is caught by the motor rotor 63 or the receiving portion of the motor shaft to restrict the rotation of the motor 61. In this case, the locking member inhibits the rotation of the propeller 20. When the locking member is at the release position, the locking member releases the engagement with the receiving portion to permit the rotation of the motor 61. In this case, the locking member does not inhibit the rotation of the propeller 20.

### <Sixteenth Embodiment>

In the sixteenth embodiment, the motor switch 87 may be provided on at least one of the first motor path 132A and the second motor path 132B. Configurations, operations, and effects not specifically described in the sixteenth embodiment are the same as in the fifteenth embodiment. In the sixteenth embodiment, differences from the fifteenth embodiment will be mainly described.

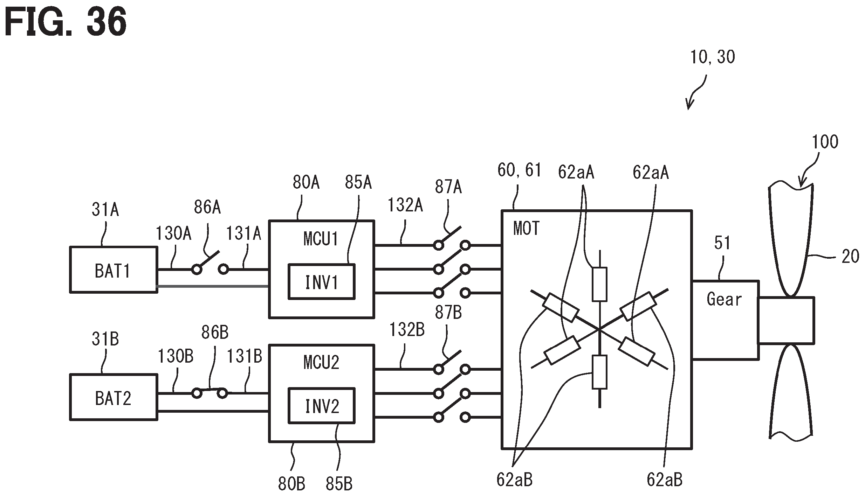

In the present embodiment, as in the seventh embodiment, the motor switch 87 is provided on the supply path 130. For example, the motor switch 87 is provided on each of the first motor path 132A and the second motor path 132B. As illustrated in FIG. 36, the propulsion system 30 includes a first motor switch 87A and a second motor switch 87B. The first motor switch 87A is a motor switch 87 provided on the first motor path 132A. The second motor switch 87B is a motor switch 87 provided on the second motor path 132B.

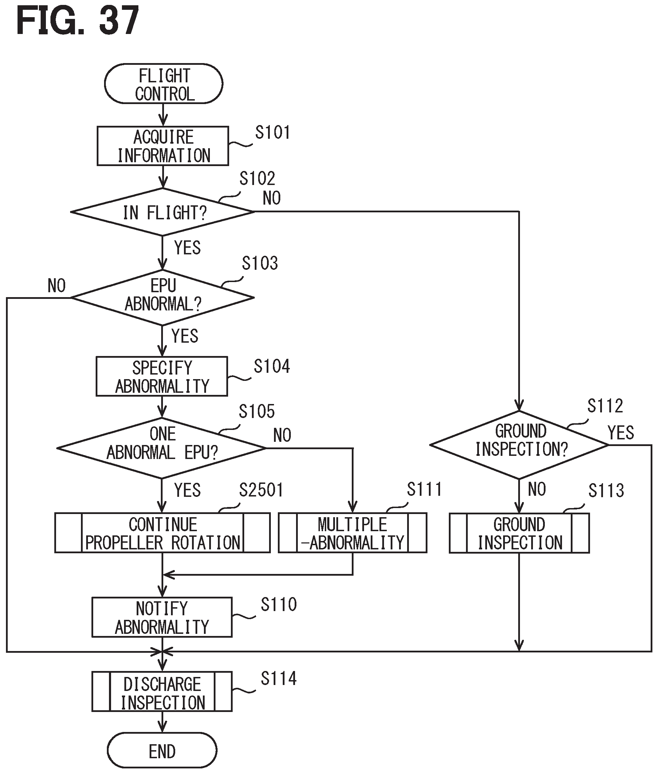

Next, the flight control process will be described with reference to the flowchart of FIG. 37. In steps S101 to S105 and S110 to S114 illustrated in FIG. 37, the flight control device 40 performs the same processes as in the first embodiment.

In step S105, when the number of abnormal EPUs is one, the flight control device 40 proceeds to step S2501 and performs a propeller rotation continuation process. In the propeller rotation continuation process, a process for continuing the rotation of the propeller 20 by the motor 61 is performed when a short circuit occurs in the arm switches 116, 117.

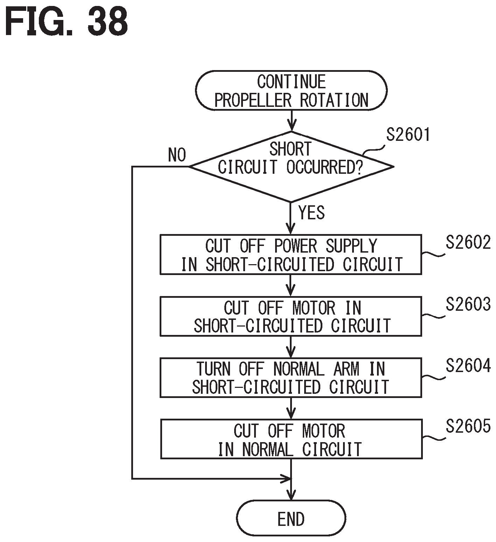

Next, the propeller rotation continuation process will be described with reference to the flowchart of FIG. 38. In step S2601 illustrated in FIG. 38, the flight control device 40 makes a short-circuit occurrence determination as in step S2401 of the fifteenth embodiment. In step S2602, the flight control device 40 performs the power-supply cut-off process on the short-circuited circuit IC1 as in step S2402 of the fifteenth embodiment. The function of executing the process of step S2602 in the flight control device 40 corresponds to a short-circuit power-supply cut-off unit.

In step S2603, the flight control device 40 performs the motor cut-off process on the short-circuited circuit IC1 as in step S1103 of the seventh embodiment. For the short-circuited circuit IC1, the flight control device 40 cuts off the supply path 130 by the power-supply switch 86 and then cuts off the supply path 130 by the motor switch 87. The function of executing the process of step S2603 in the flight control device 40 corresponds to the short-circuit motor cut-off unit.

In step S2604, for the short-circuited circuit IC1, the flight control device 40 sets the normal switch SW2 to the cut-off state. For example, the flight control device 40 performs the inverter cut-off process on the short-circuited circuit IC1 as in step S106 of the first embodiment. In step S2605, the flight control device 40 performs a motor drive process on the normal circuit IC2. In the motor drive process, a process for the normal circuit IC2 to drive the motor 61 as a three-phase motor is performed. In the propulsion system 30, the motor 61 is driven in three phases by the normal circuit IC2 in a state where the motor switch 87 electrically disconnects the short-circuited circuit IC1 from the motor 61. Thus, even when a short circuit occurs in the arm switches 116, 117, the normal circuit IC2 can continue the driving of the motor 61.

According to the present embodiment, for the short-circuited circuit IC1, the flight control device 40 cuts off the supply path 130 by the power-supply switch 86 and then cuts off the supply path 130 by the motor switch 87. For example, for the short-circuited circuit IC1, the flight control device 40 cuts off the power-supply path 131 by the power-supply switch 86 and then cuts off the motor path 132 by the motor switch 87. In this configuration, the regenerative current Ir flowing from the motor 61 to the short-circuited circuit IC1 can be reliably cut off by the motor switch 87.

### <Seventeenth Embodiment>

In the seventeenth embodiment, a plurality of motors 61 may rotate one propeller 20. Configurations, operations, and effects not specifically described in the seventeenth embodiment are the same as in the fifteenth embodiment. In the fifteenth embodiment, differences from the fifteenth embodiment will be mainly described.

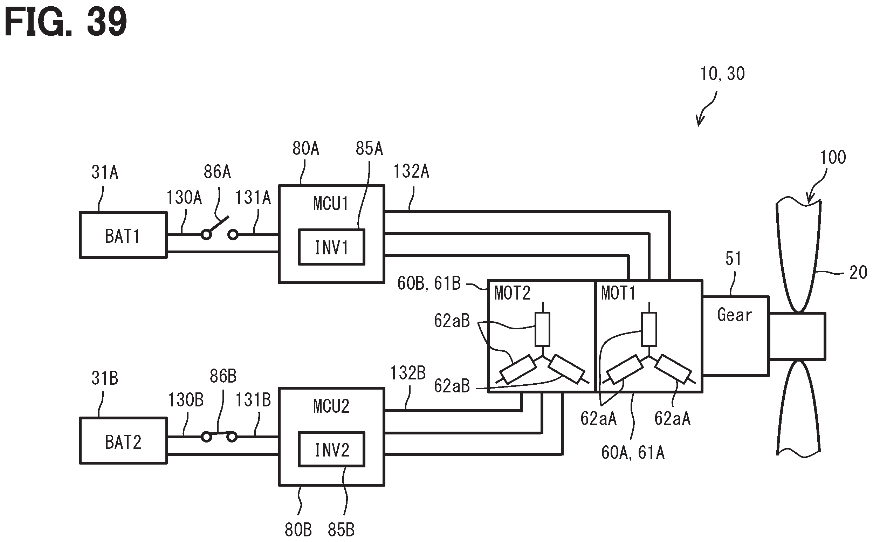

The propulsion system 30 includes a plurality of motors 61. For example, as illustrated in FIG. 39, the propulsion system 30 includes a first motor device 60A and a second motor device 60B. The first motor device 60A includes a first motor 61A as the motor 61. The first motor 61A includes the first stator coil 62aA. The first motor 61A is driven by the first inverter circuit 85A. The second motor device 60B includes a second motor 61B as the motor 61. The second motor 61B includes a second stator coil 62aB. The second motor 61B is driven by the second inverter circuit 85B. In FIG. 39, the first motor device 60A is illustrated as MOT1, and the second motor device 60B as MOT2.

Each of the first motor 61A and the second motor 61B is a three-phase motor. When both the first motor 61A and the second motor 61B are being driven, the gear 51 can rotate the propeller 20 by both the first motor 61A and the second motor 61B. In this case, the propeller 20 is rotated by two three-phase motors. When only one of the first motor 61A and the second motor 61B is being driven, the gear 51 can rotate the propeller 20 by only one of the first motor 61A and the second motor 61B. In this case, the propeller 20 is rotated by one three-phase motor.

For example, the gear 51 includes a one-way clutch and an electromagnetic clutch. The gear 51 has a drive power cut-off function of cutting off drive power transmission from the motor that is stopped among the first motor 61A and the second motor 61B to the propeller 20. In the configuration where the gear 51 does not have a drive power cut-off function, the flight control device 40 preferably performs a process for dispersing the regenerative current Ir and a process for stopping the rotation of the propeller 20, as in the fifteenth embodiment.

In the present embodiment, when a short circuit occurs in the arm switches 116, 117, the driving of the motor connected to the short-circuited circuit IC1 among the first motor 61A and the second motor 61B is stopped. In this case, the rotation of the propeller 20 is continued by continuing the driving of the motor connected to the normal circuit IC2.

The first motor device 60A and the second motor device 60B are arranged along the propeller axis. The first motor device 60A and the second motor device 60B are arranged along the propeller axis with respect to the gear 51.

The first inverter device 80A and the second inverter device 80B may be arranged along the propeller axis. The first inverter device 80A may be arranged along the propeller axis with respect to the first motor device 60A, or may be arranged in a direction orthogonal to the propeller axis with respect to the first motor device 60A. The second inverter device 80B may be arranged along the propeller axis with respect to the second motor device 60B, or may be arranged in the direction orthogonal to the propeller axis with respect to the second motor device 60B.

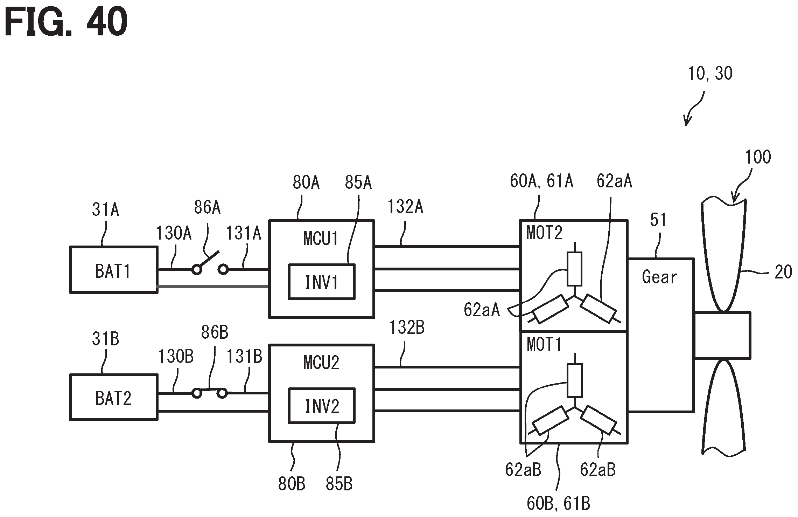

In the present embodiment, as Modification 17-1, as illustrated in FIG. 40, the first motor device 60A and the second motor device 60B may be arranged in the direction orthogonal to the propeller axis. In this configuration, the gear 51 may be provided to be stretched between the first motor device 60A and the second motor device 60B in the direction orthogonal to the propeller axis.

### <Other Embodiments>

The disclosure of the present specification is not restricted to the exemplary embodiments. The disclosure encompasses the exemplary embodiments and variations based thereon by those skilled in the art. For example, the disclosure is not limited to combination of components and elements shown in the embodiments, and various modifications can be made. The disclosure can be implemented by various combinations. The disclosure can have additional portions that can be added to the embodiments. The disclosure encompasses those in which components and elements of the embodiments are omitted. The disclosure encompasses the replacement or combination of components and elements between one embodiment and another. The technical scope disclosed is not limited to the description of the embodiments. The technical scope disclosed is indicated by the statement of the claims and is to be understood to include all changes within the meaning and scope equivalent to the statement of the claims.

In each of the above embodiments, at least one of the power-supply switch 86 and the motor switch 87 may be provided on the supply path 130. For example, in the seventh embodiment, only the motor switch 87 may be provided among the power-supply switch 86 and the motor switch 87.

In each of the above embodiments, the power-supply switch 86 may be provided collectively for the plurality of propulsion devices 100. For example, in the first embodiment, the power-supply switch 86 may be provided on the common path 35.

In each of the above embodiments, the power-supply switch 86 and the motor switch 87 may not have mechanical contacts. For example, in the first embodiment, the power-supply switch 86 may be formed of a semiconductor switch. In the seventh embodiment, the motor switch 87 may be formed of a semiconductor switch. The configuration in which the semiconductor switch is used for the power-supply switch 86 and the motor switch 87 has an advantage that the weight, welding risk, and cost can be reduced compared with the configuration in which the mechanical switch is used for the power-supply switch 86 and the motor switch 87.

In each of the above embodiments, the power-supply switch 86 and the motor switch 87 may each be formed of a switch that does not return from the cut-off state to the energized state after shifting from the energized state to the cut-off state. For example, the power-supply switch 86 and the motor switch 87 may be formed of fuses as switches. In each of the power-supply switch 86 and the motor switch 87, the fuse is blown to cut off the supply path 130 when the abnormal-time current reaches a predetermined value or becomes excessively large. When the temperature of the fuse reaches a predetermined value or becomes excessively high due to an abnormal-time current, the fuse is blown to cut off the supply path 130. In the propulsion system 30, fuses are used as the power-supply switch 86 and the motor switch 87 to reduce the weight of the propulsion device 100.

However, when the supply path 130 is cut off by the fuse, it is necessary to replace the fuse. As the fuse, a commercially available general-purpose product may be used, or a dedicated product manufactured for each of the power-supply switch 86 and the motor switch 87 may be used. The types of switches used as the power-supply switch 86 and the motor switch 87 are preferably selected according to the idea of the airframe design.

In each of the above embodiments, the power-supply switch 86 and the motor switch 87 may be switched to the cut-off state simultaneously with the timing at which the arm switches 116, 117 are switched to the reduced state. Further, the power-supply switch 86 and the motor switch 87 may be switched to the cut-off state at a timing before the arm switches 116, 117 are switched to the reduced state. Moreover, after one of the power-supply switch 86 and the motor switch 87 is switched to the cut-off state, the other may be switched to the cut-off state, or both may be simultaneously switched to the cut-off state.

In each of the above embodiments, when a short circuit occurs in the arm switches 116, 117, the flight control device 40 may set at least one of the side-by-side switch SW2a and the second series switch SW2c to the energized state as the parallel switch. For example, in the thirteenth embodiment, when a short circuit occurs in a switch (short-circuited switch SW1), the flight control device 40 may set the second series switch SW2c to the energized state and set the side-by-side switch SW2a to the cut-off state. In this case, the regenerative current Ir flows so as to be distributed to the short-circuited switch SW1 and the second series switch SW2c.

In each of the above embodiments, when a short circuit occurs in the arm switches 116, 117, the flight control device 40 may restrict the rotation of the motor 61 by the normal circuit IC2 in any manner. For example, in the fifteenth embodiment, the flight control device 40 may perform at least one of a process for decelerating the rotation of the propeller 20 and a process for locking the propeller 20, as the process to restrict the rotation of the motor 61.

In each of the above embodiments, at least a part of the programs stored in the memories 43, 83 may be rewritten via wireless communication such as OTA. The term OTA is an abbreviation for over-the-air.

In each of the above embodiments, at least one of the inverter control unit 81 and the flight control device 40 may perform the flight control process. In this configuration, at least one of the inverter control unit 81 and the flight control device 40 corresponds to a propulsion control device. For example, in a configuration where the inverter control unit 81 performs the flight control process, at least the inverter control unit 81 corresponds to a propulsion control device.

The propulsion control program may be included in at least one of the programs 44, 84. Moreover, at least one processing unit that executes the propulsion control program may include at least one of the processors 42, 82.

In each of the above embodiments, the vertical take-off and landing aircraft on which the flight control device 40 is mounted may be an electrically powered vertical take-off and landing aircraft in which at least one propeller 20 is driven by at least one EPU 50. For example, one propeller 20 may be driven by a plurality of EPUs 50, or a plurality of propellers 20 may be driven by one EPU 50.

In each of the above embodiments, the flight vehicle on which the EPU 50 is mounted may not be a vertical take-off and landing aircraft, as long as the flight vehicle is an electrically powered type. For example, the flight vehicle may be a flight vehicle capable of taking off and landing accompanied by sliding as an electric aircraft. Moreover, the flight vehicle may be a rotary-wing aircraft or a fixed-wing aircraft. The flight vehicle may be an unmanned flight vehicle on which no person is on board. The unmanned flight vehicle may include the occupant compartment 14 or may not include the occupant compartment 14. A pilot may remotely operate the flight vehicle. As long as a person can board, the eVTOL 10 may be referred to as a manned flight vehicle even when no person is on board.

In each of the above embodiments, the movable body on which the EPU 50 is mounted may not be a flight vehicle as long as the movable body is movable by the rotation of the rotating body. For example, the movable body may be a vehicle, a ship, a construction machine, or an agricultural machine. For example, when the movable body is a vehicle, a construction machine, or the like, the rotating body is a moving wheel or the like, and the output shaft portion is an axle or the like. When the movable body is a ship, the rotating body is a screw propeller for propulsion or the like, and the output shaft portion is a propeller shaft or the like.

In each of the above embodiments, the flight control device 40 and the inverter control unit 81 are provided by a control system including at least one computer. The control system includes at least one processor that is hardware. When this processor is referred to as a hardware processor, the hardware processor can be provided by the following (i), (ii), or (iii).
(i) The hardware processor may be a hardware logic circuit. In this case, the computer is provided by a digital circuit including a large number of logic units (gate circuits) that are programmed. The digital circuit may include a memory that stores at least one of a program and data. The computer may be provided by an analog circuit. The computer may be provided by a combination of a digital circuit and an analog circuit.
(ii) The hardware processor may be at least one processor core that executes a program stored in at least one memory. In this case, the computer is provided by at least one memory and at least one processor core. The processor core is referred to as a central processing unit (CPU), for example. The memory is also referred to as a storage medium. The memory is a non-transitory tangible storage medium that non-transiently stores "at least one of a program and data" readable by a processor.
(iii) The hardware processor may be a combination of (i) and (ii) described above. (i) and (ii) are arranged on different chips or on a common chip.

That is, at least one of the means and functions provided by the flight control device 40 or the inverter control unit 81 can be provided only by hardware, only by software, or a combination thereof.

### (Disclosure of technical concept)

The present specification discloses a plurality of technical concepts as set forth in a plurality of items listed below. Some of the items may be described in a multiple dependent form that alternatively refers to preceding items in a subsequent item. Moreover, some of the items may be described in a multiple dependent form that refers to items in another multinomial dependent form (a multiple dependent form referring to another multiple dependent form). The items described in the multiple dependent form define a plurality of technical concepts.

### (Technical idea 1)

A propulsion system (30) is configured to propel a flight vehicle (10). The propulsion system includes: a motor (61) configured to be driven to propel the flight vehicle by power supplied from a power supply unit (31); a power conversion unit (85) including a conversion switch (116, 117) provided on a supply path (130), which is to supply electric power from the power supply unit to the motor, the power conversion unit configured to drive the conversion switch to convert electric power supplied from the power supply unit to the motor; a power-supply switch (86) provided on the supply path between the power supply unit and the power conversion unit and configured to cut off the supply path; and an abnormality cut-off unit (S106 to S109, S402, S702, S802, S1001, S1603, S1701) configured to, when an abnormality related to the motor occurs, cause at least one of the conversion switch and the power-supply switch to cut off the supply path in a mode corresponding to a state of the abnormality.

### (Technical idea 2)

The propulsion system according to technical idea 1, in which the abnormality cut-off unit includes a current reduction unit (S106, S1102, S1107, S1802, S1902) configured to cause the conversion switch to reduce an abnormal-time current (Idc, lac), which flows through the supply path when an abnormality related to the motor occurs, and a power-supply cut-off unit (S108, S1104, S1108, S1803, S1903) configured to cause the power-supply switch to cut off the abnormal-time current after a timing at which the current reduction unit starts reducing the abnormal-time current.

### (Technical idea 3)

The propulsion system according to technical idea 2, in which the power-supply cut-off unit includes a power-supply reduction cut-off unit (S203, S205, S206) configured to cause the power-supply switch to cut off the abnormal-time current after the current reduction unit reduces the abnormal-time current.

### (Technical idea 4)

The propulsion system according to technical idea 2 or 3, in which the power-supply cut-off unit includes a power-supply elapsed-time cut-off unit (S203, S207) configured to cause the power-supply switch to cut off the abnormal-time current after a predetermined time elapses since the current reduction unit starts reducing the abnormal-time current.

### (Technical idea 5)

The propulsion system according to any one of technical ideas 1 to 4, in which the abnormality cut-off unit includes a dual cut-off unit (S1802, S1803, S1902, S1903) configured to cause both the conversion switch and the power-supply switch to cut off the supply path, a conversion cut-off unit (S1804, S1905) configured to cause only the conversion switch among the conversion switch and the power-supply switch to cut off the supply path, and a cut-off selection unit (S1901) configured to select one of the dual cut-off unit and the conversion cut-off unit in accordance with a state of the abnormality.

### (Technical idea 6)

The propulsion system according to any one of technical ideas 1 to 5, further includes: a motor switch (87) provided on the supply path between the power conversion unit and the motor and configured to cut off the supply path; and a selective cut-off unit (S1001) configured to, when an abnormality related to the motor occurs, cause at least one of the conversion switch, the power-supply switch, and the motor switch to cut off the supply path in a mode corresponding to a state of the abnormality.

### (Technical idea 7)

The propulsion system according to technical idea 6, in which the selective cut-off unit includes a selective reduction unit (S1102, S1107) configured to cause the conversion switch to reduce an abnormal-time current (Idc, lac) flowing through the supply path when an abnormality related to the motor occurs, and a motor cut-off unit (S1103, S1110) configured to cause the motor switch to cut off the abnormal-time current after a timing at which the selective reduction unit starts reducing the abnormal-time current.

### (Technical idea 8)

The propulsion system according to technical idea 7, in which the motor cut-off unit includes a motor reduction cut-off unit (S1203, S1204) configured to cause the motor switch to cut off the abnormal-time current after the selective reduction unit reduces the abnormal-time current.

### (Technical idea 9)

The propulsion system according to technical idea 7 or 8, in which the motor cut-off unit includes a motor elapsed-time cut-off unit (S1203, S1205) configured to cause the motor switch to cut off the abnormal-time current after a predetermined time has elapsed since the selective reduction unit starts reducing the abnormal-time current.

### (Technical idea 10)

The propulsion system according to any one of technical ideas 6 to 9, in which the supply path includes a power-supply path (131) provided with the power-supply switch and configured to supply electric power from the power supply unit to the power conversion unit, and a motor path (132) provided with the motor switch and configured to supply electric power from the power conversion unit to the motor. The selective cut-off unit includes a subsequent power-supply cut-off unit (S1102 to S1105) configured to, when an abnormality related to the power-supply path occurs as an abnormality related to the motor, cause the power-supply switch to cut off the power-supply path, after causing the motor switch to cut off the motor path.

### (Technical idea 11)

The propulsion system according to any one of technical ideas 6 to 10, in which the supply path includes a power-supply path (131) provided with the power-supply switch and configured to supply electric power from the power supply unit to the power conversion unit, and a motor path (132) provided with the motor switch and configured to supply electric power from the power conversion unit to the motor. The selective cut-off unit includes a subsequent motor cut-off unit (S1107 to S1110) configured to, when an abnormality related to the motor path occurs as an abnormality related to the motor, cause the motor switch to cut off the motor path, after causing the power-supply switch to cut off the power-supply path.

### (Technical idea 12)

The propulsion system according to any one of technical ideas 1 to 11, further includes a switch inspection unit (S113, S114, S1002, S1003) configured to confirm that the conversion switch and the power-supply switch normally operate.

### (Technical idea 13)

The propulsion system according to any one of technical ideas 1 to 12, further includes: a parallel energization unit (S2105, S2108) configured to, when short circuit occurs in the conversion switch as an abnormality related to the motor, set to an energized state at least one of parallel switches (SW2a, SW2c), which is connected in parallel with a short-circuited switch (SW1), in which the short circuit occurs, among a plurality of conversion switches.

### (Technical idea 14)

The propulsion system according to technical idea 13, in which the plurality of conversion switches include an upper arm switch (116) on a high-potential side and a lower arm switch (117) on a low-potential side, which is connected in series with the upper arm switch, and when the short-circuited switch is one of the upper arm switch and the lower arm switch, the parallel energization unit is configured to set to the energized state, as one of the parallel switches, a side-by-side switch (SW2a), which is on a same potential side as the short-circuited switch among the upper arm switch and the lower arm switch.

### (Technical idea 15)

The propulsion system according to technical idea 14, further includes a series cut-off unit (S2104, S2107) configured to, when the parallel energization unit sets the side-by-side switch to the energized state, set to a cut-off state a first series switch (SW2b), which is connected in series with the short-circuited switch, and a second series switch (SW2c), which is one of the parallel switches connected in series with the side-by-side switch, among the plurality of conversion switches.

### (Technical idea 16)

The propulsion system according to any one of technical ideas 1 to 15, further includes: a first power conversion unit (85A) that is the power conversion unit; a second power conversion unit (85B) that is the power conversion unit, is connected in parallel with the first power conversion unit, and is capable of driving the motor in a state independent of the first power conversion unit; and a rotation restriction unit (S2404, S2406) configured to, when an abnormality occurs in the conversion switch included in one of the first power conversion unit and the second power conversion unit as an abnormality related to the motor, drive an other of the first power conversion unit and the second power conversion unit to restrict rotation of the motor.

### (Technical idea 17)

The propulsion system according to any one of technical ideas 1 to 16, further includes: a motor switch (87) provided on the supply path between the power conversion unit and the motor and configured to cut off the supply path; a first power conversion unit (85A) that is the power conversion unit; a second power conversion unit (85B) that is the power conversion unit, is connected in parallel with the first power conversion unit, and is capable of driving the motor in a state independent of the first power conversion unit; a short-circuit power-supply cut-off unit (S2602) configured to, when short circuit occurs in the conversion switch included in one of the first power supply unit and the second power conversion unit as an abnormality related to the motor, cause the power-supply switch, which is provided between the power supply unit and a short-circuit conversion unit (IC1), in which the short circuit occurs, among the first power conversion unit and the second power conversion unit, to cut off the supply path; and a short-circuit motor cut-off unit (S2603) configured to cause the motor switch, which is provided between the short-circuit conversion unit and the motor, to cut off the supply path, after the short-circuit power-supply cut-off unit causes the power-supply switch to cut off the supply path.

### (Technical idea 18)

A propulsion system (30) configured to propel a flight vehicle (10), the propulsion system includes: a motor (61) configured to be driven to propel the flight vehicle by power supplied from a power supply unit (31); a power conversion unit (85) including a conversion switch (116, 117) provided on a supply path (130), which is to supply electric power from the power supply unit to the motor, the power conversion unit configured to drive the conversion switch to convert electric power supplied from the power supply unit to the motor; and a power-supply switch (86) provided on the supply path between the power supply unit and the power conversion unit and configured to cut off the supply path.

### (Technical idea 19)

The propulsion system according to technical idea 18, further includes: a motor switch (87) provided on the supply path between the power conversion unit and the motor and configured to cut off the supply path.

### (Technical idea 20)

A propulsion control apparatus (40) is configured to control a propulsion system (30). The propulsion system includes a motor (61) configured to be driven to propel a flight vehicle (10) by power supplied from a power supply unit (31), a power conversion unit (85) including a conversion switch (116, 117) provided on a supply path (130), which is to supply electric power from the power supply unit to the motor, the power conversion unit configured to drive the conversion switch to convert electric power supplied from the power supply unit to the motor, and a power-supply switch (86) provided on the supply path between the power supply unit and the power conversion unit and configured to cut off the supply path. The propulsion control apparatus includes: an abnormality determination unit (S103) configured to determine whether an abnormality related to the motor occurs; and an abnormality cut-off unit (S106 to S109, S402, S702, S802, S1001, S1603, S1701) configured to, when an abnormality related to the motor occurs, cause at least one of the conversion switch and the power-supply switch to cut off the supply path in a mode corresponding to a state of the abnormality.

### (Technical idea 21)

A propulsion control program (44) for causing at least one processor (42) to execute control of a propulsion system (30), the propulsion system including a motor (61) configured to be driven to propel a flight vehicle (10) by power supplied from a power supply unit (31), a power conversion unit (85) including a conversion switch (116, 117) provided on a supply path (130), which is to supply electric power from the power supply unit to the motor, the power conversion unit configured to drive the conversion switch to convert electric power supplied from the power supply unit to the motor, and a power-supply switch (86) provided on the supply path between the power supply unit and the power conversion unit and configured to cut off the supply path, the propulsion control program is configured to cause the at least one processor to execute: a process (S103) to determine whether an abnormality related to the motor occurs; and a process (S106 to S109, S402, S702, S802, S1001, S1603, S1701) to, when an abnormality related to the motor occurs, cause at least one of the conversion switch and the power-supply switch to cut off the supply path in a mode corresponding to a state of the abnormality.

## Claims

1. A propulsion system (30) configured to propel a flight vehicle (10), the propulsion system comprising:
a motor (61) configured to be driven to propel the flight vehicle by power supplied from a power supply unit (31);
a power conversion unit (85) including a conversion switch (116, 117) provided on a supply path (130), which is to supply electric power from the power supply unit to the motor, the power conversion unit configured to drive the conversion switch to convert electric power supplied from the power supply unit to the motor;
a power-supply switch (86) provided on the supply path between the power supply unit and the power conversion unit and configured to cut off the supply path; and
an abnormality cut-off unit (S106 to S109, S402, S702, S802, S1001, S1603, S1701) configured to, when an abnormality related to the motor occurs, cause at least one of the conversion switch and the power-supply switch to cut off the supply path in a mode corresponding to a state of the abnormality.

2. The propulsion system according to claim 1, wherein
the abnormality cut-off unit includes
a current reduction unit (S106, S1102, S1107, S1802, S1902) configured to cause the conversion switch to reduce an abnormal-time current (Idc, lac), which flows through the supply path when an abnormality related to the motor occurs, and
a power-supply cut-off unit (S108, S1104, S1108, S1803, S1903) configured to cause the power-supply switch to cut off the abnormal-time current after a timing at which the current reduction unit starts reducing the abnormal-time current.

3. The propulsion system according to claim 2, wherein
the power-supply cut-off unit includes a power-supply reduction cut-off unit (S203, S205, S206) configured to cause the power-supply switch to cut off the abnormal-time current after the current reduction unit reduces the abnormal-time current.

4. The propulsion system according to claim 2, wherein
the power-supply cut-off unit includes a power-supply elapsed-time cut-off unit (S203, S207) configured to cause the power-supply switch to cut off the abnormal-time current after a predetermined time elapses since the current reduction unit starts reducing the abnormal-time current.

5. The propulsion system according to any one of claims 1 to 4, wherein
the abnormality cut-off unit includes
a dual cut-off unit (S1802, S1803, S1902, S1903) configured to cause both the conversion switch and the power-supply switch to cut off the supply path,
a conversion cut-off unit (S1804, S1905) configured to cause only the conversion switch among the conversion switch and the power-supply switch to cut off the supply path, and
a cut-off selection unit (S1901) configured to select one of the dual cut-off unit and the conversion cut-off unit in accordance with a state of the abnormality.

6. The propulsion system according to claim 1, further comprising:
a motor switch (87) provided on the supply path between the power conversion unit and the motor and configured to cut off the supply path; and
a selective cut-off unit (S1001) configured to, when an abnormality related to the motor occurs, cause at least one of the conversion switch, the power-supply switch, and the motor switch to cut off the supply path in a mode corresponding to a state of the abnormality.

7. The propulsion system according to claim 6, wherein
the selective cut-off unit includes
a selective reduction unit (S1102, S1107) configured to cause the conversion switch to reduce an abnormal-time current (Idc, lac), which flows through the supply path when an abnormality related to the motor occurs, and
a motor cut-off unit (S1103, S1110) configured to cause the motor switch to cut off the abnormal-time current after a timing at which the selective reduction unit starts reducing the abnormal-time current.

8. The propulsion system according to claim 7, wherein
the motor cut-off unit includes a motor reduction cut-off unit (S1203, S1204) configured to cause the motor switch to cut off the abnormal-time current after the selective reduction unit reduces the abnormal-time current.

9. The propulsion system according to claim 7, wherein
the motor cut-off unit includes a motor elapsed-time cut-off unit (S1203, S1205) configured to cause the motor switch to cut off the abnormal-time current after a predetermined time elapses since the selective reduction unit starts reducing the abnormal-time current.

10. The propulsion system according to claim 6, wherein
the supply path includes
a power-supply path (131) provided with the power-supply switch and configured to supply electric power from the power supply unit to the power conversion unit, and
a motor path (132) provided with the motor switch and configured to supply electric power from the power conversion unit to the motor, and
the selective cut-off unit includes a subsequent power-supply cut-off unit (S1102 to S1105) configured to, when an abnormality related to the power-supply path occurs as an abnormality related to the motor, cause the power-supply switch to cut off the power-supply path, after causing the motor switch to cut off the motor path.

11. The propulsion system according to claim 6, wherein
the supply path includes
a power-supply path (131) provided with the power-supply switch and configured to supply electric power from the power supply unit to the power conversion unit, and
a motor path (132) provided with the motor switch and configured to supply electric power from the power conversion unit to the motor, and
the selective cut-off unit includes a subsequent motor cut-off unit (S1107 to S1110) configured to, when an abnormality related to the motor path occurs as an abnormality related to the motor, cause the motor switch to cut off the motor path, after causing the power-supply switch to cut off the power-supply path.

12. The propulsion system according to claim 1 or 6, further comprising:
a switch inspection unit (S113, S114, S1002, S1003) configured to confirm that the conversion switch and the power-supply switch normally operate.

13. The propulsion system according to any one of claims 1 to 4, further comprising:
a parallel energization unit (S2105, S2108) configured to, when short circuit occurs in the conversion switch as an abnormality related to the motor, set to an energized state at least one of parallel switches (SW2a, SW2c), which is connected in parallel with a short-circuited switch (SW1), in which the short circuit occurs, among a plurality of conversion switches.

14. The propulsion system according to claim 13, wherein
the plurality of conversion switches include an upper arm switch (116) on a high-potential side and a lower arm switch (117) on a low-potential side, which is connected in series with the upper arm switch, and
when the short-circuited switch is one of the upper arm switch and the lower arm switch, the parallel energization unit is configured to set to the energized state, as one of the parallel switches, a side-by-side switch (SW2a), which is on a same potential side as the short-circuited switch among the upper arm switch and the lower arm switch.

15. The propulsion system according to claim 14, further comprising:
a series cut-off unit (S2104, S2107) configured to, when the parallel energization unit sets the side-by-side switch to the energized state, set to a cut-off state a first series switch (SW2b), which is connected in series with the short-circuited switch, and a second series switch (SW2c), which is one of the parallel switches connected in series with the side-by-side switch, among the plurality of conversion switches.

16. The propulsion system according to any one of claims 1 to 4, further comprising:
a first power conversion unit (85A) that is the power conversion unit;
a second power conversion unit (85B) that is the power conversion unit, is connected in parallel with the first power conversion unit, and is capable of driving the motor in a state independent of the first power conversion unit; and
a rotation restriction unit (S2404, S2406) configured to, when an abnormality occurs in the conversion switch included in one of the first power conversion unit and the second power conversion unit as an abnormality related to the motor, drive an other of the first power conversion unit and the second power conversion unit to restrict rotation of the motor.

17. The propulsion system according to any one of claims 1 to 4, further comprising:
a motor switch (87) provided on the supply path between the power conversion unit and the motor and configured to cut off the supply path;
a first power conversion unit (85A) that is the power conversion unit;
a second power conversion unit (85B) that is the power conversion unit, is connected in parallel with the first power conversion unit, and is capable of driving the motor in a state independent of the first power conversion unit;
a short-circuit power-supply cut-off unit (S2602) configured to, when short circuit occurs in the conversion switch included in one of the first power supply unit and the second power conversion unit as an abnormality related to the motor, cause the power-supply switch, which is provided between the power supply unit and a short-circuit conversion unit (IC1), in which the short circuit occurs, among the first power conversion unit and the second power conversion unit, to cut off the supply path; and
a short-circuit motor cut-off unit (S2603) configured to cause the motor switch, which is provided between the short-circuit conversion unit and the motor, to cut off the supply path, after the short-circuit power-supply cut-off unit causes the power-supply switch to cut off the supply path.

18. A propulsion system (30) configured to propel a flight vehicle (10), the propulsion system comprising:
a motor (61) configured to be driven to propel the flight vehicle by power supplied from a power supply unit (31);
a power conversion unit (85) including a conversion switch (116, 117) provided on a supply path (130), which is to supply electric power from the power supply unit to the motor, the power conversion unit configured to drive the conversion switch to convert electric power supplied from the power supply unit to the motor; and
a power-supply switch (86) provided on the supply path between the power supply unit and the power conversion unit and configured to cut off the supply path.

19. The propulsion system according to claim 18, further comprising:
a motor switch (87) provided on the supply path between the power conversion unit and the motor and configured to cut off the supply path.

20. A propulsion control device (40) configured to control a propulsion system (30), the propulsion system including a motor (61) configured to be driven to propel a flight vehicle (10) by power supplied from a power supply unit (31), a power conversion unit (85) including a conversion switch (116, 117) provided on a supply path (130), which is to supply electric power from the power supply unit to the motor, the power conversion unit configured to drive the conversion switch to convert electric power supplied from the power supply unit to the motor, and a power-supply switch (86) provided on the supply path between the power supply unit and the power conversion unit and configured to cut off the supply path, the propulsion control device comprising:
an abnormality determination unit (S103) configured to determine whether an abnormality related to the motor occurs; and
an abnormality cut-off unit (S106 to S109, S402, S702, S802, S1001, S1603, S1701) configured to, when an abnormality related to the motor occurs, cause at least one of the conversion switch and the power-supply switch to cut off the supply path in a mode corresponding to a state of the abnormality.

21. A propulsion control program (44) for causing at least one processor (42) to execute control of a propulsion system (30), the propulsion system including a motor (61) configured to be driven to propel a flight vehicle (10) by power supplied from a power supply unit (31), a power conversion unit (85) including a conversion switch (116, 117) provided on a supply path (130), which is to supply electric power from the power supply unit to the motor, the power conversion unit configured to drive the conversion switch to convert electric power supplied from the power supply unit to the motor, and a power-supply switch (86) provided on the supply path between the power supply unit and the power conversion unit and configured to cut off the supply path, the propulsion control program is configured to cause the at least one processor to execute:
a process (S103) to determine whether an abnormality related to the motor occurs; and
a process (S106 to S109, S402, S702, S802, S1001, S1603, S1701) to, when an abnormality related to the motor occurs, cause at least one of the conversion switch and the power-supply switch to cut off the supply path in a mode corresponding to a state of the abnormality.
